(19) Europäisches Patentamt / European Patent Office / Office européen des brevets

(11) **EP 4 091 939 B1**

(12) **EUROPÄISCHE PATENTSCHRIFT**

(45) Veröffentlichungstag und Bekanntmachung des Hinweises auf die Patenterteilung:
**22.01.2025 Patentblatt 2025/04**

(21) Anmeldenummer: **21175290.2**

(22) Anmeldetag: **21.05.2021**

(51) Internationale Patentklassifikation (IPC):
**B64C 29/00** *(2006.01)* **B64C 39/00** *(2023.01)*
**B64C 11/00** *(2006.01)*

(52) Gemeinsame Patentklassifikation (CPC):
**B64C 29/0025; B64C 29/0033; B64U 30/20**

(54) **FLUGGERÄT**

AERIAL VEHICLE

AÉRONEF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.11.2022 Patentblatt 2022/47**

(73) Patentinhaber: **CycloTech GmbH**
**4030 Linz (AT)**

(72) Erfinder:
• **Hofreither, Klemens**
**4300 St. Valentin (AT)**

• **Kinast, Lukas**
**4040 Linz (AT)**

(74) Vertreter: **Bosch Jehle Patentanwaltsgesellschaft mbH**
**Flüggenstraße 13**
**80639 München (DE)**

(56) Entgegenhaltungen:
EP-A1- 3 354 566    US-A1- 2019 071 174
US-A1- 2020 086 984    US-B2- 10 384 776

**Beschreibung**

Die Erfindung betrifft ein Fluggerät sowie Verfahren zur Herstellung und Steuerung des Fluggeräts. Insbesondere betrifft die Erfindung ein Fluggerät, das einen stabilen Schwebeflug bei in gleicher Richtung rotierenden Antriebsvorrichtungen, insbesondere Cyclogyro-Rotoren, einnehmen kann.

Fluggeräte, die Cyclogyro-Rotoren als Antriebsvorrichtungen verwenden, werden als Cyclogyros bezeichnet. Bei Cyclogyros handelt es sich darüber hinaus, genauso wie bei Helikoptern, um sog. Senkrechtstarter (auch VTOL-Fahrzeuge genannt, von englisch "Vertical Take-Off and Landing"), also um Fluggeräte, die in der Lage sind, senkrecht ohne Start- und Landebahn zu starten und zu landen.

Ein Cyclogyro-Rotor basiert auf dem Prinzip der Schuberzeugung mit rotierenden Flügeln, die dann Rotorblätter genannt werden. Im Gegensatz zu klassischen rotierenden Flügeln, wie etwa jenen, die bei der Antriebsvorrichtung eines Helikopters zum Einsatz kommen, ist die Rotationsachse der Flügel eines Cyclogyro-Rotors parallel zur Längsachse der Flügel / Rotorblätter ausgerichtet. Die Schubrichtung des gesamten Cyclogyro-Rotors liegt normal zur Rotationsachse.

Im stationären Betrieb, wie etwa dem Schwebeflug oder dem Vorwärtsflug mit konstanter Geschwindigkeit, sollen alle Rotorblätter des Cyclogyro-Rotors idealerweise zu jedem Zeitpunkt bestmöglich zur Strömungsrichtung ausgerichtet sein, um jeweils einen maximalen Beitrag zum gesamten Schub bei minimal erforderlicher Antriebsleistung zu leisten. Die maximale Neigung der Rotorblätter gegenüber der Strömungsrichtung beeinflusst direkt den Betrag des erzeugten Schubes. Durch die Drehung des Rotors muss die Neigung jedes Rotorblatts während einer Umdrehung laufend geändert werden. Jedes Rotorblatt eines Cyclogyro-Rotors vollzieht somit eine periodische Änderung des Neigungswinkels. Diese periodische Änderung des Neigungswinkels wird als Pitch-Bewegung bezeichnet.

Zur Erzeugung der Pitch-Bewegung sind unterschiedliche Pitch-Mechanismen bekannt. Beispielsweise kann jedes Rotorblatt über ein oder mehrere Pleuel mit einer exzentrischen Lagerungsachse verbunden werden. Die sich daraus ergebende Pitch-Bewegung eines Rotorblatts wiederholt sich dabei zyklisch mit jeder Rotorumdrehung.

Diverse Ausgestaltungen von Antriebsvorrichtungen für Cyclogyros sind etwa in den europäischen Patentanmeldungen veröffentlicht unter Nr. EP 3548378 A1 und EP 3715249 A1 beschrieben.

Durch die periodische Verstellung der Rotorblätter wird ein Schubvektor normal zur Drehachse des Rotors erzeugt. Mit Hilfe einer Offset-Vorrichtung wird die periodische Rotorblattverstellung verändert, und somit kann der Schubvektor in der gesamten Ebene, welche normal zur Drehachse des Rotors steht, gedreht werden (Schubvektorsteuerung). Zusätzlich zum Schubvektor erzeugt der Rotor ein Drehmoment um die Drehachse entgegen der Drehrichtung des Rotors resultierend aus den Tangentialkomponenten der an den Rotorblättern angreifenden Luftkräften, nämlich den Auftriebs- und Luftwiderstandskräften.

Wird der Rotor von außen mit Luft angeströmt, ändern sich die aerodynamischen Eigenschaften und somit die Eigenschaften des erzeugten Schubvektors. Befindet sich der Rotor im Vorwärtsflug, wird er von vorne aktiv mit Luft angeströmt. Die veränderten Eigenschaften können näherungsweise mit dem Magnus-Effekt erklärt werden. Dieser besagt: "Ein rotierender runder Körper in einer Strömung erfährt eine Querkraft normal zur Strömungsrichtung."

Die Richtung der Querkraft ist abhängig von der Drehrichtung des Körpers bzw. hier: des Cyclogyro-Rotors.

Bei beispielsweise aus dem Artikel von I.S. Hwang et al.: "Development of a Four-Rotor Cyclocopter" aus Journal of Aircraft, Vol. 45, Nr. 6, November-Dezember 2008, Seiten 2151 ff. und dem Artikel von M. Benedict et al.: "Experimental Optimization of MAV-Scale Cycloidal Rotor Performance" aus Journal of the American Helicopter Society 56, 022005 (2011) bekannten Fluggeräten bzw. Cyclogyros drehen Rotoren jedoch in entgegengesetzter Richtung bei gleichbleibender Anströmung. In diesem Fall, d.h., wenn die Rotoren in entgegengesetzter Richtung drehen, wirken die durch den Magnus-Effekt hervorgerufenen Querkräfte der Rotoren nicht in dieselbe Richtung und können somit die gesamte Schubkraft verringern oder den Leistungsbedarf bei geforderter gleicher Auftriebskraft erhöhen. Bei höheren Vorwärtsgeschwindigkeiten und entgegengesetzter Drehrichtung ist es somit möglich, dass die negative Auswirkung des Magnus-Effekts vom Rotor nicht mehr kompensiert werden kann. Dadurch ist das Fluggerät nicht mehr flugfähig und der Rotor kann nicht als auftriebserzeugende Komponente eingesetzt werden.

US 10,384,776 B2 beschreibt ein Tiltrotor-Flugzeug mit einem Rumpf und einem Flügel mit Ober- und Unterseite mit mehreren dazwischen verlaufenden Kanälen, in denen jeweils ein Zykloid-Rotor montiert ist. Mindestens zwei Pylonbaugruppen sind drehbar mit dem Flügel verbunden, um das Tiltrotor-Flugzeug wahlweise zwischen Hubschrauber- und Flugzeugflugmodus zu betreiben.

US 2019/071174 A1 betrifft ein vertikal startendes und landendes (VTOL) Fahrzeug, das einen Rumpf, ein Seitenleitwerk, vier kippbare Flügel, einen elektrischen Generator, der flüssigen Treibstoff verwendet, wiederaufladbare elektrische Energiespeichervorrichtungen, Sensoren, die Luftströmungssensoren umfassen, und ein Betätigungs- und Rückkopplungssteuersystem umfasst. Die vier Kippflügel können unabhängig voneinander und kontrolliert um zwei Achsen parallel zur Nickachse rotieren, wobei eine dieser Achsen vor dem Schwerpunkt des Fahrzeugs und die andere dahinter liegt.

US 2020/086984 A1 beschreibt verschiedene Konfigurationen der Antriebsmechanismen eines Luftfahrzeugs. Als Reaktion auf einen Fehler oder Ausfall eines Antriebsmechanismus können beispielsweise die verbleibenden Antriebsmechanismen modifiziert werden, um die Kontrolle und Sicherheit des Luftfahrzeugs aufrechtzuerhalten.

EP 3 354 566 A1 betrifft eine Schuberzeugungseinheit zur Erzeugung von Schub in einer vorgegebenen Richtung, umfassend mindestens zwei Rotorbaugruppen und eine Ummantelung, wobei jede der mindestens zwei Rotorbaugruppen eine zugehörige Rotorebene definiert, wobei eine erste Rotorbaugruppe der mindestens zwei Rotorbaugruppen für den Betrieb in einem störungsfreien Betriebsmodus der Schuberzeugungseinheit und eine zweite Rotorbaugruppe der mindestens zwei Rotorbaugruppen zum Betrieb zumindest bei einem Ausfall der ersten Rotorbaugruppe vorgesehen ist, und wobei die Ummantelung höchstens eine der mindestens zwei Rotorbaugruppen aufnimmt.

Aufgabe der vorliegenden Erfindung ist es daher, ein Fluggerät bereitzustellen, das auch bei hohen Geschwindigkeiten im Vorwärtsflug eine stabile Fluglage einzunehmen vermag.

a

Diese Aufgabe wird durch das Fluggerät mit den Merkmalen gemäß Anspruch 1, durch das Fluggerät mit den Merkmalen gemäß Anspruch sowie die Verfahren zur Steuerung eines Fluggeräts gemäß Ansprüchen 17 bzw. 18 gelöst. Vorteilhafte Ausgestaltungen der vorliegenden Erfindung sind in den Unteransprüchen 2 bis 4, 6 bis 16 und 19 bis 22 angegeben.

Gemäß einem ersten Aspekt der Erfindung wird ein Fluggerät bereitgestellt, das folgende Komponenten umfasst: einen Fluggerätekörper, der eine Längsrichtung, eine Vertikalrichtung und eine Querrichtung definiert, wobei die Längsrichtung der Richtung vom Heck zur Nase des Fluggeräts entspricht, die Vertikalrichtung mit der Richtung der Erdanziehungskraft übereinstimmt, wenn das Fluggerät am Boden ruht, und die Querrichtung senkrecht auf der Längsrichtung und der Vertikalrichtung steht, und mindestens zwei Antriebsvorrichtungen, die um eine jeweils zugeordnete Drehachse drehbar sind, um einen jeweils zugehörigen Schubvektor zu erzeugen. Dabei ist eine erste Anzahl von Antriebsvorrichtungen entlang einer ersten Geraden, die parallel zur Querrichtung verläuft, angeordnet, und eine zweite Anzahl der Antriebsvorrichtungen ist entlang einer zweiten Geraden, die parallel zur Querrichtung verläuft, angeordnet. Die erste Gerade ist von der zweiten Geraden beabstandet, und der Massenschwerpunkt des Fluggeräts ist bezüglich der Längsrichtung zwischen der ersten Geraden und der zweiten Geraden positioniert. Das Fluggerät ist dabei dazu ausgelegt, einen Schwebeflug durchzuführen, bei dem sämtliche auf das Fluggerät wirkenden Kräfte und sämtliche bezüglich des Massenschwerpunkts des Fluggeräts am Fluggerät angreifenden Drehmomente im Wesentlichen verschwinden, dadurch, dass im Schwebeflug jede der zugeordneten Drehachsen im Wesentlichen in Querrichtung des Fluggerätekörpers ausgerichtet ist, und jede der mindestens zwei Antriebsvorrichtungen im Wesentlichen in dieselbe Drehrichtung um die jeweils zugeordnete Drehachse dreht.

Erfindungsgemäß ist eine Drehachse im Wesentlichen in Querrichtung des Fluggerätekörpers ausgerichtet, wenn der Winkel, der zwischen der Drehachse, und einer Achse, die in Querrichtung verläuft und die Drehachse schneidet, eingeschlossen ist, geringer als 45°, bevorzugt geringer als 30°, besonders bevorzugt geringer als 15°, ist.

Im Sinne der Erfindung ist es somit nicht erforderlich, dass sämtliche Drehachsen im Schwebeflug mathematisch exakt parallel ausgerichtet sind. Es kann sogar zweckmäßig sein, wenn der Winkel zwischen einer Drehachse und einer Achse, die in Querrichtung verläuft und die Drehachse schneidet im Bereich zwischen 5° und 30°, besonders bevorzugt, zwischen 10° und 20° liegt.

Des Weiteren drehen erfindungsgemäß die Antriebsvorrichtungen im Wesentlichen in dieselbe Drehrichtung, wenn das Skalarprodukt vom Vektor der Winkelgeschwindigkeit einer bestimmten Antriebsvorrichtung und einem fest vorgegebenen, aber beliebigen in Querrichtung zeigenden Vektor für alle Antriebsvorrichtungen dasselbe Vorzeichen besitzt. Das heißt also, um zu überprüfen, dass alle betrachteten Antriebsvorrichtungen bzw. jede der betrachteten Antriebsvorrichtungen im Wesentlichen in dieselbe Drehrichtung drehen, wird zunächst ein Vektor in Querrichtung fest vorgegeben. Anschließend wird für eine erste Antriebsvorrichtung das Skalarprodukt von deren Winkelgeschwindigkeitsvektor und dem fest vorgegebenen Vektor berechnet; danach für eine zweite Antriebsvorrichtung das Skalarprodukt von deren Winkelgeschwindigkeitsvektor und dem fest vorgegebenen Vektor; etc. Abschließend werden lediglich die Vorzeichen (Plus oder Minus) der so berechneten Skalarprodukte verglichen. Sind sämtliche Vorzeichen gleich, drehen die betrachteten Antriebsvorrichtungen bzw. dreht jede der betrachteten Antriebsvorrichtungen im Sinne der Erfindung im Wesentlichen in dieselbe Drehrichtung.

Im Sinne der Erfindung ist daher weder erforderlich, dass im Schwebeflug sämtliche Drehachsen mathematisch exakt parallel ausgerichtet sind, noch, dass sämtliche Antriebsvorrichtungen mit derselben Dreh- bzw. (betragsmäßigen) Winkelgeschwindigkeit um die Drehachse rotieren.

Dadurch, dass das Fluggerät derart ausgelegt ist, einen Schwebeflug bei im Wesentlichen in dieselbe Richtung drehenden Antriebsvorrichtungen durchzuführen, wird eine Reduzierung der Leistungsaufnahme der Antriebsvorrichtungen erreicht. Vereinfacht ausgedrückt ersetzt der erfindungsgemäß auftretende Magnus-Effekt einen Teil der Schubkraft der Antriebsvorrichtungen und reduziert damit den Leistungsbedarf im Vorwärtsflug gegenüber dem Schwebeflug. Weil somit mehr Restleistung für die Antriebsvorrichtungen im Vorwärtsflug übrig bleibt, erhöht sich insbesondere die Agilität des Fluggeräts im Vorwärtsflug.

Der Magnus-Effekt besagt, dass ein rotierender runder Körper in einer Strömung eine Querkraft normal zur Strömungsrichtung erfährt. Im Falle der erfindungsgemäßen Antriebsvorrichtungen, die im Wesentlichen in dieselben Richtung drehen, kann durch diesen Effekt ein zusätzlicher Schubvektor bzw. eine zusätzliche Schubkraft in vertikaler Richtung erzeugt werden. Somit wird die gesamte Auftriebskraft der Antriebsvorrichtungen erhöht. Der Magnus-Effekt ersetzt einen Teil der von der Antriebsvorrichtung aufzubringenden Schubkraft und reduziert somit den Leistungsbedarf im Vorwärtsflug gegenüber dem Schwebeflug. Befindet sich nun der Rotor im Vorwärtsflug, wird er von vorne aktiv mit Luft angeströmt. In der erfindungsgemäßen Konfiguration, bei der die Antriebsvorrichtungen im Wesentlichen in dieselbe Richtung drehen, wirkt bei gleichbleibender Anströmung die zusätzliche Querkraft des Magnus-Effektes im Wesentlichen in dieselbe Richtung wie die Schubkraft der Antriebsvorrichtungen und erhöht somit die gesamte Schubkraft oder verringert den Leistungsbedarf bei geforderter gleicher Auftriebskraft. Im Vorwärtsflug, insbesondere bei höheren Vorwärtsgeschwindigkeiten und im Wesentlichen gleicher Drehrichtung ist es somit möglich, dass die positive Auswirkung des Magnus-Effekts eine geringere Leistung und/oder Drehgeschwindigkeit der Antriebsvorrichtungen erfordert, um das Fluggerät in einer stabilen Fluglage zu halten.

Besonders bevorzugt ist das Fluggerät weiter dazu ausgelegt, dass im Schwebeflug der Massenschwerpunkt des Fluggeräts derart positioniert ist, dass dadurch bewirkt wird, dass sämtliche auf das Fluggerät wirkenden Kräfte und sämtliche bezüglich des Massenschwerpunkts des Fluggeräts am Fluggerät angreifenden Drehmomente im Wesentlichen verschwinden, wenn eine oder mehrere der Antriebsvorrichtungen einen ihnen jeweils zugeordneten bestimmten vorgegebenen Schubvektor erzeugen. Mit dieser Anweisung ist die Einschränkung verbunden, dass der Massenschwerpunkt des Fluggeräts bezüglich der Längsrichtung innerhalb eines Bereichs liegen muss, der dadurch bestimmt ist, dass das Fluggerät den Schwebeflug durchführen kann, wenn eine oder mehrere der Antriebsvorrichtungen mit maximaler Schubkraft bzw. maximalem Schubvektor angetrieben werden. Anders ausgedrückt: Befindet sich der Massenschwerpunkt innerhalb des besagten Bereichs, sind die Antriebsvorrichtungen in der Lage, entsprechende Schubvektoren zu erzeugen, damit das Fluggerät den Schwebeflug ausführen kann.

Im Schwebeflug ist die Anströmgeschwindigkeit grundsätzlich geringer als im Vorwärtsflug. Dadurch, dass für das erfindungsgemäße Fluggerät die Schubvektoren der Antriebsvorrichtungen für den Schwebeflug vorgegeben werden, und die Position des Massenschwerpunktes für den Schwebeflug bestimmt wird, wird sichergestellt, dass auch im Vorwärtsflug eine stabile Fluglage möglich ist. Wie vorstehend ausgeführt, ist der erfindungsgemäße positive Effekt, der durch den Magnus-Effekt bewirkt wird, um so größer, je größer die Anströmgeschwindigkeit ist. Daher wird durch die erfindungsgemäße Konfiguration des Fluggeräts im Schwebeflug sichergestellt, dass das Fluggerät insbesondere im Vorwärtsflug eine stabile Fluglage einnehmen kann, weil im Vorwärtsflug der Magnus-Effekt zu einer stärkeren Erhöhung des Schubvektors führt als im Falle des Schwebeflugs.

Bei der Auslegung und Konfiguration eines erfindungsgemäßen Fluggerätes mit Antriebsvorrichtungen müssen alle Kräfte und Drehmomente der Antriebsvorrichtungen berücksichtigt werden. Grundsätzlich wird die Schubkraft bzw. der Schubvektor dazu verwendet, die benötigte Auftriebskraft zu erzeugen und/oder die Fluglage des Fluggerätes zu regeln. Zweckmäßigerweise umfasst das Fluggerät dazu eine Schubvektorsteuerung, die die benötigte Schubkraft bzw. benötigten Schubvektoren im Schwebeflug und/oder im Vorwärtsflug regelt.

Jede der erfindungsgemäßen Antriebsvorrichtungen erzeugt ein Drehmoment entgegen der Drehrichtung. Dieses Drehmoment um die Drehachse entgegen der Drehrichtung der Antriebsvorrichtung resultiert aus, u.a. durch den Luftwiderstand bewirkten, tangentialen Luftkräften. Um eine konstante Drehgeschwindigkeit aufrechtzuerhalten, muss die Antriebsvorrichtung somit ein (Antriebs-)Drehmoment erzeugen, das dem aufgrund der tangentialen Luftkräfte resultierenden Drehmoment entgegenwirkt. Damit die Antriebsvorrichtung allerdings ein solches (Antriebs-)Drehmoment auch während der Flugphase erzeugen kann, ist ein weiteres Drehmoment erforderlich, das der Fluggerätekörper (gemäß dem Prinzip von *actio* = *reactio)* aufbringen muss, um die Antriebsvorrichtung in der Luft "abzustützen". Dieses letztgenannte Drehmoment ist, um eine konstante Rotationsgeschwindigkeit gegen die Luftkräfte aufrechtzuerhalten, (bei Vernachlässigung dissipativer Effekte) betragsmäßig etwa gleich groß wie das durch die tangentialen Luftkräfte erzeugte Drehmoment, und zeigt auch in dieselbe Richtung wie letzteres. Da das durch die Luftkräfte erzeugte Drehmoment der Drehrichtung der Antriebsvorrichtung entgegenwirkt, wirkt auch das vom Fluggerätekörper aufgebrachte Drehmoment der Drehrichtung der Antriebsvorrichtung entgegen. Unter der Annahme, dass das Drehmoment durch die Luftkräfte und jenes der Antriebsvorrichtung im Wesentlichen betragsmäßig gleich, aber entgegengesetzt gerichtet sind, bleibt aufgrund der Rotation der Antriebsvorrichtung als Netto-Drehmoment das vom Fluggerätekörper aufgebrachte Drehmoment übrig.

Die Kompensation dieses Drehmoments bzw. dieser Drehmomente erfolgt erfindungsgemäß dadurch, dass der Massenschwerpunkt des Fluggeräts dermaßen positioniert ist, dass unter Berücksichtigung der den Antriebsvorrichtungen jeweils zugeordneten und vorgegebenen Schubvektoren, im Schwebeflug sämtliche auf das Fluggerät wirkenden Kräfte und sämtliche bezüglich des Massenschwerpunkts des Fluggeräts am Fluggerät angreifenden Drehmomente im Wesentlichen verschwinden.

Dadurch, dass erfindungsgemäß die Antriebsvorrichtungen im Wesentlichen in dieselbe Drehrichtung drehen, wirken die vorstehend beschriebenen durch den Fluggerätekörper bewirkten Drehmomente aller dieser Antriebsvorrichtungen auch im Wesentlichen in die gleiche Richtung. Die Drehmomente addieren sich also und heben sich nicht gegenseitig auf.

Um eine stabile Fluglage im Schwebeflug sowie im Vorwärtsflug erreichen zu können, muss das Gleichgewicht aller Kräfte und Drehmomente, welche auf das Fluggerät wirken, erfüllt werden. Die Berechnung erfolgt mittels Impuls- und Drallsatz.

Der Impulssatz lautet:

$$m\ddot{r}_s = F,$$

wobei m der Masse des Fluggeräts, $\ddot{r}_s$ dem Beschleunigungsvektor des Massenschwerpunktes des Fluggeräts und F dem Kraftvektor, welcher auf das Fluggerät einwirkt, entspricht.

Der Drallsatz sagt aus

$$\dot{L}_s = M_s,$$

wobei $\dot{L}_s$ die zeitliche Änderung des Drehimpulsvektors (Drallvektors) und $M_s$ der Drehmomentvektor sind, welche auf das Fluggerät einwirken.

Bei der Forderung nach einer stabilen Fluglage (Schwebeflug, gleichmäßige Geschwindigkeit im Vorwärtsflug, usw.) müssen der Beschleunigungsvektor $\ddot{r}_s$ und die zeitliche Änderung des Drehimpulsvektors $\dot{L}_s$ null sein. Somit muss sowohl die Summe aller äußeren Kräfte (F) als auch die Summe aller Drehmomente um den Massenschwerpunkt ($M_s$) jeweils entsprechend null ergeben. Die Kräfte, die auf das Fluggerät im Schwebeflug wirken, sind die Schwerkraft sowie die Schubkräfte der Antriebsvorrichtungen. Die Drehmomente, die bezüglich des Massenschwerpunkts des Fluggeräts wirken, sind die Drehmomente, die durch die Schubvektoren der Antriebsvorrichtungen, die in zugehörigen Abständen vom Massenschwerpunkt des Fluggeräts gelagert sind, erzeugt werden, sowie die (Stütz-)Drehmomente, die vom Fluggerätekörper erzeugt werden, und sämtlich im Wesentlichen in dieselbe Richtung zeigen.

Das Kräfte- und Drehmomente-Gleichgewicht kann somit dadurch erfolgen, dass die Schubkräfte bzw. Schubvektoren der Antriebsvorrichtungen und deren Abstände zum Massenschwerpunkt des Fluggeräts entsprechend gewählt werden.

Bevorzugt ist die erste Anzahl der Antriebsvorrichtungen bezüglich der Längsrichtung in einem vorderen Bereich des Flüggeräts angeordnet, und die zweite Anzahl der Antriebsvorrichtungen bezüglich der Längsrichtung in einem hinteren Bereich des Fluggeräts angeordnet. Bevorzugt umfasst das Fluggerät drei Antriebsvorrichtungen. Besonders bevorzugt umfasst das Fluggerät vier Antriebsvorrichtungen, wobei zwei der Antriebsvorrichtungen bezüglich der Längsrichtung in einem vorderen Bereich des Fluggeräts angeordnet sind, und zwei weitere Antriebsvorrichtungen bezüglich der Längsrichtung in einem hinteren Bereich des Fluggeräts angeordnet sind. Die Gesamtlänge des Fluggeräts wird in Längsrichtung gemessen. Zur einfacheren Beschreibung von Bereichen des Fluggeräts wird nachfolgend dem vordersten Teil des Fluggeräts die relative Längskoordinate 0 zugeordnet, dem hintersten Teil des Fluggeräts die relative Längskoordinate 100 %. In dieser Konvention ist der vordere Bereich dadurch bestimmt, dass er dem (Längs-)Bereich von 0 bis 40 % der Gesamtlänge des Fluggeräts entspricht, der hintere Bereich, dass er dem (Längs-)Bereich von 60 % bis 100 % der Gesamtlänge des Fluggeräts entspricht. Weiter ist es zweckmäßig, wenn die zwei im vorderen Bereich angeordneten Antriebsvorrichtungen auf einer gemeinsamen Geraden, die parallel zur Querrichtung ausgerichtet ist, liegen. Zweckmäßig ist es auch, wenn die zwei im hinteren Bereich angeordneten Antriebsvorrichtungen auf einer gemeinsamen Geraden, die parallel zur Querrichtung ausgerichtet ist, liegen.

Vorteilhafterweise sind die Antriebsvorrichtungen im vorderen Bereich entlang der ersten Geraden, die parallel zur Querrichtung verläuft, angeordnet, und die Antriebsvorrichtungen im hinteren Bereich entlang der zweiten Geraden, die parallel zur Querrichtung verläuft, angeordnet. Dabei ist der Massenschwerpunkt des Fluggeräts, wenn es den Schwebeflug ausführt, in Längsrichtung in einem Abstand $l_1$ von der Geraden, entlang der die Antriebsvorrichtungen im vorderen Bereich angeordnet sind, positioniert, wobei

$$l_{1_{min}} \leq l_1 \leq l_{1_{max}},$$

mit

$$l_{1_{min}} = \frac{a_1 + a_2}{2} + \frac{l}{R_{max} + 1} \quad \text{und} \quad l_{1_{max}} = \frac{a_1 + a_2}{2} + \frac{l}{R_{min} + 1},$$

worin

$R_{min}$ ein minimal zulässiges Verhältnis zwischen den Schubvektoren der im vorderen Bereich angeordneten Antriebsvorrichtungen, einerseits, und den Schubvektoren der im hinteren Bereich angeordneten Antriebsvorrichtungen, andererseits,

$R_{max}$ ein maximal zulässiges Verhältnis zwischen den Schubvektoren der im vorderen Bereich angeordneten Antriebsvorrichtungen, einerseits, und den Schubvektoren der im hinteren Bereich angeordneten Antriebsvorrichtungen, andererseits,

$l$ der Abstand zwischen erster Geraden und zweiter Geraden,

$a_1$ eine Kennzahl für die im vorderen Bereich angeordneten Antriebsvorrichtungen, und

$a_2$ eine Kennzahl für die im hinteren Bereich angeordneten Antriebsvorrichtungen sind. Zweckmäßigerweise ist das Fluggerät weiter dazu ausgelegt, dass im Schwebeflug die zugeordneten Drehachsen parallel ausgerichtet sind.

Schließlich soll darauf hingewiesen werden, dass es erfindungsgemäß nicht ausgeschlossen ist, dass das Fluggerät zusätzlich zu den zum erfindungsgemäßen Effekt beitragenden mindestens zwei Antriebsvorrichtungen noch weitere Antriebsvorrichtungen umfasst, die nicht im Wesentlichen in dieselbe Drehrichtung drehen.

Gemäß einem zweiten Aspekt der Erfindung wird ein Fluggerät bereitgestellt, das einen Fluggeräterumpf, und mindestens drei Antriebsvorrichtungen, die um den Fluggeräterumpf herum gelagert sind, und die um eine jeweils zugeordnete Drehachse drehbar sind, um einen jeweils zugehörigen Schubvektor zu erzeugen, umfasst. Das Fluggerät ist dabei dazu ausgelegt, einen Schwebeflug durchzuführen, bei dem sämtliche auf das Fluggerät wirkenden Kräfte und sämtliche bezüglich des Massenschwerpunkts des Fluggeräts am Fluggerät angreifenden Drehmomente im Wesentlichen verschwinden, dadurch, dass im Schwebeflug die zugeordneten Drehachsen von zwei der mindestens drei Antriebsvorrichtungen im Wesentlichen in eine erste Richtung ausgerichtet sind, und die zugeordnete Drehachse von einer weiteren der mindestens drei Antriebsvorrichtungen im Wesentlichen in zweite Richtung ausgerichtet ist, wobei die erste Richtung nicht parallel zur zweiten Richtung ist, und jede der zwei Antriebsvorrichtungen mit im Schwebeflug in die erste Richtung ausgerichteten Drehachsen im Wesentlichen in dieselbe Drehrichtung um die jeweils zugeordnete Drehachse dreht.

Für das erfindungsgemäße Verständnis der Begriffe "im Wesentlichen in eine erste / zweite Richtung ausgerichtet" und "im Wesentlichen in dieselbe Richtung dreht" wird auf den ersten Aspekt der Erfindung verwiesen; die dort angegebenen Definitionen gelten für den zweiten Aspekt entsprechend.

Die erste Richtung ist nicht parallel zur zweiten Richtung, wenn eine (Bezugs-)Achse, die in die erste Richtung zeigt, nicht parallel zu einer (Bezugs-)Achse ist, die in die zweite Richtung zeigt. Vorzugsweise liegt der Winkel zwischen der ersten und zweiten Richtung in dem Bereich von 30° bis 110°, bevorzugt in dem Bereich 40° bis 100°, besonders bevorzugt in dem Bereich 60° bis 95°.

Bevorzugt sind die mindestens drei Antriebsvorrichtungen um den Fluggeräterumpf herum im Wesentlichen in einer Ebene gelagert. Zweckmäßig liegt der Fluggeräterumpf in der Ebene, d.h., die Ebene schneidet den Fluggeräterumpf. Weiter ist es vorteilhaft, wenn die erste Richtung und die zweite Richtung in der Ebene liegen.

Hier bedeutet "im Wesentlichen in einer Ebene gelagert", dass die Antriebsvorrichtungen bzw. deren Lagerungspunkte nicht exakt in gleicher Weise in einer Ebene enthalten sein müssen. So ist es auch noch erfindungsgemäß, wenn eine oder mehrere der Antriebsvorrichtungen aus der Ebene heraus verschwenkt sind, und/oder die Antriebsvorrichtungen bezüglich der Ebene vertikal versetzt sind. Zweckmäßig ist der vertikale Versatz durch die vertikale Ausdehnung des Fluggeräterumpfs beschränkt, d.h., zweckmäßig sind die Antriebsvorrichtungen derart gelagert, dass die Drehachsen der Antriebsvorrichtungen in dem Raumbereich enthalten sind, der zwischen zwei horizontalen Ebenen gebildet wird, die den Fluggeräterumpf berühren und um die vertikale Ausdehnung des Fluggeräterumpfs voneinander beabstandet sind. Die vertikale Ausdehnung ist bezogen auf die Richtung der Schwerkraft, wenn das Fluggerät am (ebenen) Boden ruht.

Bevorzugt ist jede der im Wesentlichen in die erste Richtung ausgerichteten Drehachsen der zwei der mindestens drei Antriebsvorrichtungen derart ausgerichtet, dass sie im Wesentlichen parallel zu einer Geraden ist, die durch die zwei Antriebsvorrichtungen verläuft. Es ist zweckmäßig, wenn die Gerade durch die geometrischen Zentren (der Begriff wird weiter unten erläutert) oder Lagerungspunkte der Antriebsvorrichtungen gelegt wird.

Erfindungsgemäß ist eine Drehachse im Wesentlichen parallel zu einer Geraden, wenn der Winkel, der zwischen der Drehachse und der Geraden eingeschlossen ist, geringer als 45°, bevorzugt geringer als 30°, besonders bevorzugt geringer als 15°, ist.

Besonders bevorzugt umfasst das Fluggerät gemäß dem zweiten Aspekt der Erfindung mindestens vier Antriebsvorrichtungen, die um den Fluggeräterumpf herum gelagert sind, und die um eine jeweils zugeordnete Drehachse drehbar sind, um einen jeweils zugehörigen Schubvektor zu erzeugen. Das Fluggerät ist dabei dazu ausgelegt, den Schwebeflug durchzuführen, dadurch, dass im Schwebeflug die zugeordneten Drehachsen von zwei der mindestens vier Antriebsvorrichtungen im Wesentlichen in die erste Richtung ausgerichtet sind, und die zugeordneten Drehachsen von zwei weiteren der mindestens vier Antriebsvorrichtungen im Wesentlichen in die zweite Richtung ausgerichtet sind, wobei jede der zwei Antriebsvorrichtungen mit im Schwebeflug in die erste Richtung ausgerichteten Drehachsen im Wesentlichen in dieselbe Drehrichtung um die jeweils zugeordnete Drehachse dreht, und/oder jede der zwei Antriebsvorrichtungen mit im Schwebeflug in die zweite Richtung ausgerichteten Drehachsen im Wesentlichen in dieselbe Richtung um die jeweils zugeordnete Drehachse dreht.

Die Vorteile, die das Fluggerät gemäß dem zweiten Aspekt der Erfindung gegenüber dem Stand der Technik mit sich bringt, entsprechen grundsätzlich jenen, die bereits im Zusammenhang mit dem Fluggerät des ersten Aspekts der Erfindung beschrieben wurden; um Wiederholungen zu vermeiden, wird daher zunächst auf die dortigen Ausführungen, insbesondere zur Ausnützung des positiven Beitrags des Magnus-Effekts bei in gleicher Richtung drehenden Antriebsvorrichtungen, verwiesen. Im Zusammenhang mit den letztgenannten Beitragen des Magnus-Effekts ist bei der - im Folgenden auch als "sternförmig" bezeichneten - Anordnung der Antriebsvorrichtungen um den Fluggeräterumpf herum zu berücksichtigen, dass im Vorwärtsflug in der Regel nur ein Teil der Antriebsvorrichtungen von Luft in Flugrichtung angeströmt wird. Damit wirkt sich der Magnus-Effekt im Vorwärtsflug aufgrund der im Wesentlichen gleichen Rotationsdrehung am stärksten bei jenen Antriebsvorrichtungen aus, deren Drehachsen im Wesentlichen senkrecht zur Flugrichtung ausgerichtet sind. Das heißt, bei der Anordnung der Antriebsvorrichtungen gemäß dem zweiten Aspekt der Erfindung ist es ausreichend, wenn das Fluggerät derart konfiguriert ist, dass im Schwebeflug jede der zwei Antriebsvorrichtungen mit im Schwebeflug in die erste Richtung ausgerichteten Drehachsen im Wesentlichen in dieselbe Drehrichtung um die jeweils zugeordnete Drehachse dreht, oder, im Falle von mindestens vier Antriebsvorrichtungen, jede der zwei Antriebsvorrichtungen mit im Schwebeflug in die zweite Richtung ausgerichteten Drehachsen im Wesentlichen in dieselbe Drehrichtung um die jeweils zugeordnete Drehachse dreht. In diesem Fall ist es möglich, dass die zwei Antriebsvorrichtungen, die nicht im Wesentlichen in dieselbe Richtung drehen, gegenläufig drehen. Rotieren diese beiden Antriebsvorrichtungen gegengleich, hebt sich das Drehmoment direkt auf. Allerdings ist es besonders vorteilhaft, dass das Fluggerät, wenn es mindestens vier Antriebsvorrichtungen umfasst, derart konfiguriert ist, dass im Schwebeflug jede der zwei Antriebsvorrichtungen mit im Schwebeflug in die erste Richtung ausgerichteten Drehachsen im Wesentlichen in dieselbe Drehrichtung um die jeweils zugeordnete Drehachse dreht, und jede der zwei Antriebsvorrichtungen mit im Schwebeflug in die zweite Richtung ausgerichteten Drehachsen im Wesentlichen in dieselbe Drehrichtung um die jeweils zugeordnete Drehachse dreht. Damit kann sichergestellt werden, dass das Fluggerät die positive Wirkung des Magnus-Effekts beim Vorwärtsflug sowohl in der ersten Richtung und zweiten Richtung ausnützen kann. Das Fluggerät ist damit flexibler und stabiler bei Flugrichtungsänderungen.

Besonders bevorzugt ist das Fluggerät weiter dazu ausgelegt, dass im Schwebeflug der Massenschwerpunkt des Fluggeräts derart positioniert ist, dass dadurch bewirkt wird, dass sämtliche auf das Fluggerät wirkenden Kräfte und sämtliche bezüglich des Massenschwerpunkts des Fluggeräts am Fluggerät angreifenden Drehmomente im Wesentlichen verschwinden, wenn eine oder mehrere der Antriebsvorrichtungen einen ihnen jeweils zugeordneten bestimmten vorgegebenen Schubvektor erzeugen. Mit dieser Anweisung ist die Einschränkung verbunden, dass der Massenschwerpunkt des Fluggeräts innerhalb eines Bereichs liegen muss, der dadurch bestimmt ist, dass das Fluggerät den Schwebeflug durchführen kann, wenn eine oder mehrere der Antriebsvorrichtungen mit maximaler Schubkraft bzw. maximalem Schubvektor angetrieben werden. Anders ausgedrückt: befindet sich der Massenschwerpunkt innerhalb des besagten Bereichs, sind die Antriebsvorrichtungen in der Lage, entsprechende Schubvektoren zu erzeugen, damit das Fluggerät den Schwebeflug ausführen kann.

Es ist bevorzugt, wenn jede der im Wesentlichen in die erste Richtung ausgerichteten Drehachsen der zwei der mindestens vier Antriebsvorrichtungen derart ausgerichtet ist, dass sie im Wesentlichen parallel zu einer Geraden verläuft, die durch die zwei Antriebsvorrichtungen verläuft. Bevorzugt ist auch, wenn jede der im Wesentlichen in die zweite Richtung ausgerichteten Drehachsen der zwei weiteren der mindestens vier Antriebsvorrichtungen derart ausgerichtet, dass sie im Wesentlichen parallel zu einer Geraden verläuft, die durch diese zwei weiteren Antriebsvorrichtungen verläuft. Es ist zweckmäßig, wenn die Geraden durch die geometrischen Zentren oder Lagerungspunkte der Antriebsvorrichtungen gelegt werden.

Wie schon beim ersten Aspekt der Erfindung erfolgt die Kompensation des bzw. der durch die im Wesentlichen in dieselbe Richtung drehenden Antriebsvorrichtungen erzeugten Drehmoments bzw. Drehmomente erfindungsgemäß dadurch, dass der Massenschwerpunkt des Fluggeräts dermaßen positioniert ist, dass unter Berücksichtigung der den Antriebsvorrichtungen jeweils zugeordneten und vorgegeben Schubvektoren im Schwebeflug sämtliche auf das Fluggerät wirkenden Kräfte und sämtliche bezüglich des Massenschwerpunkts des Fluggeräts am Fluggerät angreifenden Drehmomente im Wesentlichen verschwinden. Um eine stabile Fluglage im Schwebeflug sowie im Vorwärtsflug erreichen zu können, muss das Gleichgewicht aller Kräfte und Drehmomente, welche auf das Fluggerät wirken, erfüllt werden. Die Berechnung erfolgt mittels Impuls- und Drallsatz, die schon im Zusammenhang mit dem ersten Aspekt der Erfindung angegeben und beschrieben wurden. Die dortigen Ausführungen gelten hier entsprechend, und dies wird weiter unten noch weiter dargetan.

Es ist vorteilhaft, wenn drei Antriebsvorrichtungen derart um den Fluggeräterumpf herum angeordnet sind, dass sie die Ecken eines Dreiecks, bevorzugt eines gleichseitigen Dreiecks, bilden. Zweckmäßigerweise befindet sich der Fluggeräterumpf im geometrischen Zentrum des Dreiecks. Die erste Richtung wird durch eine Gerade definiert, auf der zwei der drei Antriebsvorrichtungen liegen; die zweite Richtung steht im Wesentlichen senkrecht auf der ersten Richtung. Darüber hinaus schließt die Drehachse einer jeden der zwei auf der in die erste Richtung zeigenden Geraden liegenden Antriebsvorrichtungen mit der genannten Geraden einen Winkel ein, der im Bereich zwischen 0° und 45°, zweckmäßig zwischen 0° und 30° liegt. Das geometrische Zentrum entspricht der Mittelung aller Punkte innerhalb des Dreiecks (also der Mittelung über die Fläche des Dreiecks mit konstanter Dichte). Wird der Winkel zwischen Drehachse(n) und der in die erste Richtung zeigenden Geraden 30° gewählt, so zeigt/zeigen die Drehachse(n) der Antriebsvorrichtungen zum geometrischen Zentrum hin (bzw. von ihm weg). Der Winkel kann aber auch für jede der Antriebsvorrichtungen unterschiedlich gewählt werden. Es ist zweckmäßig, wenn die Gerade durch die geometrischen Zentren oder Lagerungspunkte der Antriebsvorrichtungen gelegt wird.

Es ist vorteilhaft, wenn *n* Antriebsvorrichtungen derart um den Fluggeräterumpf herum angeordnet sind, dass sie die Ecken eines n-Ecks, *n*> 3, zweckmäßigerweise die Ecken eines regelmäßigen n-Ecks, *n*> 3, bilden. Zweckmäßig befindet sich der Fluggeräterumpf im geometrischen Zentrum des n-Ecks. Dabei wird die erste Richtung durch eine erste Gerade definiert, auf der zwei der *n* Antriebsvorrichtungen liegen; die zweite Richtung wird durch eine zweite Gerade definiert, auf der zwei weitere der *n* Antriebsvorrichtungen liegen. Die Drehachse einer jeden der zwei auf der in die erste Richtung zeigenden ersten Geraden liegenden Antriebsvorrichtungen schließt mit der ersten Geraden einen Winkel ein, der im Bereich zwischen 0° und 45°, zweckmäßig zwischen 0° und 30°, zweckmäßig im Bereich zwischen 0° und 20°, besonders bevorzugt im Bereich zwischen 0° und 18° liegt. Die Drehachsen von unterschiedlichen Antriebsvorrichtungen können dabei unterschiedliche Winkel mit der ersten Geraden einschließen.

Zweckmäßig ist es auch, wenn die Drehachse einer jeden der zwei auf der in die zweite Richtung zeigenden zweiten Geraden liegenden Antriebsvorrichtungen mit der zweiten Geraden einen Winkel einschließt, der im Bereich zwischen 0° und 45°, zweckmäßig zwischen 0° und 30°, zweckmäßig im Bereich zwischen 0° und 20°, besonders bevorzugt im Bereich zwischen 0° und 18° liegt. Die Drehachsen von unterschiedlichen Antriebsvorrichtungen können dabei unterschiedliche Winkel mit der zweiten Geraden einschließen.

Werden die Winkel wie vorstehend genannt gewählt, ist es möglich, dass die Drehachsen der Antriebsvorrichtungen in Richtung des geometrischen Zentrums des n-Ecks (bzw. davon weg) zeigen.

Besonders bevorzugt heißt das, das Fluggerät umfasst 3, 4, 5, 6, 7, 8, ... Antriebsvorrichtungen, die um den Fluggeräterumpf herum derart angeordnet sind, dass sie die Ecken eines gleichseitigen Dreiecks, eines Quadrats, eines regelmäßigen 5-, 6-, 7-Ecks, bzw. regelmäßigen 8-Ecks, usw. bilden. Der Fluggeräterumpf ist zweckmäßig im Wesentlichen im Zentrum des n-Ecks positioniert, wobei hier auf das geometrische Zentrum, nicht jedoch auf das Massenzentrum, des n-Ecks abgestellt wird; denn erfindungsgemäß braucht der Massenschwerpunkt des Fluggeräts nicht notwendig mit dem geometrischen Zentrum (geometrischen Schwerpunkt) zusammenzufallen. Das geometrische Zentrum eines n-Ecks ist entsprechend dem geometrischen Zentrum des Dreiecks definiert.

Zweckmäßig ist *n* = 2*j*, *j* > 1. Dann ist es weiter zweckmäßig, dass sich der Fluggeräterumpf zwischen jeweils zwei gegenüberliegenden Antriebsvorrichtungen des regelmäßigen 2j-Ecks befindet. In diesem Fall ist es von Vorteil, wenn die zwei bestimmten gegenüberliegenden Antriebsvorrichtungen zugeordneten Drehachsen jeweils im Wesentlichen in die Richtung zeigen, die durch eine Gerade definiert ist, auf der die zwei bestimmten gegenüberliegenden Antriebsvorrichtungen liegen. Weiter ist es vorteilhaft, wenn das Fluggerät dazu ausgelegt ist, den Schwebeflug durchzuführen, indem im Schwebeflug jeweils zwei gegenüberliegende Antriebsvorrichtungen im Wesentlichen in dieselbe Richtung um die ihnen zugeordnete Drehachse drehen. In diesem Fall können dann also jerfindungsgemäße Richtungen definiert werden.

Vorteilhafterweise liegt der Winkel zwischen der ersten Geraden und der zweiten Geraden im Bereich zwischen 60° und 100°, bevorzugt zwischen 60° und 90°, besonders bevorzugt zwischen 70° und 90°, besonders bevorzugt zwischen 72° und 90°. Wie später noch gezeigt, ist es für ein regelmäßiges (2*j* + 1)-Eck, *j* > 1, besonders vorteilhaft, die erste Gerade und die zweite Gerade (bzw. entsprechende Richtungen) so zu wählen, dass der Winkel zwischen der ersten Geraden und zweiten Geraden 90°. (1 - 1/(2*j* + 1)), beträgt. Für ein (beliebiges) (2*j* + 1)-Eck ist somit ein besonders bevorzugter Bereich für den Winkel zwischen erster und zweiter Geraden gegeben durch: [90°· (1 - 1/(2*j* + 1)); 90°]. Liegen die Winkel zwischen den Drehachsen der entlang der ersten Geraden angeordneten Antriebsvorrichtungen und der ersten Geraden im Bereich [0°; 90°/(2*j* + 1)], und/oder die Winkel zwischen den Drehachsen der entlang der zweiten Geraden angeordneten Antriebsvorrichtungen und der zweiten Geraden im Bereich [0°; 90°/(2*j* + 1)], so sind Konfigurationen umsetzbar, bei denen die Drehachsen der Antriebsvorrichtungen in Richtung des geometrischen Zentrums des (2*j* + 1)-Ecks (oder davon weg) zeigen.

Im Falle eines regelmäßigen 2j-Ecks, *j* > 1, ist es zweckmäßig, die erste Gerade und die zweite Gerade so zu wählen, dass sie einen Winkel einschließen, der 90° - 90°/(2*j*) . (2*j* mod 4) beträgt. Dann verlaufen die erste und die zweite Gerade jeweils durch das geometrische Zentrum des 2j-Ecks. Für ein (beliebiges) 2*j*-Eck ist somit ein besonders bevorzugter Bereich für den Winkel zwischen erster und zweiter Geraden gegeben durch: [90° - 90°/*j*; 90°].

Werden die erste Gerade und zweite Gerade so bestimmt, dass der Winkel zwischen ihnen im Bereich [60°; 90°] beträgt, und liegen die Winkel zwischen den Drehachsen der entlang der ersten Geraden angeordneten Antriebsvorrichtungen und der ersten Geraden im Bereich [0°; 30°], und/oder die Winkel zwischen den Drehachsen der entlang der zweiten Geraden angeordneten Antriebsvorrichtungen und der zweiten Geraden im Bereich [0°; 30°], können die Antriebsvorrichtungen in einem (beliebigen) regelmäßigen n-Eck *(n*> 2) um den Fluggeräterumpf angeordnet werden, sodass die Drehachsen der Antriebsvorrichtungen in Richtung des geometrischen Zentrums (oder davon weg) ausgerichtet sind. Soll *n > 3* betrachtet werden, ist es ausreichend, wenn der Winkel zwischen Drehachse einer Antriebsvorrichtung und der durch sie verlaufenden ersten oder zweiten Geraden im Bereich [0°; 18°] liegt.

Zweckmäßig steht die zweite Richtung im Wesentlichen senkrecht, besonders bevorzugt: senkrecht, zur ersten Richtung, und es sind zwei der mindestens vier Antriebsvorrichtungen entlang der ersten Richtung angeordnet, und die zwei weiteren der mindestens vier Antriebsvorrichtungen sind entlang der im Wesentlichen senkrecht zur ersten Richtung stehenden zweiten Richtung angeordnet. Dies ist ein Beispiel, bei dem die Antriebsvorrichtungen um den Fluggerätrumpf an den Ecken eines Quadrats angeordnet sein können.

Bevorzugt ist der Massenschwerpunkt des Fluggeräts, wenn es den Schwebeflug ausführt, in der ersten Richtung in einem Abstand $l_{34}$ von einer Geraden, entlang der die Antriebsvorrichtungen in der zweiten Richtung angeordnet sind, positioniert, wobei

$$l_{34_{min}} \leq l_{34} \leq l_{34_{max}},$$

mit

$$l_{34_{min}} = \frac{(R_{max}+3)*l+(R_{max}+1)*2*a_{34}}{(R_{max}+1)*4} - \frac{l}{2}$$

und

$$l_{34_{max}} = \frac{(R_{min}+3)*l+(R_{min}+1)*2*a_{34}}{(R_{min}+1)*4} - \frac{l}{2},$$

worin

$R_{min}$ ein minimal zulässiges Verhältnis zwischen den Schubvektoren der entlang der ersten Richtung angeordneten Antriebsvorrichtungen,

$R_{max}$ ein maximal zulässiges Verhältnis zwischen den Schubvektoren der entlang der ersten Richtung angeordneten Antriebsvorrichtungen,

$a_{34}$ eine Kennzahl für die entlang der zweiten Richtung angeordneten Antriebsvorrichtungen, und

$l$ der Abstand der geometrischen Zentren der in der ersten Richtung angeordneten Antriebsvorrichtungen sind.

Bevorzugt ist der Massenschwerpunkt des Fluggeräts, wenn es den Schwebeflug ausführt, in der zweiten Richtung in einem Abstand $l_{12}$ von einer Geraden, entlang der die Antriebsvorrichtungen in der ersten Richtung angeordnet sind, positioniert, wobei

$$l_{12_{min}} \leq l_{12} \leq l_{12_{max}},$$

mit

$$l_{12_{min}} = \frac{(R'_{max}+3)*l'+(R'_{max}+1)*2*a_{12}}{(R'_{max}+1)*4} - \frac{l'}{2}$$

und

$$l_{12_{max}} = \frac{(R'_{min}+3)*l'+(R'_{min}+1)*2*a_{12}}{(R'_{min}+1)*4} - \frac{l'}{2},$$

worin

$R'_{min}$ ein minimal zulässiges Verhältnis zwischen den Schubvektoren der entlang der zweiten Richtung angeordneten Antriebsvorrichtungen,

$R'_{max}$ ein maximal zulässiges Verhältnis zwischen den Schubvektoren der entlang der zweiten Richtung angeordneten Antriebsvorrichtungen,

$a_{12}$ eine Kennzahl für die entlang der ersten Richtung angeordneten Antriebsvorrichtungen, und

$l'$ der Abstand der geometrischen Zentren der in der zweiten Richtung angeordneten Antriebsvorrichtungen sind.

Sowohl für das Fluggerät gemäß dem ersten Aspekt als auch für jenes gemäß dem zweiten Aspekt kann es vorteilhaft sein, bei annähernd gleichen zugeordneten bestimmten vorgegebenen Schubvektoren den Schwebeflug auszuführen.

Ebenso kann es in jedem der Fluggeräte des ersten oder zweiten Aspekts vorteilhaft sein, wenn es weiter eine Verlagerungsvorrichtung aufweist, mit der der Massenschwerpunkt des Fluggeräts verlagerbar ist. Zweckmäßig umfasst das Fluggerät dazu ferner einen Treibstofftank zur Versorgung der Antriebsvorrichtungen mit Treibstoff und/oder eine Batterie zur Versorgung der Antriebsvorrichtungen mit elektrischer Energie, wobei die Verlagerungsvorrichtung dazu ausgelegt ist, Treibstoff aus dem Treibstofftank oder die Batterie innerhalb des Fluggeräts zu verlagern, um damit den Massenschwerpunkt so zu positionieren, dass das Fluggerät den Schwebeflug durchführt, wenn eine oder mehrere der Antriebsvorrichtungen den jeweils zugeordneten bestimmten vorgegebenen Schubvektor erzeugen. Der Massenschwerpunkt des Fluggeräts ist daher dynamisch verlagerbar. Der Vorteil ist, dass damit der Massenschwerpunkt des Fluggeräts diversen Fluglagen entsprechend optimal angepasst werden kann. Die Verlagerung des Massenschwerpunkts kann durch eine Fluggerätesteuerung erfolgen.

Bevorzugt umfassen die Fluggeräte nach dem ersten oder zweiten Aspekt eine Schubvektorsteuerung, um die Schubvektoren der Antriebsvorrichtungen individuell zu steuern.

Gemäß einem dritten Aspekt der Erfindung wird ein Verfahren zur Herstellung eines Fluggeräts nach dem ersten Aspekt der Erfindung bereitgestellt, umfassend die folgenden Schritte:

- Positionieren des Massenschwerpunkts des Fluggeräts derart, dass eine oder mehrere der Antriebsvorrichtungen einen ihnen jeweils zugeordneten bestimmten vorgegebenen Schubvektor erzeugen, damit das Fluggerät einen Schwebeflug durchführt, bei dem sämtliche auf das Fluggerät wirkenden Kräfte und sämtliche bezüglich des Massenschwerpunkts des Fluggeräts am Fluggerät angreifenden Drehmomente im Wesentlichen verschwinden, wenn

  - jede der zugeordneten Drehachsen im Wesentlichen in Querrichtung des Fluggerätekörpers ausgerichtet ist, und
  - jede der mindestens zwei Antriebsvorrichtungen im Wesentlichen in dieselbe Drehrichtung um die jeweils zugeordnete Drehachse dreht.

Gemäß einem vierten Aspekt der Erfindung wird ein Verfahren zur Herstellung eines Fluggeräts nach dem zweiten Aspekt der Erfindung bereitgestellt, umfassend die folgenden Schritte:

- Positionieren des Massenschwerpunkts des Fluggeräts derart, dass eine oder mehrere der Antriebsvorrichtungen einen ihnen jeweils zugeordneten bestimmten vorgegebenen Schubvektor erzeugen, damit das Fluggerät einen Schwebeflug durchführt, bei dem sämtliche auf das Fluggerät wirkenden Kräfte und sämtliche bezüglich des Massenschwerpunkts des Fluggeräts am Fluggerät angreifenden Drehmomente im Wesentlichen verschwinden, wenn

  - die zugeordneten Drehachsen von zwei der mindestens drei Antriebsvorrichtungen im Wesentlichen in die erste Richtung ausgerichtet sind, und die zugeordnete Drehachse von einer weiteren der mindestens drei Antriebsvorrichtungen im Wesentlichen in die zweite Richtung ausgerichtet ist, und
  - jede der zwei Antriebsvorrichtungen mit im Schwebeflug in die erste Richtung ausgerichteten Drehachsen im Wesentlichen in dieselbe Drehrichtung um die jeweils zugeordnete Drehachse dreht.

In dem bevorzugten Fall, dass das Fluggerät mindestens vier Antriebsvorrichtungen umfasst, sind die zugeordneten Drehachsen von zwei der mindestens vier Antriebsvorrichtungen im Wesentlichen in die erste Richtung ausgerichtet, und die zugeordneten Drehachsen von zwei weiteren der mindestens vier Antriebsvorrichtungen im Wesentlichen in die zweite Richtung ausgerichtet sind, und jede der zwei Antriebsvorrichtungen mit im Schwebeflug in die erste Richtung ausgerichteten Drehachsen dreht im Wesentlichen in dieselbe Drehrichtung um die jeweils zugeordnete Drehachse, und/oder jede der zwei Antriebsvorrichtungen mit im Schwebeflug in die zweite Richtung ausgerichteten Drehachsen dreht im Wesentlichen in dieselbe Drehrichtung um die jeweils zugeordnete Drehachse.

Gemäß einem fünften Aspekt der Erfindung wird ein Verfahren zur Steuerung eines Fluggeräts mit einem Fluggerätekörper bereitgestellt, der eine Längsrichtung, eine Vertikalrichtung und eine Querrichtung definiert, wobei die Längsrichtung der Richtung vom Heck zur Nase des Fluggeräts entspricht, die Vertikalrichtung mit der Richtung der Erdanziehungskraft übereinstimmt, wenn das Fluggerät am Boden ruht, und die Querrichtung senkrecht auf der Längsrichtung und der Vertikalrichtung steht, und mindestens zwei Antriebsvorrichtungen, die um eine jeweils zugeordnete Drehachse drehbar sind, um einen jeweils zugehörigen Schubvektor zu erzeugen, wobei eine erste Anzahl von Antriebsvorrichtungen entlang einer ersten Geraden, die parallel zur Querrichtung verläuft, angeordnet ist, und eine zweite Anzahl der Antriebsvorrichtungen entlang einer zweiten Geraden, die parallel zur Querrichtung verläuft, angeordnet ist, die erste Gerade von der zweiten Geraden beabstandet ist, und der Massenschwerpunkt des Fluggeräts bezüglich der Längsrichtung zwischen der ersten Geraden und der zweiten Geraden positioniert ist. Das Verfahren umfasst die folgenden Schritte:

- Bestimmen der zugehörigen Schubvektoren derart, dass das Fluggerät einen Schwebeflug durchführt, wenn jede der den mindestens zwei Antriebsvorrichtungen zugeordneten Drehachsen im Wesentlichen in Querrichtung des Fluggerätekörpers ausgerichtet ist, und jede der mindestens zwei Antriebsvorrichtungen im Wesentlichen in dieselbe Drehrichtung um die jeweils zugeordnete Drehachse dreht,
  wobei im Schwebeflug sämtliche auf das Fluggerät wirkenden Kräfte und sämtliche bezüglich des Massenschwerpunkts des Fluggeräts am Fluggerät angreifenden Drehmomente im Wesentlichen verschwinden,
- Antreiben jeder der Antriebsvorrichtungen im Wesentlichen in dieselbe Drehrichtung derart, dass die jeweilige Antriebsvorrichtungen den bestimmten zugehörigen Schubvektor erzeugt.

Gemäß einem sechsten Aspekt der Erfindung wird ein Verfahren zur Steuerung eines Fluggeräts mit einem Fluggeräterumpf, und mindestens drei Antriebsvorrichtungen, die um den Fluggeräterumpf herum gelagert sind, und die jeweils um eine zugeordnete Drehachse drehbar sind, um einen jeweils zugehörigen Schubvektor zu erzeugen, bereitgestellt, das die folgenden Schritte umfasst:

- Bestimmen der zugehörigen Schubvektoren derart, dass das Fluggerät einen Schwebeflug durchführt, wenn zwei der den mindestens drei Antriebsvorrichtungen zugeordneten Drehachsen im Wesentlichen in erste Richtung ausgerichtet sind und im Wesentlichen in dieselbe Drehrichtung um die jeweils zugeordnete Drehachse drehen, und/oder eine weitere der den mindestens drei Antriebsvorrichtungen zugeordneten Drehachsen im Wesentlichen in eine zweite Richtung, die nicht parallel zur ersten Richtung ist, ausgerichtet ist,
  wobei im Schwebeflug sämtliche auf das Fluggerät wirkenden Kräfte und sämtliche bezüglich des Massenschwerpunkts des Fluggeräts am Fluggerät angreifenden Drehmomente im Wesentlichen verschwinden,
- Ausrichten der zugeordneten Drehachsen von zwei der mindestens drei Antriebsvorrichtungen im Wesentlichen in die erste Richtung, und Ausrichten der zugeordneten Drehachse der weiteren der mindestens drei Antriebsvorrichtungen im Wesentlichen in die zweite Richtung,
- Antreiben jeder der Antriebsvorrichtungen derart, dass die jeweilige Antriebsvorrichtungen in eine zugeordnete Drehrichtung dreht und den bestimmten zugehörigen Schubvektor erzeugt,
  wobei jede der Antriebsvorrichtungen mit im Wesentlichen in die erste Richtung ausgerichteten Drehachsen im Wesentlichen in dieselbe Drehrichtung um die jeweils zugeordnete Drehachse dreht.

Bevorzugt ist das Verfahren zur Steuerung eines Fluggeräts mit mindestens vier Antriebsvorrichtungen vorgesehen und umfasst die folgenden Schritte:

- Bestimmen der zugehörigen Schubvektoren derart, dass das Fluggerät einen Schwebeflug durchführt, wenn zwei der den mindestens vier Antriebsvorrichtungen zugeordneten Drehachsen im Wesentlichen in eine erste Richtung ausgerichtet sind und im Wesentlichen in dieselbe Drehrichtung um die jeweils zugeordnete Drehachse drehen, und/oder zwei weitere der den mindestens vier Antriebsvorrichtungen zugeordnete Drehachse im Wesentlichen in eine zweite Richtung, die nicht parallel zur ersten Richtung ist, ausgerichtet sind und im Wesentlichen in dieselbe Drehrichtung um die jeweils zugeordnete Drehachse drehen,
  wobei im Schwebeflug sämtliche auf das Fluggerät wirkenden Kräfte und sämtliche bezüglich des Massenschwerpunkts des Fluggeräts am Fluggerät angreifenden Drehmomente im Wesentlichen verschwinden,

  - Ausrichten der zugeordneten Drehachsen von zwei der mindestens vier Antriebsvorrichtungen im Wesentlichen in die erste Richtung, und Ausrichten der zugeordneten Drehachsen der zwei weiteren der mindestens vier Antriebsvorrichtungen im Wesentlichen in die zweite Richtung,
  - Antreiben jeder der Antriebsvorrichtungen derart, dass die jeweilige Antriebsvorrichtungen in eine zugeordnete Drehrichtung dreht und den bestimmten zugehörigen Schubvektor erzeugt,

  wobei jede der Antriebsvorrichtungen mit im Wesentlichen in die erste Richtung ausgerichteten Drehachsen im Wesentlichen in dieselbe Drehrichtung um die jeweils zugeordnete Drehachse dreht und/oder jede der zwei Antriebsvorrichtungen mit im Wesentlichen in die zweite Richtung ausgerichteten Drehachsen im Wesentlichen in dieselbe Drehrichtung um die jeweils zugeordnete Drehachse dreht.

Bevorzugt werden in den Verfahren zur Steuerung eines Fluggeräts gemäß dem fünften oder sechsten Aspekt sämtliche der bestimmten zugehörigen Schubvektoren annähernd identisch gewählt.

Vorteilhafterweise umfassen die Verfahren zur Steuerung eines Fluggeräts gemäß dem fünften oder sechsten Aspekt weiter den folgenden Schritt:

- Positionieren des Massenschwerpunkts des Fluggeräts derart, dass dadurch bewirkt wird, dass sämtliche auf das Fluggerät wirkenden Kräfte und sämtliche bezüglich des Massenschwerpunkts des Fluggeräts am Fluggerät angreifenden Drehmomente im Wesentlichen verschwinden, wenn die Antriebsvorrichtungen die ihnen jeweils zugeordneten bestimmten vorgegebenen Schubvektor erzeugen.

Die Vorteile der Verfahren gemäß dem dritten bis sechsten Aspekt der Erfindung sind dieselben, die bereits im Zusammenhang mit den erfindungsgemäßen Fluggeräten gemäß dem ersten und zweiten Aspekt beschrieben wurden. Die zweckmäßigen, vorteilhaften und bevorzugten Ausgestaltungen des ersten und zweiten Aspekts finden daher entsprechend Anwendung auf den dritten bis sechsten Aspekt der Erfindung.

Bevorzugt ist im Fluggerät oder Verfahren gemäß jedem beliebigen der erfindungsgemäßen Aspekte jede der Antriebsvorrichtungen konstruktiv identisch ausgestaltet.

Besonders bevorzugt umfassen für jedes Fluggerät oder Verfahren nach jedem beliebigen der erfindungsgemäßen Aspekte die Antriebsvorrichtungen Cyclogyro-Rotoren.

Zweckmäßigerweise umfasst dabei jeder Cyclogyro-Rotor mehrere Rotorblätter, die entlang einer Kreisbahn um die jeweils zugeordnete Drehachse der Antriebsvorrichtung bzw. des Cyclogyro-Rotors drehbar sind; einen Pitch-Mechanismus mit einer Kopplungsvorrichtung und einer Lagerungsvorrichtung, wobei jedes der mehreren Rotorblätter durch die Lagerungsvorrichtung um seine Rotorblatt-Lagerungsachse parallel zur Drehachse der Antriebsvorrichtung bzw. des Cyclogyro-Rotors schwenkbar gelagert ist. Des Weiteren umfasst der Cyclogyro-Rotor zweckmäßigerweise eine Offset-Vorrichtung, an die jedes Rotorblatt durch die Kopplungsvorrichtung in einem ihm zugeordneten Anbindungspunkt angekoppelt ist. Dabei definiert die Offset-Vorrichtung eine exzentrische Lagerungsachse, die in einem einstellbaren Offset-Abstand parallel zur Drehachse der Antriebsvorrichtung bzw. des Cyclogyro-Rotors gelagert ist. Dadurch bewirkt die Rotation der Rotorblätter entlang der Kreisbahn um die Drehachse der Antriebsvorrichtung bzw. des Cyclogyro-Rotors eine Pitch-Bewegung der Rotorblätter, wenn der Offset-Abstand auf einen Wert ungleich Null eingestellt ist.

Generell ist aber die Anforderung an die Auftriebskraft eines Fluggerätes weitestgehend konstant, und eine Erhöhung wird meist nicht benötigt, da hier im Wesentlichen der Schwerkraft entgegengewirkt werden muss. Mit Hilfe der Offset-Vorrichtung kann aber nun die Schubkraft auf Grund der Erhöhung wiederum reduziert werden, was in einer verringerten Leistungsaufnahme des Rotors resultiert.

Im Folgenden werden bevorzugte Ausführungsbeispiele der vorliegenden Erfindung anhand der nachfolgenden Figuren beschrieben. Es zeigen:

Figur 1: eine perspektivische Ansicht eines Fluggeräts gemäß dem ersten Aspekt der Erfindung;

Figur 2a: eine schematische Darstellung einer Antriebsvorrichtung und die darauf wirkenden Kräfte und Drehmomente;

Figur 2b: eine schematische Darstellung einer Antriebsvorrichtung im Vorwärtsflug des Fluggeräts und die darauf wirkenden Kräfte und Drehmomente unter Berücksichtigung einer Anströmung;

Figur 3a: eine schematische Darstellung des Fluggeräts gemäß dem ersten Aspekt der Erfindung in Draufsicht;

Figur 3b: eine schematische Darstellung des Fluggeräts gemäß dem ersten Aspekt der Erfindung und der darauf wirkenden Kräfte und Drehmomente in Seitenansicht;

Figur 3c: eine Beispielskonfiguration eins Fluggeräts mit vier parallelen und gleich großen Antriebsvorrichtungen zur Veranschaulichung der bevorzugten Massenschwerpunktlage des Fluggeräts;

Figur 4: eine schematische Darstellung des Fluggeräts gemäß dem ersten Aspekt der Erfindung in Draufsicht zur Verallgemeinerung der Bedingungen für eine stabile Fluglage;

Figur 5: eine perspektivische Ansicht einer erfindungsgemäßen Antriebsvorrichtung;

Figur 6: eine perspektivische Ansicht eines Fluggeräts gemäß dem zweiten Aspekt der Erfindung;

Figur 7a: eine schematische Darstellung des Fluggeräts gemäß dem zweiten Aspekt der Erfindung in Draufsicht und der darauf wirkenden Kräfte und Drehmomente;

Figur 7b: eine schematische Darstellung des Fluggeräts in einer erfindungsgemäßen Konfiguration gemäß dem zweiten Aspekt der Erfindung und der darauf wirkenden Kräfte und Drehmomente in einer ersten Seitenansicht;

Figur 7c: eine schematische Darstellung des Fluggeräts in einer erfindungsgemäßen Konfiguration gemäß dem zweiten Aspekt der Erfindung und der darauf wirkenden Kräfte und Drehmomente in einer zweiten Seitenansicht;

Figur 7d: eine Beispielskonfiguration eins Fluggeräts gemäß dem zweiten Aspekt der Erfindung mit vier sternförmig angeordneten und gleich großen Antriebsvorrichtungen zur Veranschaulichung der bevorzugten Massenschwerpunktlage des Fluggeräts;

Figur 8a: einen Ausschnitt eines Fluggeräts mit n Antriebsvorrichtungen gemäß dem zweiten Aspekt der Erfindung in Draufsicht zur Erläuterung der Bestimmung des Massenschwerpunkts;

Figur 8b: einen Ausschnitt des Fluggeräts mit *n* Antriebsvorrichtungen in Seitenansicht;

Figur 9a: eine schematische Darstellung eines Fluggeräts gemäß dem zweiten Aspekt der Erfindung mit drei Antriebsvorrichtungen;

Figur 9b: eine schematische Darstellung eines Fluggeräts gemäß dem zweiten Aspekt der Erfindung mit sieben Antriebsvorrichtungen;

Figur 9c: eine schematische Darstellung eines Fluggeräts gemäß dem zweiten Aspekt der Erfindung mit sechs Antriebsvorrichtungen.

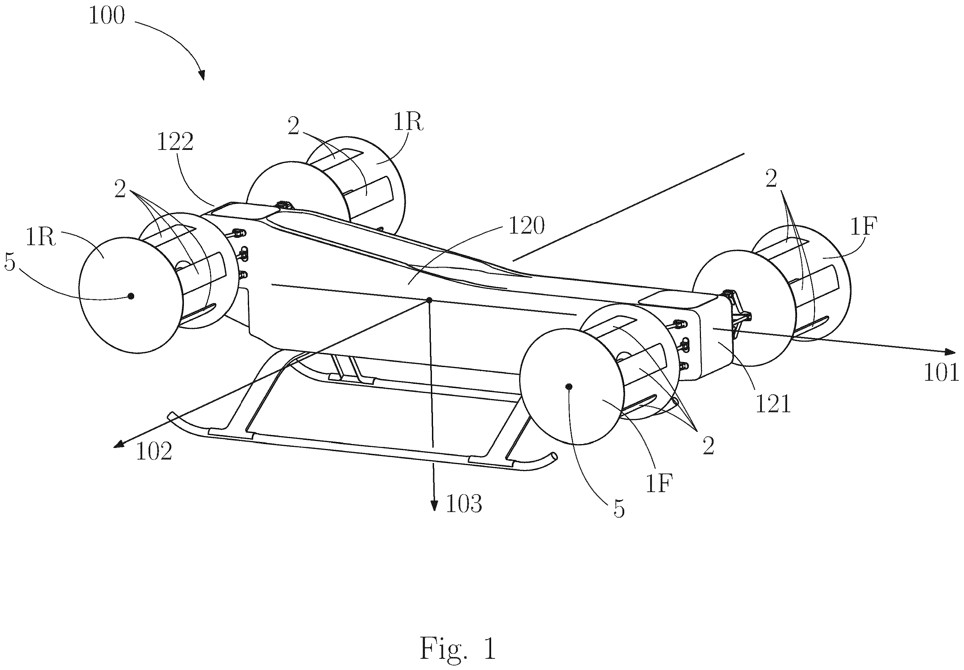

Figur 1 zeigt eine perspektivische Ansicht eines Fluggeräts 100 gemäß dem ersten Aspekt der Erfindung mit einem Fluggerätekörper 120 und mehreren Antriebsvorrichtungen 1F, 1 R. Jede der Antriebsvorrichtungen 1 F, 1R kann mit entsprechenden Halterungs- oder Lagerungseinrichtungen am Fluggerätekörper 120 montiert sein.

Bei dem dargestellten Fluggerät 100 kann es sich beispielsweise um ein Luftfahrzeug, ein bemanntes Fluggerät, eine Drohne oder um sog. Micro Air Vehicles (MAVs) handeln.

Zur weiteren Beschreibung des Fluggeräts wird ein Koordinatensystem eingeführt, das eine Längsrichtung 101 bzw. Längsachse, eine Querrichtung 102 bzw. Querachse und eine Vertikalrichtung 103 bzw. Vertikalachse definiert. Das Koordinatensystem soll fest mit dem Fluggerät 100 verankert sein. Die Bezugsrichtungen 101, 102, 103 bzw. -achsen werden wie folgt definiert: Die Längsrichtung 101 entspricht der Richtung vom Heck 122 zur Nase 121 des Fluggeräts 100. In dem in Fig. 1 gezeigten Ausführungsbeispiel liegt die Längsrichtung 101 somit in einer horizontalen Ebene (parallel zum Erdboden, wenn das Fluggerät 100 auf dem Erdboden ruht), und erstreckt sich von dem Heck 122 (also dem hinteren Teil) des Fluggeräts 100 bis zum Bug 121, oder auch Nase 121, (also dem vorderen Teil) des Fluggeräts 100. Die Vertikalrichtung 103 bzw. -achse entspricht der Richtung der Erdanziehungskraft, wenn das Fluggerät 100 am (ebenen) Boden ruht. Anders ausgedrückt: die Vertikalrichtung 103 steht senkrecht auf der vorstehend genannten horizontalen Ebene, die die Längsrichtung 101 umfasst. Die Querrichtung 102 bzw. -achse steht senkrecht sowohl auf der Längsrichtung 101 als auch auf der Vertikalrichtung 103. Anders ausgedrückt: die Querrichtung 102 liegt in der vorstehend genannten horizontalen Ebene, die die Längsrichtung 101 umfasst, und steht senkrecht auf der Längsrichtung 101.

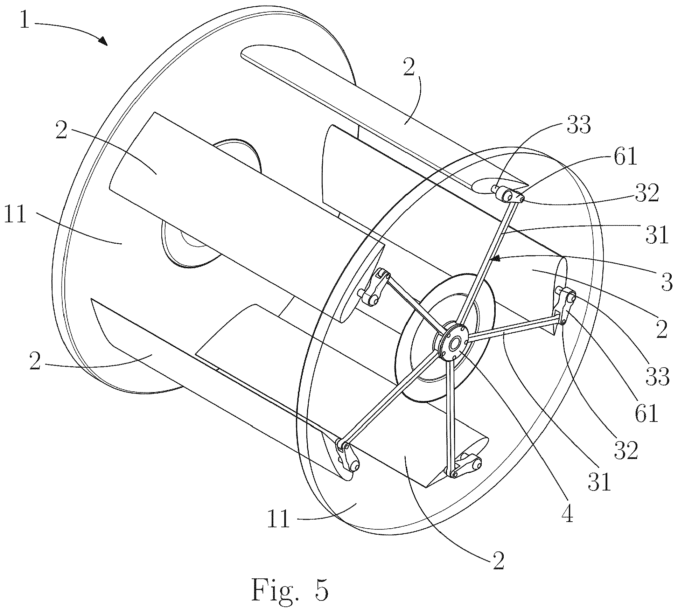

Das gezeigte Fluggerät 100 weist vier Antriebsvorrichtungen 1F, 1R auf. Bei den gezeigten Antriebsvorrichtungen 1F, 1R handelt es sich um Cyclogyro-Rotoren. Das in Fig. 1 gezeigte Fluggerät 100 kann daher auch als Cyclogyro bezeichnet werden. Die Antriebsvorrichtungen werden im Zusammenhang mit Figur 5 näher beschrieben. Jede dieser Antriebsvorrichtungen 1F, 1R ist um eine ihr zugeordnete Drehachse 5 drehbar gelagert. Jede Antriebsvorrichtung 1F, 1R umfasst mehrere Rotorblätter 2, die um ihre Längsachse schwenkbar gelagert sind. Damit kann der Neigungswinkel der Rotorblätter 2 während der Rotation der Antriebsvorrichtung 1F, 1R variiert werden. Durch die Steuerung der Rotationsgeschwindigkeit (im Folgenden auch Drehgeschwindigkeit genannt) der Antriebsvorrichtungen 1F, 1R sowie der Steuerung der Neigungswinkel der Rotorblätter 2 können der Betrag sowie die Richtung der erzeugten Schubkraft bzw. des diese beschreibenden Schubvektors variiert werden.

In Fig. 1 ist zu sehen, dass die zwei der vier Antriebsvorrichtungen 1F im vorderen (Bug-)Bereich des Fluggeräts 100 angeordnet sind, zwei weitere Antriebsvorrichtungen 1R im hinteren (Heck-)Bereich des Fluggeräts 100. Der vordere und hintere Bereich des Fluggeräts sind wie folgt definiert: Die Gesamtlänge des Fluggeräts wird in Längsrichtung 101 gemessen; dem vordersten Teil des Fluggeräts (also der Nase 121 des Fluggeräts 100) wird die relative Längskoordinate 0 zugeordnet, dem hintersten Teil 122 des Fluggeräts 100 die relative Längskoordinate 100 %. In dieser Konvention ist der vordere Teil bzw. Bereich dadurch bestimmt, dass er dem (Längs-)Bereich von 0 bis 40 % der Gesamtlänge des Fluggeräts entspricht, der hintere Teil bzw. Bereich, dass er dem (Längs-)Bereich von 60 % bis 100 % der Gesamtlänge des Fluggeräts entspricht.

Die beiden Antriebsvorrichtungen 1F im vorderen Bereich liegen auf einer gemeinsamen Geraden, die parallel zur Querrichtung 102 bzw. -achse verläuft; ebenso liegen die beiden Antriebsvorrichtungen 1R im hinteren Bereich auf einer gemeinsamen Geraden, die parallel zur Querrichtung 102 bzw. -achse verläuft. Anzumerken ist, dass es sich bei den genannten Geraden nicht zwingend um eine gemeinsame Drehachse zu handeln braucht, an die die Antriebsvorrichtungen (starr) gekoppelt sind. Jede Antriebsvorrichtung 1F, 1R kann über eine eigene ihr zugeordnete Drehachse 5 rotieren, und es ist auch möglich, dass jede der Antriebsvorrichtungen 1 individuell angesteuert werden kann, insbesondere, um deren Drehgeschwindigkeit separat zu steuern. Des Weiteren ist es erfindungsgemäß nicht erforderlich, dass sämtliche Antriebsvorrichtungen 1F, 1R in derselben horizontalen Ebene liegen. Wie in Fig. 1 gezeigt, kann es zweckmäßig sein, wenn die beiden Antriebsvorrichtungen 1R im hinteren Bereich des Fluggeräts bezüglich der beiden Antriebsvorrichtungen 1F im vorderen Bereich erhöht angeordnet sind. Dies hat den Vorteil, dass die Antriebsvorrichtungen 1R im hinteren Bereich eine bessere Anströmung erhalten und weniger von den von den Antriebsvorrichtungen 1F im vorderen Bereich verursachten Luftverwirbelungen und Turbulenzen beeinträchtigt werden.

Die den Antriebsvorrichtungen 1F, 1R zugeordneten Drehachsen 5 sind in dem Ausführungsbeispiel von Fig. 1 parallel zur Querrichtung 102 ausgerichtet. Erfindungsgemäß ist es aber nicht zwingend erforderlich, dass sämtliche Drehachsen 5 parallel zueinander verlaufen. Erfindungsgemäß ist es bereits, wenn jede der zugeordneten Drehachsen 5 im Wesentlichen in Querrichtung 102 des Fluggerätekörpers 120 ausgerichtet ist. Erfindungsgemäß ist eine Drehachse 5 im Wesentlichen in Querrichtung 102 des Fluggerätekörpers 120 ausgerichtet, wenn der Winkel, der zwischen der Drehachse 5, und einer Achse, die in Querrichtung verläuft und die Drehachse 5 schneidet, eingeschlossen ist, geringer als 45°, bevorzugt geringer als 30°, besonders bevorzugt geringer als 15°, ist. Die Bezeichnung "im Wesentlichen in Querrichtung ausgerichtet" schließt es somit nicht aus, dass die Drehachsen 5 auch exakt parallel zueinander sind.

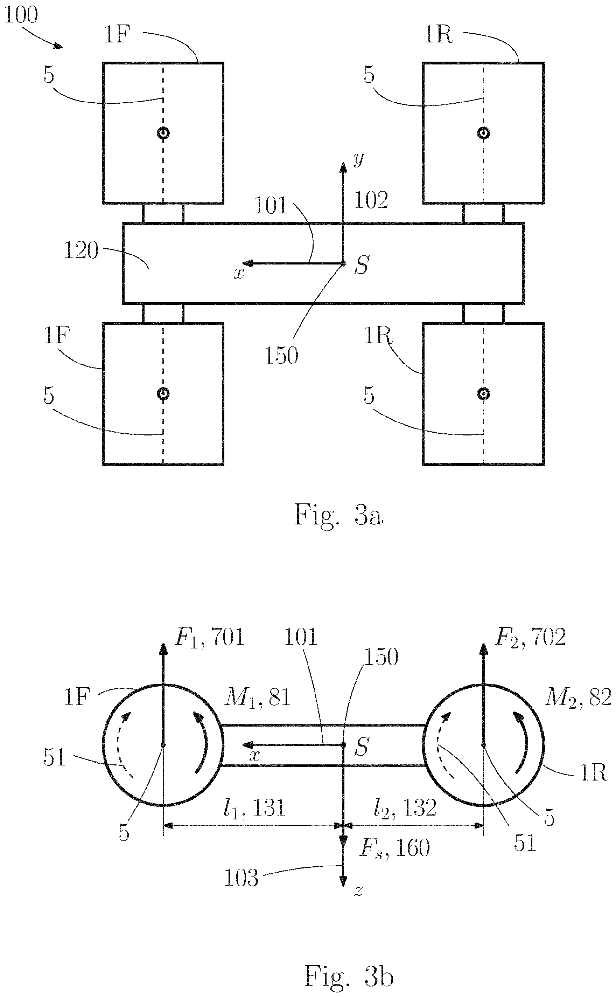

Das erfindungsgemäße Fluggerät 100 ist so ausgelegt, dass es einen Schwebeflug durchführen kann, indem jede der vier gezeigten Antriebsvorrichtungen 1F, 1R in dieselbe Drehrichtung um die jeweils zugeordnete Drehachse 5 dreht. Die konstruktiven Einschränkungen, die sich daraus für das Fluggerät 100 ergeben, werden im Zusammenhang mit den weiteren Figuren, insbesondere Figuren 3a und 3b, erläutert.

Im verallgemeinerten Fall, dass die Drehachsen 5 im Wesentlichen in Querrichtung 102 des Fluggerätekörpers 120 ausgerichtet sind, wird erfindungsgemäß gefordert, dass jede der Antriebsvorrichtungen 1 im Wesentlichen in dieselbe Drehrichtung um die jeweils ihr zugeordnete Drehachse 5 dreht. Wie einleitend bereits ausführlich dargetan, ist dies erfüllt, wenn das Skalarprodukt vom Vektor der Winkelgeschwindigkeit einer bestimmten Antriebsvorrichtung 1F, 1R und einem fest vorgegebenen, aber beliebigen in Querrichtung 102 zeigenden Vektor für alle Antriebsvorrichtungen 1R, 1F dasselbe Vorzeichen besitzt.

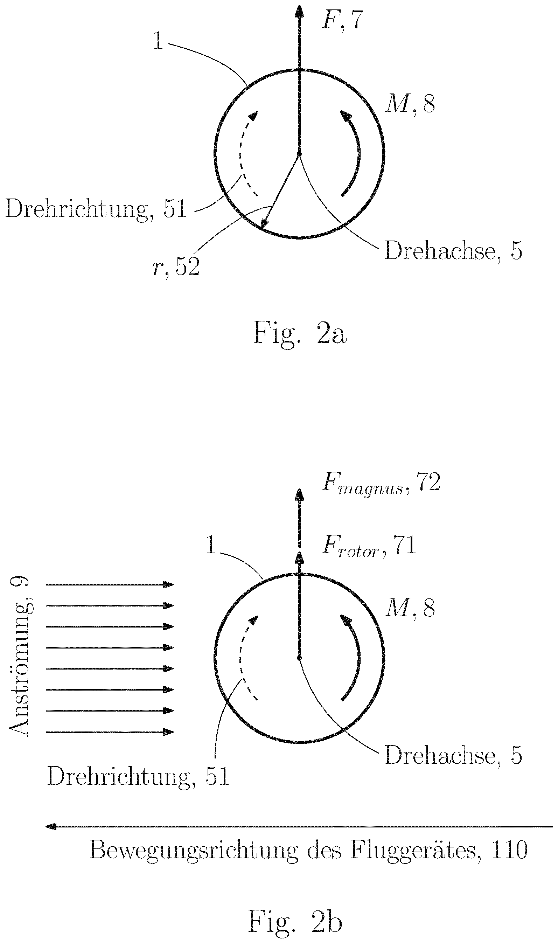

Figur 2a veranschaulicht die Kraft 7 und das Drehmoment 8, die auf eine mit einer bestimmten Rotationsgeschwindigkeit um eine Drehachse 5 sich drehende Antriebsvorrichtung 1 wirken. In Fig. 2a ist nur die Frontansicht der Antriebsvorrichtung 1 dargestellt, und zwar schematisch. In dem gezeigten Fall wird angenommen, dass durch die Antriebsvorrichtung 1 keine Luft angeströmt wird. Die Antriebsvorrichtung 1 rotiert in dem gezeigten Fall im Uhrzeigersinn. Der Vektor der Winkelgeschwindigkeit, der dieser Rotation entspricht, zeigt somit in die Blattebene hinein (gemäß der Rechte-Hand-Regel).

Der Schubvektor *F,* 7, der auf die Antriebsvorrichtung 1 wirkt, steht senkrecht zur Drehachse 5 der Antriebsvorrichtung 1. Werden Cyclogyro-Rotoren als Antriebsvorrichtungen 1 verwendet, wird der Schubvektor *F,* 7 durch die periodische Verstellung der Rotorblätter der Cyclogyro-Rotoren erzeugt. Mit Hilfe einer Offset-Vorrichtung des Cyclogyro-Rotors kann die periodische Rotorblatt-Verstellung verändert und somit kann der Schubvektor in der gesamten Ebene, welche normal zur Drehachse 5 des Cyclogyro-Rotors steht, gedreht und der Betrag des Schubvektors verändert werden. Zweckmäßigerweise wird dazu eine Schubvektorsteuerung eingesetzt.

Zusätzlich zum Schubvektor *F,* 7 erzeugt die Antriebsvorrichtung 1 ein Drehmoment *M,* 8 um die Drehachse 5 entgegen der Drehrichtung 51. Dieses Drehmoment *M,* 8 um die Drehachse 5 resultiert aus den Luftkräften (Auftriebs- und Widerstandskräfte), bzw. deren tangentialen Komponenten, der Antriebsvorrichtung 1; im Falle eines Cyclogyro-Rotors sind die Luftkräfte primär auf die rotierenden Rotorblätter zurückzuführen. Um eine konstante Drehgeschwindigkeit aufrechtzuerhalten, muss die Antriebsvorrichtung 1 somit ein (Antriebs-)Drehmoment erzeugen, das dem aufgrund der Luftkräfte resultierenden Drehmoment entgegenwirkt. Damit die Antriebsvorrichtung 1 allerdings ein solches (Antriebs-)Drehmoment auch während der Flugphase erzeugen kann, ist ein weiteres Drehmoment *M,* 8 erforderlich, das der Fluggerätekörper (gemäß dem Prinzip *actio = reactio)* aufbringen muss, um die Antriebsvorrichtung 1 in der Luft "abzustützen". Dieses letztgenannte Drehmoment *M,* 8 ist, um eine konstante Rotationsgeschwindigkeit gegen die Luftkräfte aufrechtzuerhalten, (bei Vernachlässigung dissipativer Effekte) betragsmäßig etwa gleich groß wie das durch die Luftkräfte erzeugte Drehmoment, und zeigt auch in dieselbe Richtung wie letzteres. Da das durch die Luftkräfte erzeugte Drehmoment der Drehrichtung 51 der Antriebsvorrichtung 1 entgegenwirkt, wirkt auch das vom Fluggerätekörper aufgebrachte Drehmoment *M,* 8 der Drehrichtung 51 der Antriebsvorrichtung 1 entgegen. Unter der Annahme, dass das Drehmoment durch die Luftkräfte und jenes der Antriebsvorrichtung im Wesentlichen betragsmäßig gleich, aber entgegengesetzt gerichtet sind, bleibt aufgrund der Rotation der Antriebsvorrichtung 1 als Netto-Drehmoment das vom Fluggerätekörper aufgebrachte Drehmoment **M,** 8 übrig.

Dieses Drehmoment **M,** 8 ist damit gleichbedeutend mit dem Antriebsmoment der Antriebsvorrichtung 1. Das Drehmoment **M,** 8 kann daher direkt mit der Größe des Schubvektors **F,** 7 in Relation gebracht werden. Die bereits im Zusammenhang mit Figur 1 genannten und noch weiter im Hinblick auf Figuren 3a und 3b beschriebenen konstruktiven Einschränkungen des erfindungsgemäßen Fluggeräts können daher unter Verwendung einer mathematisch-physikalischen Relation zwischen dem Drehmoment **M,** 8 und dem Schubvektors **F,** 7 angegeben werden.

Mathematisch (und physikalisch) kann der Zusammenhang zwischen der Schubkraft bzw. entsprechendem Schubvektor **F,** 7 und dem (Antriebs-)Drehmoment **M,** 8 in Anlehnung an allgemeine Gleichungen eines Propellers erklärt werden. Aufgrund der Lage der Rotorblätter zur Drehachse unterscheidet sich ein klassischer Propeller zwar von einem Cyclogyro Rotor, jedoch basiert die Schuberzeugung bei beiden Konzepten auf der gezielten Verdrängung von Luft in eine Richtung durch Rotorblätter. Die im Folgenden verwendeten Gleichungen werden im Anhang zu dieser Beschreibung der Vollständigkeit halber hergeleitet.

Zunächst wird die Leistung betrachtet, die erforderlich ist, um die Luft zu verdrängen. Diese Leistung $P_{Luft}$ kann aus der sog. Strahltheorie (s. Anhang) hergeleitet werden, was zu folgendem Ausdruck führt:

$$P_{Luft} = F * V_a \,, \qquad\qquad (1)$$

wobei $F$ den Betrag des Schubvektors und $V_a$ die totale Strömungsgeschwindigkeit der Luft in der Ebene der Antriebsvorrichtung angeben. Bei der genannten Ebene der Antriebsvorrichtung handelt es sich um eine Ebene, die durch die Drehachse der Antriebsvorrichtung verläuft und senkrecht auf der (An-)Strömungsrichtung der Luft, und somit dem Schubvektor **F,** steht.

Diese Leistung wird über die Antriebsvorrichtung 1 zur Verfügung gestellt. Zunächst gilt für die Leistung $P_{Antrieb}$ der Antriebsvorrichtung allgemein:

$$P_{Antrieb} = M * \omega \,, \qquad\qquad (2)$$

wobei M der Betrag des (Antriebs-)Drehmoments **M,** 8 ist und $\omega$ die Rotationsgeschwindigkeit (Betrag des Vektors der Winkelgeschwindigkeit) der Antriebsvorrichtung 1 ist.

Der Zusammenhang zwischen den beiden Leistungen $P_{Luft}$ und $P_{Antrieb}$ kann über den Wirkungsgrad $\eta$ wie folgt beschrieben werden:

$$P_{Luft} = \eta * P_{Antrieb} \qquad\qquad (3)$$

Der Wirkungsgrad $\eta$ gibt an, wie effektiv die Antriebsleistung $P_{Antrieb}$ in eine Luftströmung umgesetzt wird. Das Verhältnis zwischen der Rotationsgeschwindigkeit $\omega$ und Radius r, 52 der Antriebsvorrichtung 1, einerseits, und der totalen Strömungsgeschwindigkeit $V_a$, andererseits, ist eine dimensionslose Kenngröße der Antriebsvorrichtung 1 und wird hier mit $H$ bezeichnet (bei Propellern wird dies üblicherweise "Fortschrittsgrad" genannt):

$$H = \frac{V_a}{\omega * r} \,. \qquad\qquad (4)$$

Der Zusammenhang zwischen dem (Antriebs-)Drehmoment **M,** 8 und der Schubkraft bzw. dem Schubvektor **F,** 7 kann dann ausgehend von Gleichung (3) und Einsetzen der Formeln (1), (2) und (4) hergestellt werden.

$$M = \frac{H * r}{\eta} * F \,. \qquad\qquad (5)$$

Dieser Zusammenhang ist nur noch von den Kennzahlen H, rund $\eta$ der Antriebsvorrichtung 1 abhängig. Der Zusammenhang zwischen (den Beträgen von) (Antriebs-)Drehmoment **M,** 8 und Schubkraft bzw. Schubvektor **F,** 7 kann daher als eine lineare Funktion mit einem allgemeinen Proportionalitätsfaktor $a$ beschrieben werden:

$$M = a * F \,. \qquad\qquad (6)$$

Dieser Zusammenhang wird später noch weiter verwendet.

Figur 2b zeigt schematisch eine Antriebsvorrichtung 1 im Vorwärtsflug. Die Bewegungsrichtung des Fluggeräts, das die gezeigte Antriebsvorrichtung 1 umfasst, ist mit dem Pfeil 110 angedeutet. Das Drehmoment **M,** 8, das dem Antriebsmoment der Antriebsvorrichtung 1 entspricht, wurde bereits im Zusammenhang mit Figur 2a beschrieben. Es ist gezeigt, dass die Antriebsvorrichtung 1 von außen mit Luft angeströmt wird 9. Durch die Anströmung 9 der Luft ändern sich die aerodynamischen Eigenschaften an der Antriebsvorrichtung 1 und somit -die Eigenschaften des erzeugten Schubvektors. Befindet sich das Fluggerät und somit die Antriebsvorrichtung 1 im Vorwärtsflug, wird die Antriebsvorrichtung 1 von vorne aktiv mit Luft angeströmt.

Wie einleitend bereits ausgeführt, können die veränderten Eigenschaften an der Antriebsvorrichtung 1 näherungsweise mit dem Magnus-Effekt erklärt werden, der besagt, dass ein rotierender runder Körper in einer Strömung eine Querkraft normal zur Strömungsrichtung erfährt.

Die Richtung der Querkraft ist abhängig von der Drehrichtung 51 des Körpers, hier, der Antriebsvorrichtung 1. Durch den Magnus-Effekt wird, zusätzlich zu der im Hinblick auf Figur 2a beschriebenen Schubkraft, deren vertikale Komponente in Figur 2b mit $F_{rotor}$, 71 bezeichnet ist, eine zusätzliche Schubkraft bzw. ein zusätzlicher Beitrag $F_{magnus}$, 72 zum Schubvektor in vertikaler Richtung erzeugt. Dadurch wird die gesamte in vertikale Richtung wirkende Schubkraft, die sog. Auftriebskraft, der Antriebsvorrichtung 1 erhöht. Generell ist aber die Anforderung an die Auftriebskraft eines Fluggerätes weitestgehend konstant und eine Erhöhung wird meist nicht benötigt, da hier im Wesentlichen der Erdanziehungskraft entgegengewirkt werden muss.

Aufgrund des merklich im Vorwärtsflug auftretenden Beitrags $F_{magnus}$, 72 zum Schubvektor kann der durch die Antriebsvorrichtung 1 erzeugte Beitrag $F_{rotor}$, 71 des Schubvektors reduziert werden. Damit verbunden ist eine verringerte Leistungsaufnahme der Antriebsvorrichtung 1. Vereinfacht beschrieben, ersetzt der Magnus-Effekt einen Teil der Schubkraft der Antriebsvorrichtung 1 und reduziert somit den Leistungsbedarf im Vorwärtsflug gegenüber dem Schwebeflug.

Würde die Antriebsvorrichtung 1 jedoch in entgegengesetzter Richtung bei gleichbleibender Anströmung 9 drehen, würde die zusätzliche Querkraft $F_{magnus}$, 72 des Magnus-Effektes entgegen der Schubkraft $F_{rotor}$, 71 wirken und somit die gesamte Schubkraft verringern oder den Leistungsbedarf bei geforderter gleicher Auftriebskraft erhöhen.

Bei den erfindungsgemäßen Fluggeräten wird die beschriebene positive Wirkung des Magnus-Effekts ausgenützt, indem im Schwebeflug und im Vorwärtsflug des Fluggeräts sämtliche Antriebsvorrichtungen in dieselbe Drehrichtung um die zugeordneten Drehachsen drehen. Bei verallgemeinerter Anordnung mit im Wesentlichen in Querrichtung des Fluggerätekörpers ausgerichteten Drehachsen drehen die Antriebsvorrichtungen im Wesentlichen in dieselbe Drehrichtung, wie weiter oben näher ausgeführt.

Drehen die Antriebsvorrichtungen 1 im Wesentlichen in dieselbe Drehrichtung um die jeweils zugeordnete Drehachse, wird der Beitrag zur Auftriebskraft durch die Querkraft $F_{magnus}$, 72 um so größer, je schneller das Fluggerät im Vorwärtsflug fliegt. Das heißt, es ist ausreichend, das Fluggerät im Schwebeflug zu konfigurieren, bei dem die Anströmgeschwindigkeit 9 der Luft in der Regel am geringsten ist, um auch eine stabile Fluglage im Vorwärtsflug des Fluggeräts zu realisieren.

Die Bedingungen für eine stabile Fluglage im Schwebeflug sowie im Vorwärtsflug (Gleichgewicht aller Kräfte und Drehmomente, welche auf das Fluggerät wirken) wurden allgemein bereits einleitend angegeben; nachfolgend werden im Zusammenhang mit Figuren 3a und 3b aus diesen Bedingungen konstruktive Einschränkungen für das Fluggerät gemäß dem ersten Aspekt der Erfindungen hergeleitet.

In Figur 3a ist ein Fluggerät 100 gemäß dem ersten Aspekt der Erfindung in stark schematischer Darstellung in Draufsicht gezeigt. Zu sehen sind neben den bereits im Zusammenhang mit Figur 1 beschriebenen Fluggerätekörper 120, den Antriebsvorrichtungen 1F und 1R, den ihnen jeweils zugeordneten Drehachsen 5 und Längsrichtung 101 und Querrichtung 102 auch der Massenschwerpunkt $S$, 150 des Fluggeräts 100. Die Lage bzw. Positionierung des Massenschwerpunkts $S$, 150 ist für den Ausgleich der durch die in im Wesentlichen gleiche Drehrichtung rotierenden Antriebsvorrichtungen 1 verursachten gleich gerichteten Drehmomente von zentraler Bedeutung. Dies wird näher im Hinblick auf Figur 3b beschrieben.

Figur 3b zeigt das in Figur 3a in Draufsicht dargestellte Fluggerät gemäß dem ersten Aspekt der Erfindung in Seitenansicht und in stark schematischer Darstellung. In dieser Seitenansicht sind nur eine der zwei im vorderen Bereich des Fluggeräts angeordneten Antriebsvorrichtungen 1F und eine der zwei im hinteren Bereich des Fluggeräts angeordneten Antriebsvorrichtungen 1R zu sehen. Des Weiteren sind in Fig. 3b die vier Antriebsvorrichtungen 1F und 1R in einer horizontalen Ebene angeordnet. Die nachfolgenden Ausführungen gelten aber auch für den Fall, dass nicht alle Antriebsvorrichtungen in einer horizontalen Ebene liegen. Die den Antriebsvorrichtungen 1F und 1R zugeordneten Drehachsen sind parallel zueinander und parallel zur Querrichtung (welche in die Blattebene hineinzeigt).

Erfindungsgemäß drehen alle vier Antriebsvorrichtungen 1F, 1R in die gleiche Drehrichtung 51 mit einer bestimmten zugeordneten Rotationsgeschwindigkeit. In Fig. 3b rotieren alle Antriebsvorrichtungen 1F und 1R im Uhrzeigersinn, das bedeutet, alle vier Antriebsvorrichtungen sind bezüglich der in Fig. 3a angegebenen Querrichtung (y-Achse) rechtsdrehend. Anders ausgedrückt: Das Skalarprodukt eines jeden der den Antriebsvorrichtungen 1F, 1R zugeordneten Vektors der Winkelgeschwindigkeit mit dem Einheitsvektor in Querrichtung ist positiv. Losgelöst vom verwendeten Bezugssystem kann man auch sagen, dass die Antriebsvorrichtungen derart rotieren, dass die Fläche der Antriebsvorrichtungen, die im Vorwärtsflug zuerst auf die angeströmte Luft trifft, entgegen der Richtung der Erdanziehungskraft dreht. Bei Drehung der Antriebsvorrichtungen im Uhrzeigersinn wirkt sich der Magnus-Effekt besonders positiv aus. Dies gilt für eine beliebige Anzahl von Antriebsvorrichtungen.

Wie oben schon ausgeführt, wird durch die Rotation der jeder Antriebsvorrichtung 1F, 1R ein Schubvektor erzeugt. In der Notation gemäß Fig. 3b wird der von den beiden im vorderen Bereich angeordneten Antriebsvorrichtungen 1F gemeinsam erzeugte Schubvektor mit $F_1$ 701 bezeichnet, der von den beiden im hinteren Bereich angeordneten Antriebsvorrichtungen 1R gemeinsam erzeugte Schubvektor wird mit $F_2$, 702 bezeichnet. Dadurch, dass alle Antriebsvorrichtungen 1F und 1R in dieselbe Drehrichtung 51 rotieren, wirken alle entstehenden (Antriebs-)Drehmomente $M_1$, 81 $M_2$, 82 ebenfalls in die gleiche Richtung, wobei hier $M_1$, 81 das (Antriebs-)Drehmoment beider vorderen Antriebsvorrichtungen 1F bezeichnet, und $M_2$, 82 das (Antriebs-)Drehmoment beider hinteren Antriebsvorrichtungen 1R.

Nun werden Impuls- und Drallsatz um den Massenschwerpunkt $S$, 150 des Fluggeräts aufgestellt, wobei im dargestellten Fall nur der Impulssatz in Vertikalrichtung 103 (z-Achse) und der Drallsatz um die Querrichtung (y-Achse) relevant sind, da nur hier Kräfte bzw. Drehmomente wirken.

Die Bedingungen für einen stabilen Schwebeflug lauten dann:

$$\sum F_z = F_s - F_1 - F_2 = 0 \qquad (7)$$

$$\sum M_{s,y} = F_1 * l_1 - F_2 * l_2 - M_1 - M_2 = 0. \qquad (8)$$

Die Schubvektoren $F_1$ und $F_2$ können derart eingestellt werden, um die beiden Gleichgewichtsbedingungen zu erfüllen. Zweckmäßigerweise werden die Schubvektoren durch die Schubvektorsteuerung eingestellt. $l_1$, 131 und $l_2$, 132 geben, bezogen auf die Längsrichtung, den Abstand des Schwerpunkts $S$, 150 von den Antriebsvorrichtungen 1F im vorderen Bereich bzw. 1R im hinteren Bereich an. $F_S$, 160 bezeichnet die Gewichtskraft des gesamten Fluggeräts.

Es ist aber auch möglich, die beiden Gleichgewichtsbedingungen zu verwenden, um den Massenschwerpunkt des Fluggeräts derart zu bestimmen, dass die besagten Bedingungen für den Schwebeflug bei bestimmten vorgegebenen Schubvektoren $F_1$ und $F_2$ erfüllt werden.

Die in Fig. 3b gezeigten Drehmomente $M_1$, 81 und $M_2$, 82 entsprechen den Antriebsmomenten der zwei Antriebsvorrichtungen 1F bzw. der zwei Antriebsvorrichtungen 1R. Zwischen den Beträgen der Drehmomente $M_1$, 81 und $M_2$, 82 und den Beträgen der Schubvektoren $F_1$, 701 bzw. $F_2$, 702 der entsprechenden Antriebsvorrichtungen 1F bzw. 1R besteht ein mathematisch-physikalischer Zusammenhang. Dieser wird durch die oben angegebene Gleichung (6) bestimmt. Das heißt, die Beträge der Drehmomente $M_1$, 81 und $M_2$, 82 sind proportional zu den erzeugten Beträgen der Schubvektoren $F_1$, 701 bzw. $F_2$, 702. Die Drehmomente können somit nicht frei gesteuert werden.

Wie oben im Zusammenhang mit Gleichung (6) ausgeführt, ist der Proportionalitätsfaktor $a$ einer jeden Antriebsvorrichtung im Wesentlichen abhängig von der Effizienz der Antriebsvorrichtung, deren Winkelgeschwindigkeit und weiteren Kennzahlen der Antriebsvorrichtung.

Jede Antriebsvorrichtung kann einen anderen Proportionalitätsfaktor $a$ aufweisen. Allerdings nehmen die Werte von $a$ von verschiedenen Antriebsvorrichtungen gleicher Bauart bzw. Baugröße typischerweise die gleiche Größenordnung an. Zweckmäßig sind sie im Wesentlichen identisch.

Gemäß Gleichung (6) können die Beträge $M_1$, $M_2$ der Drehmomente $M_1$, 81 bzw. $M_2$, 82 geschrieben werden als

$$M_i = a_i * F_i, \quad i \in \{1,2\}.$$

Daraus ergibt sich die Drehmomentengleichung (8) zu

$$\sum M_{s,y} = F_1 * l_1 - F_2 * l_2 - F_1 * a_1 - F_2 * a_2 = 0.$$

Diese Gleichung kann nun in ein Verhältnis der Beträge $F_1$ und $F_2$ der beiden Schubvektoren $F_1$, 701 bzw. $F_2$, 702 *umgeformt* werden:

$$\frac{F_1}{F_2} = \frac{(l_2 + a_2)}{(l_1 - a_1)}. \qquad (9)$$

Gleichung (9) kann als Konfigurationsformel für das Fluggerät dienen. Die Gleichung (9) enthält zunächst drei frei wählbare Größen (aus der Menge von $F_1$, $F_2$, $l_1$, $l_2$), allerdings ist in einer stabilen Fluglage noch Gleichung (7) zu beachten, weshalb nur zwei der vorstehend genannten vier Größen frei gewählt werden können.

Es gibt daher mehrere Möglichkeiten, die Gleichungen (7) und (9) zu erfüllen.

(i) In einer ersten Fallgestaltung kann gefordert werden, dass das Fluggerät symmetrisch ausgelegt ist. Das heißt, die vorderen Drehachsen 5, also die Drehachsen der im vorderen Bereich des Fluggeräts angeordneten Antriebsvorrichtungen 1F, und die hinteren Drehachsen 5, also die Drehachsen der im hinteren Bereich des Fluggeräts angeordneten Antriebsvorrichtungen 1R, sind vom Massenschwerpunkt $S$, 150 gleich weit entfernt. Anders ausgedrückt, der Massenschwerpunkt $S$, 150 befindet sich bezüglich der Längsrichtung in der Mitte zwischen den vorderen und hinteren Drehachsen 5. In diesem Fall ist $l_1 = l_2$. Dann ergibt sich aus Gleichung (9) und wegen $\frac{(l_1+a_2)}{(l_1-a_1)} > 1$, dass die vorderen Antriebsvorrichtungen 1F mehr Schub erzeugen müssen als die hinteren Antriebsvorrichtungen 1R, also ist $F_1 > F_2$. Somit müssen die vorderen Antriebsvorrichtungen 1F größer ausgelegt werden als die hinteren Antriebsvorrichtungen 1R.

Bei dieser Fallgestaltung wird der Massenschwerpunkt $S$, 150 daher tendenziell nach vorne wandern, was zur Folge hat, dass $l_1 < l_2$ wird, und die erforderlichen Schubvektoren $F_1$ und $F_2$ der Antriebsvorrichtungen 1F bzw. 1R weiter ansteigen.

(ii) In einer zweiten Fallgestaltung sind Besonders bevorzugt die Antriebsvorrichtungen 1F und 1R konstruktiv identisch ausgestaltet. Das heißt, sie sind baugleich und besitzen beispielsweise die gleiche Größe, die gleiche Spannweite, die gleiche Anzahl von Rotorblättern, den gleichen Durchmesser und/oder erzeugen ähnliche oder gleiche (maximale) Schubkräfte / Schubvektoren. In diesem Fall ist also $F_1 = F_2$ oder $F_1 \approx F_2$. Mit $F_1 = F_2 \equiv F$ folgt aus Gleichung (7) zunächst $F = F_S/2$. Aus Gleichung (9) ergibt sich dann

$$l_1 - a_1 = l_2 + a_2 \, .$$

Wenn der Abstand in Längsrichtung zwischen der vorderen Antriebsvorrichtungen 1F und hinteren Antriebsvorrichtungen 1R $l = l_1 + l_2$ beträgt, dann ergibt sich aus der letzten Gleichung:

$$l_1 = \frac{l}{2} + \frac{a_1+a_2}{2} \, , \qquad\qquad (10)$$

$$l_2 = \frac{l}{2} - \frac{a_1+a_2}{2} \, . \qquad\qquad (11)$$

Man erkannt, dass der Massenschwerpunkt $S$, 150 des Fluggeräts in Längsrichtung von der Mitte $l/2$ zwischen den vorderen Drehachsen 5 der vorderen Antriebsvorrichtungen 1F und den hinteren Drehachsen 5 der hinteren Antriebsvorrichtungen 1R in Richtung der hinteren Drehachsen 5 der hinteren Antriebsvorrichtungen 1R verschoben ist, und zwar um $(a_1 + a_2)/2$. Typischerweise gilt in diesem Fall $a_1 = a_2 \equiv a$.

Wird nun ein Fluggerät mit konstruktiv identischen, gleich großen Antriebsvorrichtungen 1F und 1R und somit annähernd gleich großen Schubkräften / Schubvektoren $F_1$, 701 bzw. $F_2$, 702 pro Paar von Antriebsvorrichtungen 1F bzw. 1R konfiguriert, kann der Massenschwerpunkt $S$, 150 also optimalerweise so positioniert werden, dass die von den Antriebsvorrichtungen erzeugten Drehmomente $M_1$, 81 bzw. $M_2$, 82 rein durch die Lage des Massenschwerpunktes $S$, 150 ausgeglichen werden. Die besagte optimale Position ist durch Gleichungen (10) und (11) bestimmt.

Hier und im Folgenden muss beachtet werden, dass für die Betrachtungen lediglich die Position der Antriebsvorrichtungen und des Massenschwerpunktes in Längsrichtung 101 eine Rolle spielt. Die Lagerung bzw. Positionierung von Antriebsvorrichtungen und Massenschwerpunkt bezüglich der Querrichtung und Vertikalrichtung 103 ist hier nicht relevant und liegt im Ermessen des Fachmanns. Eine möglichst symmetrische Lagerung bzw. Positionierung in den zwei letztgenannten Richtungen ist jedoch vorzugswürdig.

(iii) Erfindungsgemäß ist es auch möglich, dass Aspekte der ersten Fallgestaltung (i) und der zweiten Fallgestaltung (ii) miteinander kombiniert werden. Das bedeutet, der Massenschwerpunkt $S$, 150 des Fluggeräts kann aus der Mitte zwischen den vorderen und hinteren Drehachsen der Antriebsvorrichtungen 1F bzw. 1R derart verschoben werden, dass die Bedingungen (7) und (8) für einen stabilen Schwebeflug bei bestimmten vorgegebenen, auch unterschiedlichen, Schubvektoren / Schubkräften von einzelnen der Antriebsvorrichtungen erfüllt sind.

Für praktische Anwendungen ist es nicht immer möglich, die Massen in einem Fluggerät so zu platzieren, dass der Gesamtmassenschwerpunkt $S$, 150 exakt an der in den Fallgestaltungen (i), (ii) oder (iii) beschriebenen vorgegebenen optimalen Position positioniert werden kann; so ist etwa für die Fallgestaltung (i) $l_1 = l_2$; für die Fallgestaltung (ii) sind $l_1$ und $l_2$ gegeben durch Gleichungen (10) und (11). Daher wird nachfolgend ein Bereich definiert, in welchem der Massenschwerpunkt $S$, 150 liegen kann, sodass es noch möglich ist, den Drehmomentenausgleich mit den Schubkräften

/ Schubvektoren $F_1$, 701 bzw. $F_2$, 702 der Paare von Antriebsvorrichtungen 1F bzw. 1R zu unterstützen. Dazu wird angenommen, dass ein Paar / von Antriebsvorrichtungen eine maximal zulässige (i.d.R. vorgegebene) Schubkraft / einen maximal zulässigen Schubvektor von $F_{i,max}$ erzeugen kann. Dabei wird angenommen, dass $F_{i,max}$ größer oder gleich den der optimalen Konfiguration entsprechenden Schubkräften $F_{i,opt}$ sind. Dies liegt daran, dass ein Fluggerät mindestens die Schubkräfte $F_{i,opt}$ benötigt, um in einem stabilen Schwebeflug zu verharren; im bevorzugten Fall bringt jedes Paar von Antriebsvorrichtungen noch einen Schubüberschuss auf, der unter anderem für die Abweichung der Lage des Schwerpunkts $S$, 150 von der optimalen Lage genutzt werden kann. $F_{i,max}$ ist die maximal von der Schubvektorsteuerung zulässige Schubkraft einer Antriebsvorrichtung, die somit, immer größer oder gleich der Schubkraft für die optimale Auslegung $F_{i,opt}$ sein muss.

Unter Berücksichtigung des Impulssatzes gemäß Gleichung (7) ergibt sich:

$$F_{1,opt} \leq F_{1,max} \quad \Rightarrow \quad F_{2,opt} \geq F_{2,min} \equiv F_s - F_{1,max}.$$

Damit lässt sich ein maximal zulässiges Schubvektorverhältnis definieren:

$$R_{max} = \frac{F_{1,max}}{F_{2,min}}.$$

Und entsprechend:

$$F_{2,opt} \leq F_{2,max} \quad \Rightarrow \quad F_{1,opt} \geq F_{1,min} \equiv F_s - F_{2,max}$$

und damit ein minimal zulässiges Schubvektorenverhältnis von

$$R_{min} = \frac{F_{1,min}}{F_{2,max}}.$$

Diese Schubvektorverhältnisse $F_1/F_2$ werden auch durch Gleichung (9) beschrieben; unter Verwendung der letzteren lassen sich der maximal zulässige Abstand in Längsrichtung des Massenschwerpunkts $S$, 150 von den vorderen Drehachsen 5 zu

$$l_{1max} = \frac{a_1 + a_2}{2} + \frac{l}{R_{min} + 1}$$

und der minimal zulässige Abstand in Längsrichtung des Massenschwerpunkts $S$, 150 von den vorderen Drehachsen 5 zu

$$l_{1min} = \frac{a_1 + a_2}{2} + \frac{l}{R_{max} + 1}$$

berechnen.

Liegt der Massenschwerpunkt $S$, 150 außerhalb des Bereiches

$$l_{1min} \leq l_1 \leq l_{1max}, \tag{12}$$

ist es nicht mehr möglich, die Abweichung des Massenschwerpunktes $S$, 150 von der optimalen Position gemäß Gleichung (10) durch die Schubkräfte $F_1$, 701 bzw. $F_2$, 702 der Antriebsvorrichtungen 1F bzw. 1R auszugleichen.

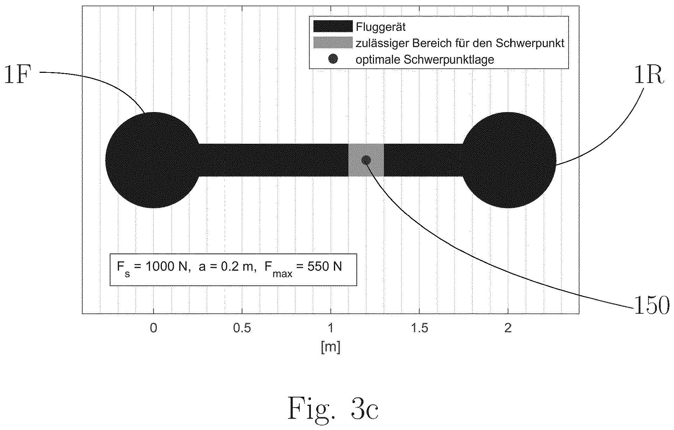

Figur 3c dient der Veranschaulichung des vorstehend beschriebenen Bereichs, in dem sich der Massenschwerpunkt $S$, 150 des Fluggeräts zweckmäßigerweise zur Umsetzung der Erfindung gemäß dem ersten Aspekt befinden kann. Fig. 3c zeigt schematisch ein Fluggerät mit Antriebsvorrichtungen 1F, 1R, die entlang von zwei Geraden, die jeweils parallel zur Querrichtung des Fluggeräts verlaufen, angeordnet sind. Zweckmäßig umfasst das Fluggerät vier Antriebsvorrichtungen 1F, 1R, von denen zwei 1F im vorderen Bereich und zwei 1R im hinteren Bereich angeordnet sind, wie schon im Zusammenhang mit Figuren 3a und 3b beschrieben. Es wird weiter angenommen, dass die Antriebsvorrichtungen 1F, 1R konstruktiv identisch ausgestaltet sind (wie in Fallgestaltung (ii)), hier insbesondere: $a_1 = a_2 \equiv a$.

Zuerst wird weiter angenommen, dass der Drehmomentenausgleich rein über die Lage des Massenschwerpunktes $S$, 150 realisiert werden soll, wodurch

$$F_{1,opt} = F_{2,opt} = F_{opt} \quad \Rightarrow \quad M_{1,opt} = M_{2,opt} = M_{opt}$$

gilt. Für das hier betrachtet Ausführungsbeispiel des Fluggeräts wird eine durch eine entsprechende Gesamtmasse erzeugte Gesamt-Gewichtskraft von

$$F_s = 1000 \ N \ ,$$

angesetzt; die Kennzahl / der Proportionalitätsfaktor ist typischerweise

$$a = 0,2 \ m;$$

der Abstand der Antriebsvorrichtungen in Längsrichtung wird als

$$l = l_1 + l_2 = 2 \ m$$

definiert.

Auf Basis dieser Vorgaben ergibt sich aus Gleichungen (10) und (11) eine optimale Massenschwerpunktlage von

$$R_{opt} = 1 = \frac{F_{1,opt}}{F_{2,opt}} = \frac{l_{2,opt} + a}{l_{1,opt} - a}$$

$$\Rightarrow l_{1,opt} = \frac{l}{2} + a = 1,2 \ m$$

$$\Rightarrow l_{2,opt} = \frac{l}{2} - a = 0,8 \ m \ .$$

Ist es nicht möglich, den Gesamtmassenschwerpunkt S, 150 des Fluggerätes auf die Position $l_{1,opt}$ = 1,2 m zu legen, wird nun ein Bereich definiert, in welchem sich die Lage des Massenschwerpunktes $S$, 150 befinden kann, sodass der Drehmomentenausgleich von den Schubkräften / Schubvektoren der Antriebsvorrichtungen 1F, 1R kompensiert werden kann. Dazu wird die maximal zulässige Schubkraft, die von sämtlichen entlang einer Geraden angeordneten Antriebsvorrichtungen erzeugt werden kann, die zweckmäßig von der Schubvektorsteuerung gesteuert wird, als

$$F_{i,max} = 550 \ N$$

definiert. Durch diese Vorgabe lassen sich das maximal und minimal zulässige Schubvektorverhältnis

$$R_{max} = \frac{11}{9} \quad \text{und} \quad R_{min} = \frac{9}{11}$$

und der Bereich für die Lage des Massenschwerpunktes gemäß Gleichung (12)

$$l_{1_{max}} = 1,3 \ m \quad \text{und} \quad l_{1_{min}} = 1,1 \ m$$

$$1,1 \ m \leq l_1 \leq 1,3 \ m$$

berechnen. Das heißt, in diesem Beispiel befindet sich der Massenschwerpunkt in Längsrichtung zweckmäßigerweise 1,1 bis 1,3 m von den vorderen Drehachsen der entsprechenden vorderen Antriebsvorrichtungen 1F entfernt.

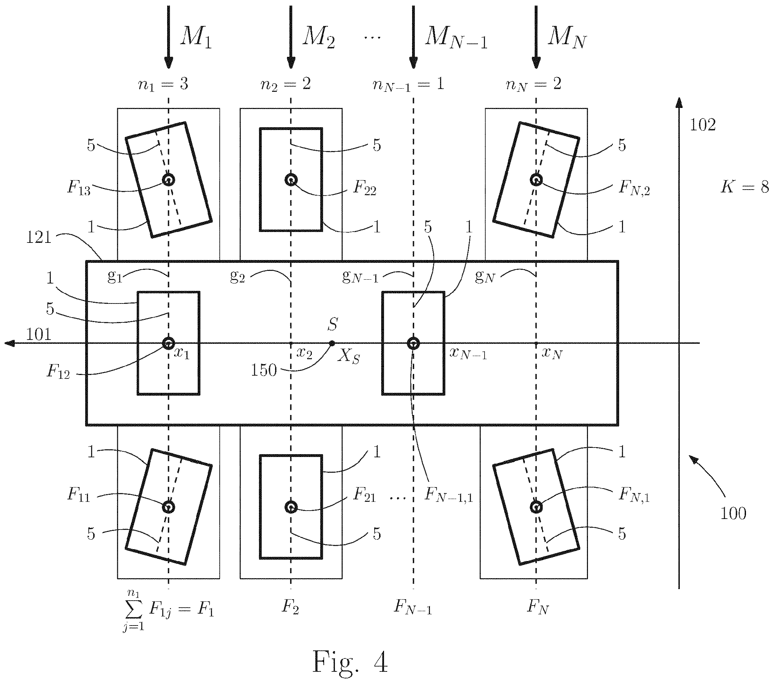

Figur 4 zeigt eine weitere Ausgestaltung eines Fluggeräts 100 gemäß dem ersten Aspekt der Erfindung. Diese Fig. 4 dient vornehmlich zur Verallgemeinerung der im Zusammenhang mit den Figuren 3a, 3b und 3c hergeleiteten Ergebnisse für eine beliebige Anzahl $K > 2$ von Antriebsvorrichtungen 1. Es wurde oben schon darauf hingewiesen, dass es für die erfindungsgemäßen Betrachtungen primär auf die Positionierung der Antriebsvorrichtungen 1 in Längsrichtung ankommt. Die Antriebsvorrichtungen können so etwa in Vertikalrichtung auf unterschiedlichen Höhen positioniert sein.

Die Längsrichtung ist in Fig. 4 als x-Achse 101 ausgezeichnet. Es wird angenommen, dass die *K* Antriebsvorrichtungen des Fluggeräts entlang N> 1 Geraden $g_i$ angeordnet sind. Wie schon weiter oben ausgeführt, handelt es sich bei den besagten Geraden um keine konstruktiven Komponenten des Fluggeräts 100, sondern dienen lediglich dazu, die geometrische Anordnung der Antriebsvorrichtungen 1 zu verdeutlichen. Auf einer bestimmten Geraden $g_i$ (gekennzeichnet durch Index *i, i = 1, ...,N*) sollen $n_i$, *i* = 1, ...,N, Antriebsvorrichtungen 1 angeordnet sein. Damit gilt

$$\sum_{i=1}^{N} n_i = K.$$

Darüber hinaus wird angenommen, dass sämtliche $n_i$ auf einer Geraden $g_i$ mit Index *i* angeordneten Antriebsvorrichtungen 1 eine gesamte Schubkraft / einen gesamten Schubvektor mit Betrag $F_i = \sum_{j=1}^{n_i} F_{ij}$ erzeugen (wobei $F_{ij}$ der von der j-ten auf der Geraden $g_i$ angeordneten Antriebsvorrichtung erzeugte Schubvektor ist); der Betrag des gesamten (Antriebs-)Drehmoments sämtlicher $n_i$ auf der Geraden $g_i$ mit Index *i* angeordneten Antriebsvorrichtungen sei $M_i$. Für jedes , *i* = 1, ..., *N* gilt damit gemäß Gleichung (6) gilt damit der Zusammenhang:

$$M_i = a_i * F_i,$$

wobei für jede Gerade $g_i$ mit Index *i* eine Kennzahl / ein Proportionalitätsfaktor $a_i$ eingeführt wird.

Es wird darauf hingewiesen, dass, obwohl die Geraden $g_i$, entlang denen die Antriebsvorrichtungen 1 angeordnet sind, parallel zur Querrichtung 102 ausgerichtet sind, ist es erfindungsgemäß nicht zwingend erforderlich, dass sämtliche Drehachsen 5 der Antriebsvorrichtungen 1 (mathematisch exakt) parallel zueinander oder zur Querrichtung 102 ausgerichtet sind. Es reicht aus, wenn die Drehachsen 5 der Antriebsvorrichtungen 1, speziell im Schwebeflug, im Wesentlichen in Querrichtung 102 ausgerichtet sind, und zwar in dem einleitend definierten Sinne. In Fig. 4 ist gezeigt, dass die Drehachsen 5 einiger Antriebsvorrichtungen 1 nicht exakt parallel zur Querrichtung 102 ausgerichtet sind. Die Antriebsvorrichtungen 1 sind erfindungsgemäß dennoch auf einer Geraden $g_i$, die parallel zur Querrichtung 102 verläuft, weil deren geometrisches Zentrum im Wesentlichen auf einer solchen Geraden $g_i$, liegen; möglich ist auch, um die Bedingung der Anordnung auf einer parallelen Geraden zu erfüllen, dass die Lagerungspunkte der Antriebsvorrichtungen 1 im Wesentlichen auf einer solchen Geraden $g_i$, liegen.

Jede der Geraden $g_i$ mit Index *i* befinde sich in Längsrichtung 101 (x-Achse) an einer Stelle mit Koordinate $x_i$, *i* = 1, ... , *N*, wobei ohne Beschränkung der Allgemeinheit $x_i$ - $x_{i-1}$ > 0 angenommen wird. Die Längspositionen $x_i$ der Geraden $g_i$ seien fest aber beliebig.

Der Massenschwerpunkt *S*, 150 des Fluggeräts 100 befinde sich bezüglich der Längsrichtung 101 bei der Koordinate $X_S$. Es wird darauf hingewiesen, dass, während im Zusammenhang mit Figuren 3a, 3b, 3c die Abstände $l_1$ und $l_2$ der Geraden vom Massenschwerpunkt betrachtet wurden, hier die Koordinaten bez. der Längsrichtung 101 der Geraden $g_i$ verwendet werden; dies erweist sich hier als zweckmäßiger. Gleichwohl kann der Zusammenhang zwischen Koordinaten der Geraden $g_i$ und deren Abständen $l_i$ vom Massenschwerpunkt *S*, 150 einfach hergestellt werden:

$$l_i = |x_i - X_S|.$$

Mit den eingeführten Notationen lassen sich die Bedingungen für einen stabilen Schwebe- bzw. Vorwärtsflug aus Gleichungen (7) und (8) wie folgt verallgemeinern:

$$\sum F_z = F_s - \sum_{i=1}^{N} F_i = 0 \qquad (13)$$

$$\sum M_{s,y} = \sum_{i=1}^{N} F_i * (x_i - X_S) - \sum_{i=1}^{N} M_i = 0$$

$$\Rightarrow \sum M_{s,y} = \sum_{i=1}^{N} F_i * (x_i - X_S) - \sum_{i=1}^{N} a_i * F_i = 0. \qquad (14)$$

Unter Einsetzung von Gleichung (13) folgt aus Gleichung (14):

$$\sum_{i=1}^{N} F_i(x_i - a_i) = X_S * F_s,$$

also ergibt sich für die Koordinate $X_S$ des Massenschwerpunkts S, 150:

$$X_S = \sum_{i=1}^{N} \frac{F_i}{F_S}(x_i - a_i). \qquad (15)$$

Ein Zwischenergebnis soll hier festgehalten werden: Aus Gleichung (15) lässt sich die Koordinate $X_S$ des Massenschwerpunkts $S$, 150 berechnen, wenn die Schubvektoren $F_i$ vorgegeben werden; allerdings liefert Gleichung (13) noch eine weitere Bedingung, die für eine stabile Fluglage erfüllt sein muss. Deshalb können nicht alle $N$ Schubvektoren $F_i$ beliebig vorgegeben werden, sondern nur $N$ - 1. Das heißt, die Position $X_S$ des Massenschwerpunkts $S$, 150 für eine stabile Fluglage, speziell den Schwebeflug, ist bestimmt, wenn $N$ - 1 Schubvektoren vorgegebenen werden. Die Werte der vorgegebenen Schubvektoren können natürlich auch gleich sein.

Der Abstand bezüglich der Längsrichtung des Massenschwerpunkts $S$, 150 von der vordersten Geraden $g_1$ bzw. der Antriebsvorrichtung, die bezogen auf die Längsrichtung dem Bug 121 bzw. der Nase 121 des Fluggeräts 100 am nächsten ist, ist:

$$x_1 - X_S = x_1 - \sum_{i=1}^{N} \frac{F_i}{F_S}(x_i - a_i).$$

Wir betrachten nun zunächst den Fall, bei dem die auf einer Geraden $g_i$ angeordneten Antriebsvorrichtungen 1 für jede Gerade annähernd gleich große Schubkräften / Schubvektoren $F_i$ erzeugen, also $F_1 \approx F_2 \approx \cdots \approx F_{N-1} \approx F_N \equiv F$. Der Massenschwerpunkt S, 150 wird also optimalerweise so positioniert werden, dass die von den Antriebsvorrichtungen 1 erzeugten Drehmomente $M_i$ rein durch die Lage des Massenschwerpunktes S, 150 ausgeglichen werden. Die besagte optimale Position ist durch Gleichungen (13) und (15) bestimmt. Aus Gleichung (13) folgt

$$F_i = \frac{F_S}{N} \equiv F$$

für alle $i$ = 1, ...,N.
Und damit aus Gleichung (15):

$$X_S = \frac{1}{N}\sum_{i=1}^{N}(x_i - a_i). \qquad (16)$$

In diesem Fall kann zweckmäßigerweise $a_i \equiv a$, $i$ = 1,...,N angenommen werden.
Ein maximal zulässiger Bereich für die (Längs-, x-)Koordinate $X_S$ des Massenschwerpunkts S, 150 kann analog zu den Überlegungen zu Figur 3b auch für den vorstehend beschriebenen allgemeinen Fall ermittelt werden, und zwar unter Verwendung der Gleichungen (13), (14) und (15).
Figur 5 zeigt eine Ausgestaltung der Antriebsvorrichtungen, die in einem erfindungsgemäßen Fluggerät eingesetzt werden können. Jede dieser Antriebsvorrichtungen 1 ist um eine Drehachse drehbar gelagert. Jede Antriebsvorrichtung 1 umfasst mehrere Rotorblätter 2, die um ihre Längsachse schwenkbar gelagert sind. Damit kann der Neigungswinkel der Rotorblätter 2 während der Rotation der Antriebsvorrichtung 1 variiert werden. Durch die Steuerung der Rotationsgeschwindigkeit der Antriebsvorrichtungen 1 sowie der Steuerung der Neigungswinkel der Rotorblätter 2 können der Betrag sowie die Richtung des erzeugten Schubvektors variiert werden.
In Figur 5 ist eine erfindungsgemäße Ausgestaltung einer Antriebsvorrichtung 1 perspektivisch dargestellt. Die Antriebsvorrichtung 1 ist zylinderförmig ausgestaltet. Bei der gezeigten Antriebsvorrichtung 1 handelt es sich um einen Cyclogyro-Rotor. Diese Antriebsvorrichtung 1 umfasst fünf Rotorblätter 2, jeweils einen zugehörigen Pitch-Mechanismus 3, eine Offset-Vorrichtung 4 und eine Scheibe 11. Antriebsvorrichtungen mit einer anderen Anzahl von Rotorblättern sind auch möglich. Die Rotorblätter 2 sind drehbar um eine Drehachse der Antriebsvorrichtung 1 gelagert. Die Offset-Vorrichtung 4 definiert eine exzentrische Lagerungsachse, die exzentrisch bezüglich der Drehachse der Antriebsvorrichtung 1 gelagert ist. In Fig. 5 ist die Offset-Vorrichtung als Offset-Scheibe (englisch "offset disk") dargestellt. Die Offset-Scheibe ist frei drehbar um die exzentrische Lagerungsachse gelagert. Die exzentrische Lagerung der Offset-Scheibe 4 impliziert eine exzentrische Lagerung des Pitch-Mechanismus 3. Durch die exzentrische Lagerung des Pitch-Mechanismus 3 wird eine Veränderung der Stellung der Rotorblätter 2 während einer Umdrehung um die Drehachse der Antriebsvorrichtung 1 bewirkt. Jeder der dargestellten Pitch-Mechanismen 3 umfasst eine Kopplungsvorrichtung 31 und eine Lagerungsvorrichtung 33. Jedes Rotorblatt 2 ist durch die entsprechende Lagerungsvorrichtung 33 schwenkbar gelagert. Das Rotorblatt 2 ist um eine Achse parallel zur Drehachse der Antriebsvorrichtung 1 gelagert. Diese Achse ist die Rotorblatt-Lagerungsachse 33. Die Lagerung des Rotorblatts 2 kann beispielsweise mithilfe eines Lagerungsmittels, wie einem oder mehreren Stiften, sog. Hauptstift (englisch "main pin") erfolgen. Das Lagerungsmittel ist bevorzugt ein Teil der Lagerungsvorrichtung 33. Die Rotorblatt-Lagerungsachse 33 kann durch den Massenschwerpunkt des Rotorblatts 2 verlaufen. Bevorzugt erfolgt jedoch eine Lagerung des Rotorblatts 2 in einem Abstand vom Massenschwerpunkt. Die Kopplungsvorrichtung 31 des Pitch-Mechanismus 3 koppelt das Rotorblatt 2 derart an die Offset-Vorrichtung 4, dass das Rotorblatt 2 eine Pitch-Bewegung ausführt, wenn er sich um die Drehachse der Antriebsvorrichtung 1 dreht, und unter der Voraussetzung, dass die exzentrische Lagerungsachse nicht mit der Drehachse der Antriebsvorrichtung 1 übereinfällt. Ein Endstück der Kopplungsvorrichtung 31 ist in einem Anbindungspunkt an die Offset-Vorrichtung 4 gekoppelt. Das andere Endstück der Kopplungsvorrichtung 31 ist an das Rotorblatt 2 gekoppelt.

Die Offset-Scheibe 4 ist frei drehbar gelagert. Die Drehachse der Offset-Scheibe 4 verläuft vorzugsweise in einem bestimmten Offset-Abstand parallel zur Drehachse der Antriebsvorrichtung 1. Dadurch kommt die exzentrische Lagerung der Offset-Scheibe 4 bez. der Drehachse der Antriebsvorrichtung 1 zustande. Dieser Offset-Abstand kann einstellbar sein. Eine Offset-Vorrichtung 4 mit einstellbarer Exzentrizität kann beispielsweise durch ein Planetengetriebe realisiert werden. Eine Pitch-Bewegung der Rotorblätter 2 ergibt sich dann, wenn der Offset-Abstand nicht Null beträgt.

Die Ankopplung der Kopplungsvorrichtung 31 an das Rotorblatt 2 erfolgt in einem Ankopplungspunkt 32. Dazu kann die Kopplungsvorrichtung 31 ein Kopplungsmittel umfassen. Bei der in Fig. 5 gezeigten Antriebsvorrichtung 1 umfasst die Kopplungsvorrichtung 31 ein Pleuel (englisch "conrod") sowie einen Stift, sog. Pitch-link-Stift. Bei dem Stift handelt es sich um eine konstruktive Ausgestaltung des erfindungsgemäßen Kopplungsmittels. In dem in Fig. 5 gezeigten Ausführungsbeispiel erfolgt die Ankopplung der Kopplungsvorrichtung 31 an das Rotorblatt 2 im Ankopplungspunkt 32 nicht durch direkte Verbindung mit dem Rotorblatt 2, sondern indem ein Verbindungselement 61 verwendet wird. Ein Ende des Verbindungselements 61 ist dabei starr mit dem Rotorblatt 2 verbunden. Diese Anbindung erfolgt bevorzugt im Rotorblatt-Lagerungspunkt. Das andere Ende des Verbindungselements 61 ist an die Kopplungsvorrichtung / Pleuel 31 gekoppelt. In diesem Fall wird die Pitch-Bewegung über das Kopplungsmittel mit Hilfe des Pleuels 31 indirekt über das Verbindungselement 61 in das Rotorblatt 2 eingeleitet.

Eine direkte Ankopplung der Kopplungsvorrichtung 31 an das Rotorblatt 2 ist erfindungsgemäß jedoch auch möglich.

Dadurch, dass die Kopplungsvorrichtung 31 des Pitch-Mechanismus exzentrisch bezüglich der Drehachse der Antriebsvorrichtung 1 gelagert ist, bewegt sich der Ankopplungspunkt 32 relativ zur Rotorblatt-Lagerungsachse 33 auf einem Kreisbogen, wenn das Rotorblatt 2 um die Drehachse der Antriebsvorrichtung 1 rotiert. Dadurch kommt die Pitch-Bewegung des Rotorblatts 2 zustande. Dabei handelt es sich also um eine Pendelbewegung des Rotorblatts 2 um die Rotorblatt-Lagerungsachse 33.

Der Durchmesser der Antriebsvorrichtung 1 entspricht dem doppelten Abstand von Drehachse der Antriebsvorrichtung 1 zu Rotorblatt-Lagerungsachse 33 bzw. -punkt. Dieser Durchmesser ist relevant für die Flügelgeschwindigkeit bei der Rotation und daher relevant für den erzeugten Schub. In beispielhaften erfindungsgemäßen Ausgestaltungen der Antriebsvorrichtung 1 liegt der Durchmesser im Bereich zwischen 150 mm und 2000 mm, bevorzugt zwischen 300 mm und 500 mm, besonders bevorzugt beträgt er 350 mm.

Des Weiteren umfasst die in Fig. 5 gezeigte Antriebsvorrichtung 1 eine Scheibe 11. Diese Scheibe 11 ist derart ausgestaltet, dass sie die Rotorblätter 2 aerodynamisch von den restlichen Komponenten der Antriebsvorrichtung 1 trennt. Eine solche Scheibe 11 ist besonders vorteilhaft für den Fall, dass die Antriebsvorrichtung 1 mit höheren Drehzahlen betrieben wird.

Durch die Länge der Rotorblätter 2 wird die Spannweite der Antriebsvorrichtung 1 definiert. Die Spannweite der Antriebsvorrichtung 1 ist der (longitudinale) Abstand zwischen den beiden Scheiben 11.

Die Spannweite eines der Cyclogyro-Rotoren, die erfindungsgemäß eingesetzt werden können, beträgt zweckmäßig wenige Zentimeter bis zwei Meter, vorzugsweise liegt sie zwischen 350 bis 420 mm. In den erfindungsgemäßen Fluggeräten kommen vorteilhafterweise mehrere Cyclogyro-Rotoren zum Einsatz. Deren Spannweiten weichen bevorzugt um maximal 25%, zweckmäßigerweise um maximal 10% voneinander ab. Deren Durchmesser weichen bevorzugt um maximal 25%, zweckmäßigerweise um maximal 10% voneinander ab.

Die in Fig. 5 gezeigten Rotorblätter 2 weisen ein symmetrisches Profil auf; die Erfindung ist nicht auf Antriebsvorrichtungen mit Rotorblättern mit symmetrischem Profil beschränkt.

Die Antriebsvorrichtung 1 erzeugt Schub bzw. einen Schubvektor aufgrund zweier miteinander gekoppelter Drehbewegungen. Die erste Drehbewegung ist die Rotation der Rotorblätter 2 um die Drehachse der Antriebsvorrichtung 1. Diese erste Drehbewegung führt zu einer Bewegung der Rotorblätter 2 entlang einer Kreisbahn um die Drehachse der Antriebsvorrichtung. Speziell bewegen sich die Rotorblatt-Lagerungsachsen 33 bzw. Rotorblatt-Lagerungspunkte entlang der Kreisbahn. Jede Rotorblatt-Lagerungsachse 33 ist parallel zur Längsachse der Rotorblätter 2. Die Längsachse der Rotorblätter 2 ist parallel zur Drehachse der Antriebsvorrichtung 1. Damit ist die Längsachse der Rotorblätter 2 auch parallel zur Rotorblatt-Lagerungsachse 33. Die Schubrichtung der Antriebsvorrichtung 1 liegt normal zur Drehachse der Antriebsvorrichtung 1. Für eine optimale Schuberzeugung sollen alle Rotorblätter 2 zu jedem Zeitpunkt bestmöglich zur Strömungsrichtung ausgerichtet sein. Damit wird sichergestellt, dass jedes Rotorblatt 2 einen maximalen Beitrag zum gesamten Schub leistet. Während der Drehung der Antriebsvorrichtung 1 um ihre Drehachse wird aufgrund des vorstehend beschriebenen Pitch-Mechanismus die Neigung jedes Rotorblatts 2 laufend geändert. Jedes Rotorblatt 2 vollzieht eine periodische Änderung des Neigungswinkels bzw. eine Pendelbewegung. Dies ist die Pitch-Bewegung. Dabei bewegt sich der Ankopplungspunkt 32 auf einem Kreisbogen um die Rotorblatt-Lagerungsachse 33. Dies ist die zweite Drehbewegung.

Der Betrag und die Richtung der erzeugten Schubkraft bzw. des zugehörigen Schubvektors hängen von der Neigung der Rotorblätter 2 ab. Daher beeinflusst der Abstand der exzentrischen Lagerung der Offset-Vorrichtung 4 bzw. des Pitch-Mechanismus 3 zur Drehachse der Antriebsvorrichtung 1 den Betrag der erzeugten Schubkraft / des erzeugten Schubvektors. Durch die Verschiebung der exzentrischen Lagerung der Offset-Vorrichtung 4 in Umfangsrichtung, also bei konstantem Abstand zur Drehachse der Antriebsvorrichtung 1, wird die Richtung des erzeugten Schubvektors geändert.

Obwohl in Fig. 5 Pitch-Mechanismen 3 nur auf einer Seite der Antriebsvorrichtung 1 gezeigt sind, kann es aus Stabilitätsgründen zweckmäßig sein, auch auf der gegenüberliegenden Seite der Antriebsvorrichtung entsprechende Pitch-Mechanismen anzubringen. Der Pitch-Mechanismus kann beispielsweise auch in der Mitte der Antriebsvorrichtung angebracht werden.

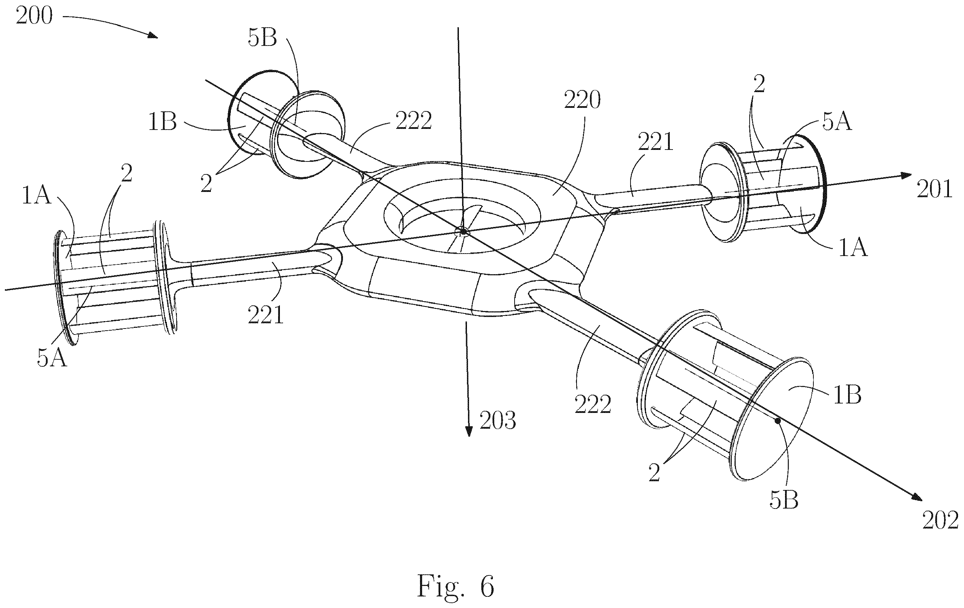

Figur 6 zeigt eine perspektivische Ansicht eines Fluggeräts 200 gemäß dem zweiten Aspekt der Erfindung mit einem Fluggeräterumpf 220 und mehreren Antriebsvorrichtungen 1A und 1B. Zu sehen sind vier Antriebsvorrichtungen 1A und 1B, die um den Fluggeräterumpf 220 herum angeordnet sind. Jede Antriebsvorrichtung 1A und 1B ist über einen Arm 221 bzw. 222 mit dem Fluggeräterumpf 220 verbunden. Jede der Antriebsvorrichtungen 1A und 1B kann mit entsprechenden Halterungs- oder Lagerungseinrichtungen an den Armen 221 bzw. 222 montiert sein. Das Vorhandensein von Armen 221 bzw. 222 ist nicht wesentlich. Die Antriebsvorrichtungen 1A und 1B können auch anderweitig mit dem Fluggeräterumpf 220 gekoppelt sein. Der Fluggerätekörper 220 und die Antriebsvorrichtungen 1A und 1B liegen hier im Wesentlichen in einer Ebene.

Bei dem dargestellten Fluggerät 200 kann es sich beispielsweise um ein Luftfahrzeug, ein bemanntes Fluggerät, eine Drohne oder um sog. Micro Air Vehicles (MAVs) handeln.

Zur weiteren Beschreibung des gezeigten Fluggeräts 200 wird ein Bezugssystem eingeführt, das eine erste Richtung 201, eine zweite Richtung 202 und eine Vertikalrichtung 203 bzw. Vertikalachse definiert. Die Vertikalrichtung 203 bzw. -achse entspricht der Richtung der Erdanziehungskraft, wenn das Fluggerät 200 am Boden ruht. Die Vertikalrichtung 203 steht senkrecht auf der vorstehend genannten Ebene, in der der Fluggeräterumpf 220 und die Antriebsvorrichtungen 1A und 1B liegen. Die erste Richtung 201 und die zweite Richtung 202 bzw. die zugehörigen Achsen liegen in der besagten Ebene und stehen damit jeweils senkrecht zur Vertikalrichtung. Wesentlich für das hier betrachtete Fluggerät 200 des zweiten Aspekts der Erfindung ist, dass die erste Richtung 201 und die zweite Richtung 202 nicht parallel zueinander sind. In dem gezeigten Ausführungsbeispiel stehen die erste Richtung 201 und die zweite Richtung 202 senkrecht aufeinander.

Die so definierten Richtungen sollen fest mit dem Fluggerät 200 verankert sein.

Das gezeigte Fluggerät 200 weist vier Antriebsvorrichtungen 1A und 1B auf. Bei den gezeigten Antriebsvorrichtungen 1A bzw. 1B handelt es sich um Cyclogyro-Rotoren. Eine nähere Beschreibung von Cyclogyro-Rotoren wurde bereits im Zusammenhang mit Fig. 5 gegeben. Jede Antriebsvorrichtung 1A und 1B ist um eine ihr zugeordnete Drehachse 5 drehbar gelagert. Jede Antriebsvorrichtung 1A und 1B umfasst mehrere Rotorblätter 2, die um ihre Längsachse schwenkbar gelagert sind. Damit kann der Neigungswinkel der Rotorblätter 2 während der Rotation der Antriebsvorrichtung 1A bzw. 1B variiert werden. Durch die Steuerung der Rotationsgeschwindigkeit (im Folgenden auch Drehgeschwindigkeit genannt) der Antriebsvorrichtungen 1A bzw. 1B sowie der Steuerung der Neigungswinkel der Rotorblätter 2 können der Betrag sowie die Richtung der erzeugten Schubkraft bzw. des diese beschreibenden Schubvektors variiert werden.

In Fig. 6 ist zu sehen, dass die vier Antriebsvorrichtungen 1A und 1B im Wesentlichen die Ecken eines Rechtecks oder Quadrats bilden. Im geometrischen Zentrum dieses Rechtecks bzw. Quadrats ist der Rumpf 220 positioniert. Zweckmäßig ist jede der Antriebsvorrichtungen 1A und 1B vom Zentrum bzw. Rumpf gleich weit entfernt. Dazu können die Arme 221 und 222 dieselbe Länge haben. In diesem Fall sind die Antriebsvorrichtungen 1A und 1B an den Ecken eines Quadrats angeordnet.

Die beiden Antriebsvorrichtungen 1A, die gegenüberliegenden Ecken des besagten Rechtecks bzw. Quadrats entsprechen, liegen auf einer gemeinsamen Geraden; in dem gezeigten Beispiel ist diese Gerade im Wesentlichen parallel zur ersten Richtung 201; ebenso liegen die beiden Antriebsvorrichtungen 1B, die ebenfalls gegenüberliegenden Ecken des besagten Rechtecks bzw. Quadrats entsprechen, auf einer gemeinsamen Geraden, die im Wesentlichen parallel zur zweiten Richtung 202 verläuft. Anzumerken ist, dass es sich bei den genannten Geraden nicht zwingend um eine gemeinsame Drehachse zu handeln braucht, an die die Antriebsvorrichtungen (starr) gekoppelt sind. Jede Antriebsvorrichtung 1A, 1B kann über eine eigene ihr zugeordnete Drehachse 5A, 5B rotieren, und es ist auch möglich, dass jede der Antriebsvorrichtungen 1A, 1B individuell angesteuert werden kann, insbesondere, um deren Drehgeschwindigkeit separat zu steuern.

Die den Antriebsvorrichtungen 1A zugeordneten Drehachsen 5A sind in dem Ausführungsbeispiel von Fig. 6 im Wesentlichen in die erste Richtung 201 ausgerichtet. Die den Antriebsvorrichtungen 1B zugeordneten Drehachsen 5B sind in dem Ausführungsbeispiel von Fig. 6 im Wesentlichen in die erste Richtung 202 ausgerichtet. In Fig. 6 ist zu erkennen, dass die Drehachsen 5A, 5B nicht exakt parallel zur ersten Richtung 201 bzw. zweiten Richtung 202 ausgerichtet sind. Tatsächlich ist es erfindungsgemäß bereits, wenn jede der zugeordneten Drehachsen 5A, 5B im Wesentlichen in die erste Richtung 201 bzw. zweite Richtung 202 ausgerichtet ist. Erfindungsgemäß ist eine Drehachse 5A im Wesentlichen in die erste Richtung 201 ausgerichtet, wenn der Winkel, der zwischen der Drehachse 5A, und einer Achse, die in die erste Richtung 201 verläuft und die Drehachse 5A schneidet, eingeschlossen ist, geringer als 45°, bevorzugt geringer als 30°, besonders bevorzugt geringer als 15°, ist. Die Bezeichnung "im Wesentlichen in die erste Richtung ausgerichtet" schließt es somit nicht aus, dass die Drehachsen 5A auch exakt parallel zur ersten Richtung 201 sind. Für die Drehachsen 5B der zweiten Antriebsvorrichtungen 1B und die zweite Richtung 202 gilt Entsprechendes.

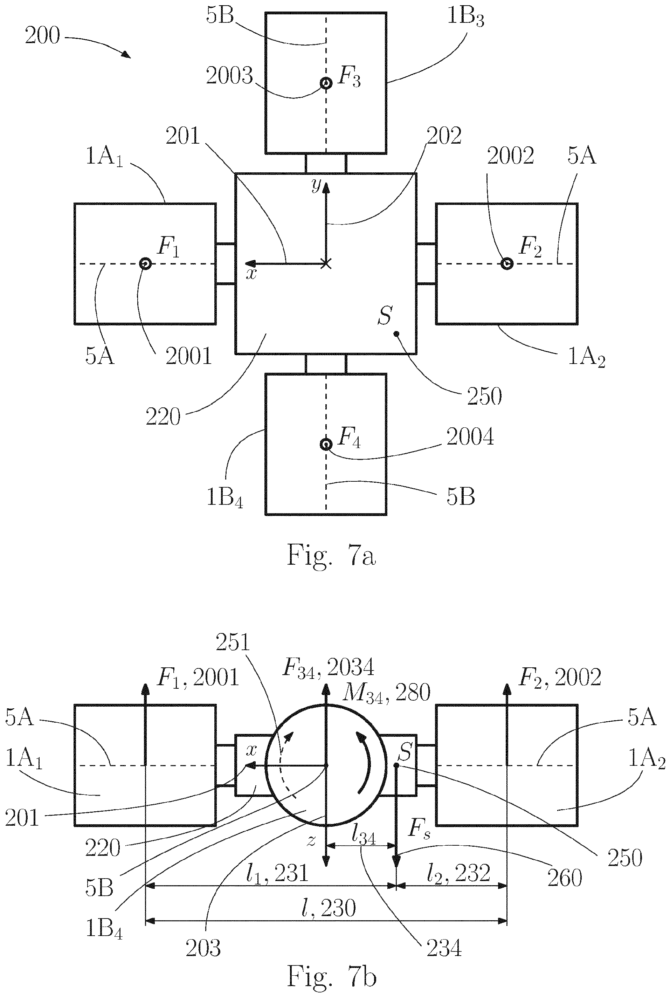

Das erfindungsgemäße Fluggerät 200 ist so ausgelegt, dass es einen Schwebeflug durchführen kann, indem jede der zwei gezeigten Antriebsvorrichtungen 1A im Wesentlichen in dieselbe Drehrichtung um die jeweils zugeordnete Drehachse 5A dreht, und/oder jede der zwei gezeigten Antriebsvorrichtungen 1B im Wesentlichen in dieselbe Drehrichtung um die jeweils zugeordnete Drehachse 5B dreht. Die konstruktiven Einschränkungen, die sich daraus für das Fluggerät 200 ergeben, werden im Zusammenhang mit den weiteren Figuren, insbesondere Figuren 7a und 7b, erläutert.

In Figur 7a ist ein Fluggerät 200 gemäß dem zweiten Aspekt der Erfindung in stark schematischer Darstellung in Draufsicht gezeigt. Zu sehen sind zunächst der bereits im Zusammenhang mit Figur 6 beschriebene Fluggeräterumpf 220, die Antriebsvorrichtungen $1A_1$, $1A_2$ und $1B_3$, $1B_4$ die ihnen jeweils zugeordneten Drehachsen 5A bzw. 5B, die erste Richtung 201 und zweite Richtung 202; die erste Richtung 201 steht senkrecht auf der zweiten Richtung 202.

Zur Beschreibung der mathematisch-physikalischen Zusammenhänge ist es zweckmäßig, ein (kartesisches) orthogonales Koordinatensystem einzuführen. In Figuren 7a und 7b wird ein kartesisches Koordinatensystem mit x-, y- und z-Achsen verwendet. Es soll beachtet werden, dass im Allgemeinen die erfindungsgemäße erste und zweite Richtung nicht den Achsen eines kartesischen Koordinatensystems zu entsprechen brauchen. Die erste und zweite (und ggf. weitere) Richtung dienen der Definition der Drehachsen der Antriebsvorrichtungen, während das (kartesische) orthogonale Koordinatensystem der zweckmäßigen mathematischen Beschreibung des Fluggeräts dienen soll.

Darüber hinaus ist der Massenschwerpunkt S, 250 des Fluggeräts 200 gezeigt. Die Lage bzw. Positionierung des Massenschwerpunkts S, 250 ist für den Ausgleich der durch die in im Wesentlichen gleiche Drehrichtung rotierenden Antriebsvorrichtungen $1A_1$, $1A_2$ bzw. $1B_3$, $1B_4$ verursachten gleich gerichteten Drehmomente von zentraler Bedeutung. Dies wird näher im Hinblick auf Figur 7b beschrieben. In dem gezeigten Beispiel ist der Massenschwerpunkt S, 250 derart positioniert, dass das Fluggerät 200 den Magnus-Effekt sowohl im Vorwärtsflug in (positive) erste Richtung 201 (hier mit der positiven x-Richtung übereinstimmend) und im Vorwärtsflug in (positive) zweite Richtung 202 (hier mit der positiven y-Richtung übereinstimmend) ausnützen kann. Bewegt sich das Fluggerät 200 im Vorwärtsflug in die erste Richtung 201, rotieren die Antriebsvorrichtungen $1B_3$, $1B_4$ im Wesentlichen in dieselbe Drehrichtung um die zugehörigen Drehachsen 5B, und zwar vorteilhafterweise im Uhrzeigersinn. Wie oben im Zusammenhang mit dem ersten Aspekt definiert, bedeutet dies, dass die zwei Antriebsvorrichtungen $1B_3$, $1B_4$ bezüglich der in Fig. 7a angegebenen zweiten Richtung (y-Achse) rechtsdrehend sind. Anders ausgedrückt: Das Skalarprodukt eines jeden der den Antriebsvorrichtungen $1B_3$, $1B_4$ zugeordneten Vektors der Winkelgeschwindigkeit mit dem Einheitsvektor in zweiter Richtung ist positiv. Losgelöst vom verwendeten Bezugssystem kann man auch sagen, dass die Antriebsvorrichtungen $1B_3$, $1B_4$ derart rotieren, dass die Fläche der Antriebsvorrichtungen $1B_3$, $1B_4$, die im Vorwärtsflug zuerst auf die angeströmte Luft trifft, entgegen der Richtung der Erdanziehungskraft dreht. Bewegt sich das Fluggerät 200 im Vorwärtsflug in die zweite Richtung 202, rotieren die Antriebsvorrichtungen $1A_1$, $1A_2$ im Wesentlichen in dieselbe Drehrichtung um die zugehörigen Drehachsen 5A, und zwar vorteilhafterweise im Gegenuhrzeigersinn. Die vorstehend gegebene Definition gilt entsprechend. In dem in Fig. 7a gezeigten Koordinatensystem bedeutet dies, dass das Skalarprodukt eines jeden der den Antriebsvorrichtungen $1A_1$, $1A_2$ zugeordneten Vektors der Winkelgeschwindigkeit mit dem Einheitsvektor in erster Richtung ist negativ. Losgelöst vom verwendeten Bezugssystem gilt auch hier wieder, dass die Antriebsvorrichtungen $1A_1$, $1A_2$ derart rotieren, dass die Fläche der Antriebsvorrichtungen $1A_1$, $1A_2$, die im Vorwärtsflug zuerst auf die angeströmte Luft trifft, entgegen der Richtung der Erdanziehungskraft dreht.

Schließlich sind die Schubvektoren $F_1$, 2001; $F_2$, 2002; $F_3$, 2003; und $F_4$, 2004 eingezeichnet, die aufgrund der Rotation der Antriebsvorrichtungen um die Drehachsen 5A bzw. 5B erzeugt werden. Die Schubvektoren $F_1$, 2001; $F_2$, 2002; $F_3$, 2003; und $F_4$, 2004 zeigen aus der Bildebene heraus, das heißt, es wird Auftrieb erzeugt.

Im Vorwärtsflug in die erste Richtung (x-Achse) ist es auch möglich, dass - bei Rotation der Antriebsvorrichtungen $1B_3$, $1B_4$ in dieselbe Richtung - die Antriebsvorrichtungen $1A_1$, $1A_2$ gegenläufig rotieren, d.h. eine im Uhrzeigersinn, die andere im Gegenuhrzeigersinn. Entsprechendes gilt für den Vorwärtsflug in die zweite Richtung (y-Achse). Die Richtung der Schubvektoren $F_1$, 2001; $F_2$, 2002; $F_3$, 2003; und $F_4$, 2004 bleibt davon unberührt.

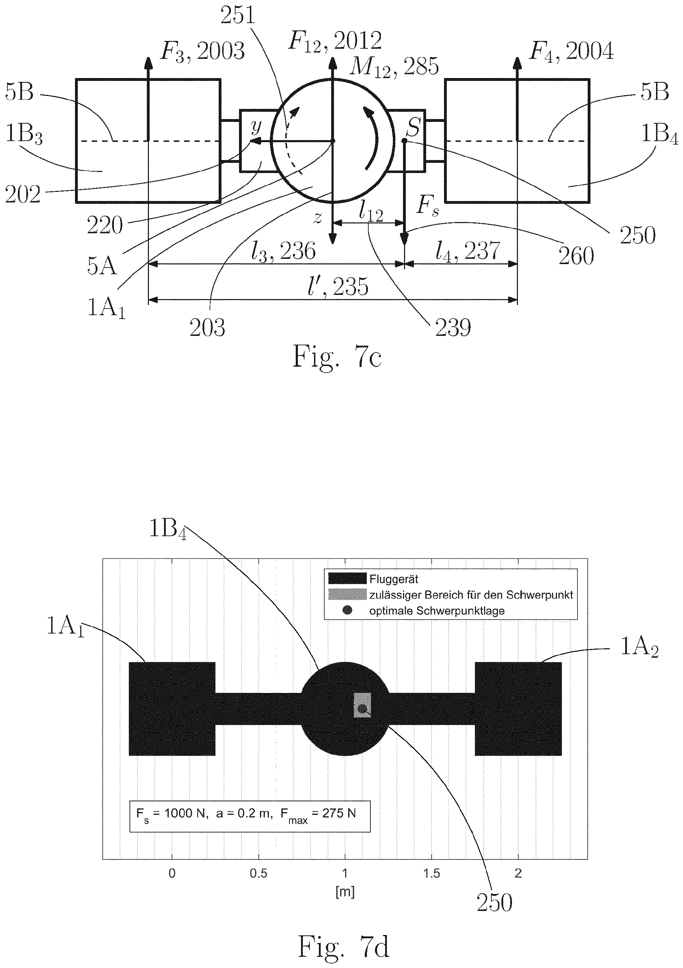

Figuren 7b und 7c zeigen das in Figur 7a in Draufsicht dargestellte Fluggerät gemäß dem zweiten Aspekt der Erfindung in unterschiedlichen Seitenansichten und in stark schematischer Darstellung. In der Seitenansicht der Fig. 7b sind die zwei Antriebsvorrichtungen $1A_1$, $1A_2$ und eine der zwei Antriebsvorrichtungen $1B_3$, $1B_4$ zu sehen. In der Seitenansicht der Fig. 7c sind die zwei Antriebsvorrichtungen $1B_3$, $1B_4$ und eine der zwei Antriebsvorrichtungen $1A_1$, $1A_2$ zu sehen. Die den Antriebsvorrichtungen $1A_1$, $1A_2$ zugeordneten Drehachsen 5A sind parallel zur ersten Richtung 201 (hier: x-Richtung); die den Antriebsvorrichtungen $1B_3$, $1B_4$ zugeordneten Drehachsen 5B sind parallel zur zweiten Richtung (hier: y-Richtung) (welche in die Blattebene hineinzeigt).

In dem betrachteten erfindungsgemäßen Ausführungsbeispiel sollen die Antriebsvorrichtungen $1B_3$, $1B_4$ in die

gleiche Drehrichtung 251 mit einer bestimmten zugeordneten Rotationsgeschwindigkeit drehen. In Fig. 7b rotieren die beiden Antriebsvorrichtungen $1B_3$, $1B_4$ im Uhrzeigersinn, wie oben definiert. Wie schon ausgeführt, wird durch die Rotation jeder Antriebsvorrichtung $1B_3$, $1B_4$ ein Schubvektor erzeugt. In der Notation gemäß Fig. 7b wird der von den beiden Antriebsvorrichtungen $1B_3$, $1B_4$ gemeinsam erzeugte Schubvektor mit $F_{34}$, 2034, wobei $F_{34} = F_3 + F_4$ (vgl. Fig. 7a), bezeichnet. Dadurch, dass die Antriebsvorrichtungen $1B_3$, $1B_4$ in dieselbe Drehrichtung 251 rotieren, wirken alle entstehenden (Antriebs-)Drehmomente $M_{34}$, 280 ebenfalls in die gleiche Richtung, wobei hier $M_{34}$, 280 das (Antriebs-)Drehmoment beider Antriebsvorrichtungen $1B_3$, $1B_4$ bezeichnet, also $M_{34} = M_3 + M_4$.

Die Antriebsvorrichtungen $1A_1$, $1A_2$ erzeugen Schubvektoren $F_1$, 2001; bzw. $F_2$, 2002. Auf die Rotationsrichtung der Antriebsvorrichtungen $1A_1$, $1A_2$ kommt es bei der hiesigen Betrachtung, die eine für den Vorwärtsflug in erster Richtung 201 günstige Auslegung des Fluggeräts betrifft, nicht an. Aus Symmetriegründen ist es allerdings vorzuziehen, das Fluggerät so auszulegen, dass eine stabile Fluglage, insbesondere ein stabiler Vorwärtsflug, auch bei gleich rotierenden Antriebsvorrichtungen $1A_1$, $1A_2$ möglich ist. Dies wird weiter unten noch beschrieben.

Im Hinblick auf Fig. 7b werden Impuls- und Drallsatz um den Massenschwerpunkt $S$, 250 des Fluggeräts aufgestellt, wobei im dargestellten Fall nur der Impulssatz in Vertikalrichtung 203 (z-Achse) und der Drallsatz um die zweite Richtung 202 (y-Achse) relevant sind, da nur hier Kräfte bzw. Drehmomente wirken.

Die Bedingungen für einen stabilen Schwebeflug lauten dann:

$$\sum F_z = F_s - F_1 - F_2 - F_{34} = 0 \qquad (17)$$

$$\sum M_{s,y} = F_1 * l_1 + F_{34} * l_{34} - F_2 * l_2 - M_{34} = 0. \qquad (18)$$

Die (Beträge der) Schubvektoren $F_1$, $F_2$ und $F_{34}$ können derart eingestellt werden, um die beiden Gleichgewichtsbedingungen zu erfüllen. Zweckmäßigerweise werden die Schubvektoren durch die Schubvektorsteuerung eingestellt.

Es ist aber auch möglich, die beiden Gleichgewichtsbedingungen zu verwenden, um den Massenschwerpunkt des Fluggeräts derart zu bestimmen, dass die besagten Bedingungen für den Schwebeflug bei bestimmten vorgegebenen Schubvektoren $F_1$, $F_2$ und $F_{34}$ erfüllt werden.

Das in Fig. 7b gezeigte Drehmoment $M_{34}$, 280 entspricht dem (Antriebs-)Drehmoment beider Antriebsvorrichtungen $1B_3$, $1B_4$. Wie schon im Zusammenhang mit dem ersten Aspekt der Erfindung ausgeführt, besteht zwischen dem Betrag des Drehmoments $M_{34}$, 280 und dem Betrag des Schubvektoren $F_{34}$, ein mathematisch-physikalischer Zusammenhang. Dieser wird durch die oben angegebene Gleichung (6) bestimmt. Jede Antriebsvorrichtung kann einen anderen Proportionalitätsfaktor $a$ aufweisen. Allerdings nehmen die Werte von $a$ von verschiedenen Antriebsvorrichtungen gleicher Bauart bzw. Baugröße typischerweise die gleiche Größenordnung an. Zweckmäßig sind sie im Wesentlichen identisch.

Gemäß Gleichung (6) können die Beträge $M_1$, $M_2$, $M_3$, $M_4$ der Drehmomente geschrieben werden als

$$M_i = a_i * F_i, \quad i \in \{1, 2, 3, 4\}.$$

Da in dem betrachteten Ausführungsbeispiel aufgrund der parallelen Ausrichtung der Drehachsen der Antriebsvorrichtungen $1B_3$, $1B_4$ bei gleicher Drehrichtung $M_3$ und $M_4$ parallel sind, gilt auch betragsmäßig:

$$|M_3 + M_4| = M_3 + M_4 = M_{34} \equiv a_{34} * F_{34}.$$

Es soll hier erwähnt werden, dass die vorstehende Gleichung auch als gute Näherung gilt für den allgemein betrachteten Fall von im Wesentlichen in die gleiche Richtung ausgerichteten Drehachsen.

Daraus ergibt sich die Drehmomentengleichung (18) zu

$$\sum M_{s,y} = F_1 * l_1 + F_{34} * l_{34} - F_2 * l_2 - F_{34} * a_{34} = 0 .$$

Hierin bezeichnen $F_1$, $F_2$ die Beträge der von den Antriebsvorrichtungen $1A_1$ bzw. $1A_2$ erzeugten Schubvektoren $F_1$, 2001; $F_2$, 2002; $l_1$, 231 den bez. der ersten Richtung bestimmten Abstand des Schubvektors $F_1$, 2001 vom Massenschwerpunkt $S$, 250 des Fluggeräts (wobei dieser Abstand $l_1$ mit dem Abstand bez. der ersten Richtung zwischen Massenschwerpunkt $S$, 250 des Fluggeräts und dem geometrischen Zentrum entlang der Drehachse 5A der Antriebsvorrichtung $1A_1$ identifiziert werden kann; anders ausgedrückt: $l_1$ ist der Abstand bez. der ersten Richtung vom Massenschwerpunkt $S$, 250 des Fluggeräts zur halben Spannweite der Antriebsvorrichtung $1A_1$); $l_2$, 232 den bez. der ersten Richtung bestimmten Abstand des Schubvektors $F_2$, 2002 vom Massenschwerpunkt $S$, 250 des Fluggeräts (wobei dieser Abstand $l_2$ mit dem Abstand bez. der ersten Richtung zwischen Massenschwerpunkt $S$, 250 des Fluggeräts und dem geometrischen Zentrum der Antriebsvorrichtung $1A_2$ entlang der Drehachse 5A identifiziert werden kann; anders ausgedrückt: $l_2$ ist der Abstand bez. der ersten Richtung vom Massenschwerpunkt $S$, 250 des Fluggeräts zur halben Spannweite der Antriebsvorrichtung $1A_2$); $F_{34}$ den Betrag der von beiden Antriebsvorrichtungen $1B_3$ und $1B_4$ erzeugten Schubvektor $F_{34} = F_3 + F_4$, 2034; $l_{34}$, 234 den bez. der ersten Richtung bestimmten Abstand zwischen dem Massenschwerpunkt $S$, 250 des Fluggeräts, einerseits, und dem Schubvektor $F_{34}$, 2034 bzw. den Drehachsen der Antriebsvorrichtungen $1B_3$ und $1B_4$ bzw. der Geraden, die durch die Antriebsvorrichtungen $1B_3$ und $1B_4$ verläuft, andererseits (wobei hier angenommen wird, dass die Antriebsvorrichtungen $1B_3$ und $1B_4$ auf einer geraden liegen, die - zumindest näherungsweise - parallel zur zweiten Richtung verläuft); $a_{34}$ der den Antriebsvorrichtungen $1B_3$ und $1B_4$ zugeordnete Proportionalitätsfaktor.

Diese Gleichung kann nun in ein Verhältnis der Beträge $F_1$ und $F_2$ der beiden Schubvektoren $F_1$, 2001 bzw. $F_2$, 2002 umgeformt werden:

$$\frac{F_1}{F_2} = \frac{l_2}{l_1} + \frac{F_{34}}{F_2} * \frac{a_{34} - l_{34}}{l_1} . \tag{19}$$

Gleichung (19) kann als Konfigurationsformel für das Fluggerät dienen. Die Gleichung (19) enthält zunächst vier frei wählbare Größen (aus der Menge von $F_1, F_2, F_{34}, l_1, l_2, l_{34}$), allerdings ist in einer stabilen Fluglage noch Gleichung (17) zu beachten, weshalb nur drei der vorstehend genannten vier Größen frei gewählt werden können.

Eine entsprechende Konfigurationsformel erhält man auch für den Fall, dass der Impulssatz in Vertikalrichtung 203 (z-Achse) und der Drallsatz um die erste Richtung 201 (x-Achse) aufgestellt werden. Dazu wird Bezug genommen auf Fig. 7c. Eine solche Betrachtung ist erforderlich, wenn man den erfindungsgemäßen Effekt, d.h. insbesondere den positiven Beitrag des Magnus-Effekts, auch beim Vorwärtsflug in die zweite Richtung (y-Achse) nutzen möchte.

Die Bedingungen für einen stabilen Schwebeflug lauten dann:

$$\sum F_z = F_s - F_3 - F_4 - F_{12} = 0 \tag{20}$$

$$\sum M_{s,x} = F_3 * l_3 + F_{12} * l_{12} - F_4 * l_4 - M_{12} = 0 . \tag{21}$$

Die Bezeichnungen gelten wie im Falle der Gleichungen (17) und (18), allerdings mit den verschobenen Indizes: $1 \rightarrow 3; 2 - 4; 3 \rightarrow 1; 4 \rightarrow 2$. Auf eine erneute Wiedergabe der einzelnen Ausdrücke wird daher verzichtet. Insbesondere ist $M_{12}$, 285, das gesamte von den Antriebsvorrichtungen $1A_1$, $1A_2$ erzeugte Drehmoment.

Unter Berücksichtigung der Ausführungen in Zusammenhang mit Gleichungen (17) und (18) im Hinblick auf Gleichung (6) kann die Drehmomentengleichung (21) geschrieben werden als:

$$\sum M_{s,x} = F_3 * l_3 + F_{12} * l_{12} - F_4 * l_4 - F_{12} * a_{12} = 0 .$$

Hierin bezeichnen $F_3$, $F_4$ die Beträge der von den Antriebsvorrichtungen $1B_3$ bzw. $1B_4$ erzeugten Schubvektoren $F_3$, 2003; $F_4$, 2004 (vgl. Fig. 7a); $l_3$, 236, den bez. der zweiten Richtung bestimmten Abstand des Schubvektors $F_3$ vom Massenschwerpunkt $S$, 250 des Fluggeräts (wobei dieser Abstand $l_3$ mit dem Abstand bez. der zweiten Richtung zwischen Massenschwerpunkt $S$, 250 des Fluggeräts und dem geometrischen Zentrum der Antriebsvorrichtung $1B_3$ entlang der Drehachse 5B identifiziert werden kann; anders ausgedrückt: $l_3$ ist der Abstand bez. der zweiten Richtung vom Massenschwerpunkt $S$, 250 des Fluggeräts zur halben Spannweite der Antriebsvorrichtung $1B_3$); $l_4$, 237, den bez. der zweiten Richtung bestimmten Abstand des Schubvektors $F_4$ vom Massenschwerpunkt $S$, 250 des Fluggeräts (wobei dieser Abstand $l_4$ mit dem Abstand bez. der zweiten Richtung zwischen Massenschwerpunkt $S$, 250 des Fluggeräts und dem geometrischen Zentrum der Antriebsvorrichtung $1B_4$ entlang der Drehachse 5B identifiziert werden kann; anders ausgedrückt: $l_4$ ist der Abstand bez. der zweiten Richtung vom Massenschwerpunkt $S$, 250 des Fluggeräts zur halben Spannweite der Antriebsvorrichtung $1B_4$); $F_{12}$ den Betrag der von beiden Antriebsvorrichtungen $1A_1$ und $1A_2$ erzeugten Schubvektor $F_{12} = F_1 + F_2$, 2012; $l_{12}$, 239, den bez. der zweiten Richtung bestimmten Abstand zwischen dem Massenschwerpunkt $S$, 250 des Fluggeräts, einerseits, und dem Schubvektor $F_{12}$, 2012, bzw. den Drehachsen der Antriebsvorrichtungen $1A_1$ und $1A_2$ bzw. der Geraden, die durch die Antriebsvorrichtungen $1A_1$ und $1A_2$ verläuft, andererseits (wobei hier angenommen wird, dass die Antriebsvorrichtungen $1A_1$ und $1A_2$ auf einer Geraden liegen, die - zumindest näherungsweise - parallel zur ersten Richtung verläuft); $a_{12}$ der den Antriebsvorrichtungen $1A_1$ und $1A_2$ zugeordnete Proportionalitätsfaktor.

Diese Gleichung kann nun in ein Verhältnis der Beträge $F_3$ und $F_4$ der beiden Schubvektoren $\boldsymbol{F}_3$ bzw. $\boldsymbol{F}_4$ umgeformt werden:

$$\frac{F_3}{F_4} = \frac{l_4}{l_3} + \frac{F_{12}}{F_4} * \frac{a_{12} - l_{12}}{l_3} \ . \tag{22}$$

Aufgrund der Topologie der sternförmigen Anordnung der Antriebsvorrichtungen $1A_1$, $1A_2$, $1B_3$ und $1B_4$ ist es zweckmäßig, wenn jeweils ein Paar von Antriebsvorrichtungen $1A_1$, $1A_2$ oder $1B_3$, $1B_4$ die Hälfte des erforderlichen Schubes erzeugt. Dadurch ergibt sich die Randbedingung

$$F_{12} = F_{34}. \tag{23}$$

Hier muss beachtet werden, dass dies nicht notwendig impliziert, dass sämtliche Schubvektoren $\boldsymbol{F}_1$, $\boldsymbol{F}_2$, $\boldsymbol{F}_3$, und $\boldsymbol{F}_4$ gleich sein müssen; es ist dafür ausreichend, wenn jeweils die Summe der Schubvektoren von zwei gegenüberliegenden Antriebsvorrichtungen gleich ist. Dafür können aber auch alle Schubvektoren $\boldsymbol{F}_1$, $\boldsymbol{F}_2$, $\boldsymbol{F}_3$, und $\boldsymbol{F}_4$ einzeln für sich betrachtet unterschiedlich sein.

Eine weitere, zweckmäßige Randbedingung ergibt sich, wenn gefordert wird, dass die Antriebsvorrichtungen vorzugsweise zentral am Fluggeräterumpf 220 angebracht sind. Das heißt, es soll gelten

$$l_{34} = \frac{l}{2} - l_2 = \frac{l_1 - l_2}{2} = l_1 - \frac{l}{2} , \tag{24a}$$

$$l_{12} = \frac{l'}{2} - l_4 = \frac{l_3 - l_4}{2} = l_3 - \frac{l'}{2} , \tag{24b}$$

wobei für den Abstand $l$, 230 der Schubvektoren bzw. der geometrischen Zentren der Antriebsvorrichtungen $1A_1$, $1A_2$ verwendet wurde: $l = l_3 + l_4$, und für den Abstand $l'$, 235, der Schubvektoren bzw. der geometrischen Zentren der Antriebsvorrichtungen $1B_3$, $1B_4$: $l' = l_1 + l_2$. Zweckmäßig ist $l' = l$.

Dies Randbedingungen (23) und (24a) führen zu folgender Konfigurationsformel:

$$\frac{F_1}{F_2} = \frac{l_2}{l_1} + \left(\frac{F_1}{F_2} + 1\right) * \frac{2*a_{34} - l_1 + l_2}{2*l_1} , \tag{25a}$$

die Randbedingungen (23) und (24b) zu:

$$\frac{F_3}{F_4} = \frac{l_4}{l_3} + \left(\frac{F_3}{F_4} + 1\right) * \frac{2*a_{12} - l_3 + l_4}{2*l_3} \ . \tag{25b}$$

Zweckmäßigerweise kann man davon ausgehen, dass die Proportionalitätsfaktoren gleich sind, $a_{12} = a_{34} \equiv a$.

Hier soll als Nächstes die Anzahl der frei vorgebbaren Schubvektoren anhand von Gleichungen (17), (18), (20) und (21) bestimmt werden. Geht man davon aus, dass die Positionen der Antriebsvorrichtungen fest sind, so hat man in den besagten Gleichungen die folgenden Unbekannten: $F_1$, $F_2$, $F_3$, $F_4$, $l_{12}$ und $l_{34}$. Weiter muss beachtet werden, dass Gleichungen (17) und (20) die identische Einschränkung vorgeben. Man hat also drei Gleichungen für sechs Unbekannte. Der Massenschwerpunkt soll vermittels $l_{12}$ und $l_{34}$ bestimmt werden; damit legen die Gleichungen (17), (18), (20) und (21) noch einen Schubvektor fest; drei der vier Schubvektoren $F_1$, $F_2$, $F_3$ können somit beliebig vorgegeben werden. Werden weitere Randbedingungen berücksichtigt, reduziert sich die Anzahl der frei vorgebbaren Schubvektoren entsprechend.

Es gibt mehrere Möglichkeiten, die Gleichungen (17), (20), (25a), (25b) zu erfüllen.

(i) In einer ersten Fallgestaltung kann gefordert werden, dass das Fluggerät symmetrisch ausgelegt ist. Das heißt, der Massenschwerpunkt $S$, 250 befindet sich exakt in der Mitte zwischen den (Massenschwerpunkten der) Antriebs-vorrichtungen $1A_1$, $1A_2$ und/oder $1B_3$, $1B_4$. In diesem Fall ist $l_1 = l_2$ und/oder $l_3 = l_4$. Aus Gleichungen (25a), (25b) ergibt sich dann

$$F_1 = F_2 * \frac{a_{34} + l_1}{l_1 - a_{34}} ,$$

und/oder

$$F_3 = F_4 * \frac{a_{12}+l_3}{l_3-a_{12}}.$$

Wegen $\frac{l+a}{l-a} > 1$ folgt, dass die in positiver erster Richtung bzw. positiver zweiter Richtung angeordnete Antriebsvorrichtung $1A_1$, $1B_3$, mehr Schub erzeugen muss als die in negativer erster Richtung bzw. negativer erster Richtung angeordnete Antriebsvorrichtung $1A_2$, $1B_4$, also ist $F_1 > F_2$ und/oder $F_3 > F_4$. Somit müssen die in positiver Richtung angeordneten Antriebsvorrichtungen größer ausgelegt werden als die in negativer Richtung angeordneten Antriebsvorrichtungen. Anders ausgedrückt, die in Vorwärtsflugrichtung vorne angeordneten Antriebsvorrichtungen müssen größer ausgelegt werden als die hinten angeordneten Antriebsvorrichtungen.

Bei dieser Fallgestaltung wird der Massenschwerpunkt $S$, 250 daher tendenziell in die positive erste und/oder zweite Richtung wandern, was zur Folge hat, dass $l_1 < l_2$ und/oder $l_3 < l_4$ wird, und die Differenz der erforderlichen Schubvektoren $F_1$ und $F_2$ bzw. $F_3$ und $F_4$ der Antriebsvorrichtungen $1A_1$, $1A_2$ bzw. $1B_3$, $1B_4$ weiter ansteigt.

(ii) In einer zweiten Fallgestaltung sind besonders bevorzugt die zwei Antriebsvorrichtungen $1A_1$, $1A_2$ konstruktiv identisch ausgestaltet und/oder die zwei Antriebsvorrichtungen $1B_3$, $1B_4$ konstruktiv identisch ausgestaltet. Das heißt, sie sind baugleich und besitzen beispielsweise die gleiche Größe, die gleiche Spannweite, die gleiche Anzahl von Rotorblättern und/oder erzeugen ähnliche oder gleiche (maximale) Schubkräfte / Schubvektoren. In diesem Fall ist also $F_1 = F_2$ (oder $F_1 \approx F_2$) und/oder $F_3 = F_4$ (oder $F_3 \approx F_4$).

Aus Gleichungen (25a) und (25b) folgen sich dann

$$l_1 = \frac{l}{2} + \frac{a_{34}}{2}, \qquad\qquad (26a)$$

$$l_3 = \frac{l'}{2} + \frac{a_{12}}{2}. \qquad\qquad (26b)$$

Man erkannt, dass der Massenschwerpunkt $S$, 250 des Fluggeräts entlang der ersten Richtung 201 und/oder zweiten Richtung von der (geometrischen) Mitte $l/2$ zwischen jeweils gegenüberliegenden Antriebsvorrichtungen $1A_1$, $1A_2$ bzw. $1B_3$, $1B_4$ in Richtung der bezüglich der Vorwärtsflugrichtung hinteren Antriebsvorrichtungen $1A_2$, $1B_4$ verschoben sind, und zwar gemäß Gleichungen (24a) bzw. (24b) um

$$l_{34} = l_1 - \frac{l}{2} = \frac{a_{34}}{2}, \qquad\qquad (27a)$$

$$l_{12} = l_3 - \frac{l'}{2} = \frac{a_{12}}{2}. \qquad\qquad (27b)$$

Wird nun ein Fluggerät mit konstruktiv identischen, gleich großen Antriebsvorrichtungen $1A_1$, $1A_2$ und/oder $1B_3$, $1B_4$ und somit annähernd gleich großen Schubkräften / Schubvektoren pro Paar von Antriebsvorrichtungen $1A_1$, $1A_2$ bzw. $1B_3$, $1B_4$ konfiguriert, kann der Massenschwerpunkt $S$, 250 also optimalerweise so positioniert werden, dass die von den Antriebsvorrichtungen erzeugten Drehmomente rein durch die Lage des Massenschwerpunktes $S$, 250 ausgeglichen wird. Die besagte optimale Position ist durch Gleichungen (27a) und/oder (27b) bestimmt.

Hier und im Folgenden muss beachtet werden, dass für die Betrachtungen betreffend die gleich drehenden Antriebsvorrichtungen $1B_3$, $1B_4$ lediglich die Position des Massenschwerpunktes in die erste Richtung 201 eine Rolle spielt. Die Lagerung bzw. Positionierung des Massenschwerpunkts bezüglich der zweiten Richtung und Vertikalrichtung 203 ist hier nicht relevant und liegt im Ermessen des Fachmanns. Entsprechend gilt, dass für die Betrachtungen betreffend die gleich drehenden Antriebsvorrichtungen $1A_1$, $1A_2$ lediglich die Position des Massenschwerpunktes in die zweite Richtung eine Rolle spielt. Die Lagerung bzw. Positionierung des Massenschwerpunkts bezüglich der ersten Richtung 201 und Vertikalrichtung 203 ist in diesem Fall nicht relevant. Soll das Fluggerät allerdings die positive Wirkung des Magnus-Effekts sowohl bei Vorwärtsbewegung in die erste Richtung als auch bei Vorwärtsbewegung in die zweite Richtung ausnützen, ist die optimale Lage des Massenschwerpunkts durch beide Gleichungen (27a) und (27b) festgelegt, sodass lediglich seine Positionierung bez. der Vertikalrichtung 203 frei wählbar bleibt.

(iii) Erfindungsgemäß ist es auch möglich, dass Aspekte der ersten Fallgestaltung (i) und der zweiten Fallgestaltung (ii) miteinander kombiniert werden. Das bedeutet, der Massenschwerpunkt $S$, 250 des Fluggeräts kann aus dem geometrischen Zentrum des Fluggeräterumpfs 220 derart verschoben werden, dass die Bedingungen (17), (20), (25a), (25b) für einen stabilen Schwebeflug bei bestimmten vorgegebenen, auch unterschiedlichen, Schubvektoren / Schubkräften von einzelnen der Antriebsvorrichtungen erfüllt sind.

Für praktische Anwendungen ist es nicht immer möglich, die Massen in einem Fluggerät so zu platzieren, dass der Gesamtmassenschwerpunkt $S$, 250 exakt an der in (i), (ii) oder (iii) beschriebenen vorgegebenen optimalen Position positioniert werden kann (für die Fallgestaltung (i) ist $l_1 = l_2$ und/oder $l_3 = l_4$; für die Fallgestaltung (ii) vgl. Gleichungen (26a), (26b), (27a), (27b)). Daher wird nachfolgend ein Bereich definiert, in welchem der Massenschwerpunkt $S$, 250 liegen kann, sodass es noch möglich ist, den Drehmomentenausgleich mit den Schubkräften / Schubvektoren $F_1$, 2001, $F_2$, 2002 der Paare von Antriebsvorrichtungen $1A_1$, $1A_2$ bzw. den Drehmomentenausgleich mit den Schubkräften / Schubvektoren $F_3$, 2003, $F_4$, 2004 der Paare von Antriebsvorrichtungen $1B_3$, $1B_4$ zu unterstützen.

Dazu wird zunächst angenommen, dass eine der Antriebsvorrichtungen $1A_1$, $1A_2$, $1B_3$, $1B_4$ eine maximal zulässige (i.d.R. vorgegebene) Schubkraft / maximal zulässigen Schubvektor von $F_{i,max}$ erzeugen kann. Dabei wird angenommen, dass $F_{i,max}$ größer oder gleich den der optimalen Konfiguration entsprechenden Schubkräften $F_{i,opt}$ sind (wie auch schon im Zusammenhang mit dem ersten Aspekt der Erfindung näher beschrieben).

Unter Berücksichtigung des Impulssatzes gemäß Gleichung (17) ergibt sich zunächst

$$F_{1,opt} \leq F_{1,max} \quad \Rightarrow \quad F_{2,opt} \geq F_{2,min} \equiv F_s - F_{1,max} - F_{34,opt}$$

und damit ein maximal zulässiges Schubvektorverhältnis von

$$R_{max} = \frac{F_{1,max}}{F_{2,min}} \, .$$

Für den Fall

$$F_{2,opt} \leq F_{2,max} \quad \Rightarrow \quad F_{1,opt} \geq F_{1,min} \equiv F_s - F_{2,max} - F_{34,opt}$$

ergibt sich somit ein minimal zulässiges Schubvektorenverhältnis von

$$R_{min} = \frac{F_{1,min}}{F_{2,max}} \, .$$

Unter Verwendung der Randbedingung der Gleichung (23), $F_{12} = F_{34}$, in Gleichungen (17) und (20) erhält man

$$F_{12} = F_{34} = \frac{F_s}{2} \, .$$

Diese Schubvektorverhältnisse $F_1/F_2$ werden auch durch Gleichung (25a) beschrieben; unter Verwendung der letzteren lassen sich der maximal zulässige Abstand in die erste Richtung 201 des Massenschwerpunkts $S$, 250 vom geometrischen Zentrum der im Vorwärtsflug vorderen Antriebsvorrichtung $1A_1$, zu

$$l_{1_{max}} = \frac{(R_{min} + 3) * l + (R_{min} + 1) * 2 * a_{34}}{(R_{min} + 1) * 4}$$

und der minimal zulässige Abstand in die erste Richtung 201 des Massenschwerpunkts $S$, 250 vom geometrischen Zentrum der im Vorwärtsflug vorderen Antriebsvorrichtung $1A_1$ zu

$$l_{1_{min}} = \frac{(R_{max} + 3) * l + (R_{max} + 1) * 2 * a_{34}}{(R_{max} + 1) * 4}$$

berechnen.

Liegt der Massenschwerpunkt $S$, 250 bezüglich der ersten Richtung 201 außerhalb des Bereiches

$$l_{1_{min}} \leq l_1 \leq l_{1_{max}} \, , \qquad\qquad (28)$$

ist es nicht mehr möglich, die Abweichung des Massenschwerpunktes $S$, 250 von der optimalen Position gemäß Gleichung (26a) durch die Schubkräfte $F_1$, 2001 bzw. $F_2$, 2002 der Antriebsvorrichtungen $1A_1$, $1A_2$ auszugleichen.

Vermittels der Gleichung (24a) kann der zulässige Bereich (28) in der ersten Richtung auch bezüglich der Drehachsen der Antriebsvorrichtungen $1B_3$, $1B_4$ bzw. der Geraden, die durch die Antriebsvorrichtungen $1B_3$, $1B_4$ verläuft, angegeben werden. Dann erfolgt die Angabe des Bereichs mithilfe des Abstands $l_{34}$ und entsprechenden Grenzen $l_{34,min}$ und $l_{34,max}$.

Analog erhält man für den zulässigen Bereich des Massenschwerpunkts $S$, 250 bezüglich der zweiten Richtung (hier: y-Richtung)

$$l_{3_{min}} \leq l_3 \leq l_{3_{max}}, \qquad\qquad (29)$$

wobei

$$l_{3_{max}} = \frac{(R'_{min} + 3) * l' + (R'_{min} + 1) * 2 * a_{12}}{(R'_{min} + 1) * 4},$$

$$l_{3_{min}} = \frac{(R'_{max} + 3) * l' + (R'_{max} + 1) * 2 * a_{12}}{(R'_{max} + 1) * 4},$$

mit

$$R'_{min} = \frac{F_{3,min}}{F_{4,max}},$$

$$R'_{max} = \frac{F_{3,max}}{F_{4,min}}$$

Vermittels der Gleichung (24b) kann der zulässige Bereich (29) in der zweiten Richtung auch bezüglich der Drehachsen der Antriebsvorrichtungen $1A_1$, $1A_2$ bzw. der Geraden, die durch die Antriebsvorrichtungen $1A_1$, $1A_2$ verläuft, angegeben werden. Dann erfolgt die Angabe des Bereichs mithilfe des Abstands $l_{12}$ und entsprechenden Grenzen $l_{12,min}$ und $l_{12,max}$.

Figur 7d dient der Veranschaulichung des vorstehend beschriebenen Bereichs, in dem sich der Massenschwerpunkt $S$, 250 des Fluggeräts zweckmäßigerweise zur Umsetzung der Erfindung gemäß dem zweiten Aspekt befinden kann. Fig. 7d zeigt schematisch ein Fluggerät mit Antriebsvorrichtungen $1A_1$, $1A_2$ und $1B_3$, $1B_4$, das dem im Zusammenhang mit Figuren 7a und 7b beschriebenen entspricht. Es wird weiter angenommen, dass die Antriebsvorrichtungen $1A_1$, $1A_2$ $1B_3$, $1B_4$ konstruktiv identisch ausgestaltet sind (s. Fallgestaltung (ii) oben), hier insbesondere: $a_1 = a_2 = a_3 = a_4 = a_{12} = a_{34} \equiv a$.

Zuerst wird weiter angenommen, dass der Drehmomentenausgleich rein über die Lage des Massenschwerpunktes $S$, 250 realisiert werden soll, wodurch

$$F_{1,opt} = F_{2,opt} = F_{opt} \quad \Rightarrow \quad M_{1,opt} = M_{2,opt} = M_{opt}$$

gilt. Für das hier betrachtet Ausführungsbeispiel des Fluggeräts wird eine durch eine entsprechende Gesamtmasse erzeugte Gesamt-Gewichtskraft von

$$F_s = 1000 \ N$$

angesetzt; die Kennzahl / der Proportionalitätsfaktor ist typischerweise

$$a = 0{,}2 \ m;$$

der Abstand der Antriebsvorrichtungen in die erste Richtung (in Figuren 7a, 7b: x-Richtung) wird als

$$l = l_1 + l_2 = 2 \ m$$

definiert.

Auf Basis dieser Vorgaben ergibt sich aus Gleichungen (25a) und (26a) eine optimale Massenschwerpunktlage von

$$R_{opt} = 1 = \frac{F_{1,opt}}{F_{2,opt}} = \frac{l_{2,opt}}{l_{1,opt}} + (1+1)\frac{2*a - l_{1,opt} + l_{2,opt}}{2*l_{1,opt}}$$

$$\Rightarrow l_{1,opt} = \frac{l}{2} + \frac{a}{2} = 1{,}1 \; m$$

$$\Rightarrow l_{2,opt} = \frac{l}{2} - \frac{a}{2} = 0{,}9 \; m \; .$$

Ist es nicht möglich, den Gesamtmassenschwerpunkt $S$, 250 des Fluggerätes auf die Position $l_{1,opt}$ = 1,1 $m$ zu legen, wird nun ein Bereich definiert, in welchem sich die Lage des Massenschwerpunktes $S$, 250 befinden kann, sodass der Drehmomentenausgleich von den Schubkräften / Schubvektoren der Antriebsvorrichtungen $1A_1$, $1A_2$, $1B_3$, $1B_4$ kompensiert werden kann. Dazu wird die maximal zulässige Schubkraft, die von jeder der in erster Richtung angeordneten Antriebsvorrichtung $1A_1$, $1A_2$ erzeugt werden kann, die zweckmäßig durch von der Schubvektorsteuerung gesteuert wird, als

$$F_{1,max} = F_{2,max} = 275 \; N$$

definiert.

Durch diese Vorgabe und unter Benutzung der Randbedingung gemäß Gleichung (23), $F_{34} = \frac{F_S}{2} = 500 \; N$, lassen sich das maximal und minimal zulässige Schubvektorverhältnis

$$R_{max} = \frac{F_{1,max}}{F_{2,min}} = \frac{11}{9}$$

$$R_{min} = \frac{F_{1,min}}{F_{2,max}} = \frac{9}{11}$$

und der Bereich für die Lage des Massenschwerpunktes gemäß Gleichung (28)

$$l_{1_{max}} = \frac{(R_{min} + 3)*l + (R_{min} + 1)*2*a}{(R_{min} + 1)*4} = 1{,}15 \; m$$

$$l_{1_{min}} = \frac{(R_{max} + 3)*l + (R_{max} + 1)*2*a}{(R_{max} + 1)*4} = 1{,}05 \; m$$

$$1{,}05 \; m \le l_1 \le 1{,}15 \; m$$

berechnen. Das heißt, in diesem Beispiel befindet sich der Massenschwerpunkt bezüglich der ersten Richtung zweckmäßigerweise 1,05 bis 1,15 m vom geometrischen Zentrum der bezüglich der Vorwärtsflugrichtung vorderen der beiden Antriebsvorrichtungen $1A_1$ entfernt. Unter Verwendung von Gleichung (27a) kann dieses Ergebnis auch wie folgt ausgedrückt werden: der Massenschwerpunkt befindet sich bezüglich der ersten Richtung zweckmäßigerweise 0,05 bis 0,15 m von der Drehachse der Antriebsvorrichtungen $1B_3$, $1B_4$ bzw. der Geraden, die durch die beiden Antriebsvorrichtungen $1B_3$, $1B_4$ verläuft, entfernt.

Geht man davon aus, dass das Fluggerät symmetrisch ausgestaltet ist, erhält man für den für $l_3$ zulässigen Bereich dieselben Werte. Werden beide Bedingungen berücksichtigt, ist der Massenschwerpunkt $S$, 250 zweckmäßig bezüglich der durch die Antriebsvorrichtungen und den Fluggeräterumpf definierten Ebene in einem quadratischen Bereich positioniert, der durch die angegebenen Grenzen bestimmt ist. Die Positionierung bezüglich der Vertikalrichtung ist nicht eingeschränkt.

Abschließend wird noch ausgeführt, dass der zweite erfindungsgemäße Aspekt nicht auf Fluggeräte mit vier Antriebsvorrichtungen beschränkt ist. Es ist auch möglich, dass beispielsweise entlang einer Richtung mehr als zwei Antriebsvorrichtungen angeordnet sind oder auch, dass einige Antriebsvorrichtungen auf zueinander parallelen Geraden angeordnet sind.

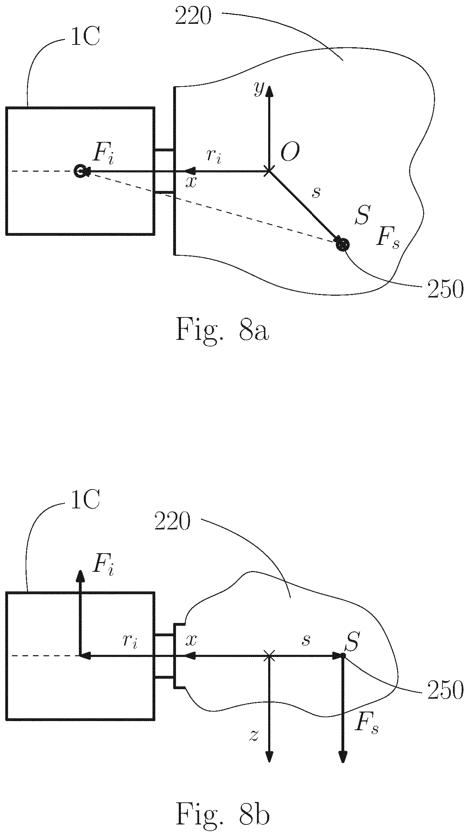

Die Gleichungen (17), (18), (20), (21) werden nun für ein erfindungsgemäßes Fluggerät mit $n$, $n > 2$, Antriebsvorrichtungen 1C verallgemeinert. Figur 8a zeigt einen Ausschnitt eines solchen Fluggeräts in Draufsicht; Figur 8b einen Ausschnitt des Fluggeräts in Seitenansicht. Wir nehmen an, dass die mathematisch-physikalische Beschreibung des Fluggeräts in einem kartesischen Koordinatensystem mit x-, y- und z-Achse erfolgt. Die $n$ Antriebsvorrichtungen 1C und der Fluggeräterumpf 220 befinden sich in der xy-Ebene, also in der Ebene mit z = 0. Die Antriebsvorrichtungen 1C sind um den Fluggeräterumpf 220 herum (sternförmig) in der Ebene z = 0 angeordnet. Der Ursprung $O$ des Koordinatensystems liege im geometrischen Zentrum des Fluggeräts. Dann sei $r_i$, $i \in \{1, ...,n\}$ die Ortsvektoren zum i-ten Schubvektor der entsprechenden Antriebsvorrichtungen 1C. $s$ sei der Ortsvektor zum Massenschwerpunkt $S$, 250 des Fluggeräts. Der Vektor der Gewichtskraft des Fluggeräts ist $F_S = (0,0,F_s)$. In dem hier interessierenden Fall des stabilen Schwebeflugs sind die Schubvektoren $F_i$, $i \in \{1, ..., n\}$, die von den Antriebsvorrichtungen erzeugt werden:

$$F_{i,} = (0,0,-F_i), \qquad i \in \{1, ..., n\}.$$

Schließlich rotieren im Schwebeflug die Antriebsvorrichtungen mit der Winkelgeschwindigkeit $\omega_i$, $i \in \{1,...,n\}$, wobei es sich hier um Vektoren handelt, die in der xy-Ebene liegen. Das bereits einleitend ausführlich beschriebene Drehmoment, das vom Fluggerät aufgebracht werden muss, ist dann unter Beachtung der Beziehung $M_i = a_i * F_i$:

$$M_i = a_i * |F_i| * \left(-\frac{\omega_i}{|\omega_i|}\right), \quad i \in \{1, ..., n\} . \qquad (30)$$

Die Gleichgewichtsbedingungen der Gleichungen (17), (18), (20), (21) lauten dann:

$$\sum F_Z = F_s - \sum_{i=1}^{n} F_i = 0 \qquad (31)$$

$$\sum M_s = \sum_{i=1}^{n}(r_i - s) \times F_i + \sum_{i=1}^{n} M_i = 0. \qquad (32)$$

"$\times$" bezeichnet das Kreuzprodukt.

Aus dem Drallsatz lässt sich der Ortsvektor $s$ des Schwerpunktes $S$, 250 wie folg ermitteln: Mit

$$\sum_{i=1}^{n}(r_i - s) \times F_i = -\sum_{i=1}^{n} M_i ,$$

$$\sum_{i=1}^{n} F_i \times \left((r_i - s) \times F_i\right) = -\sum_{i=1}^{n} F_i \times M_i ,$$

unter Verwendung der Graßmann-Identität:

$$\sum_{i=1}^{n}(F_i \cdot F_i) * (r_i - s) - \left(F_i \cdot (r_i - s)\right) * F_i = -\sum_{i=1}^{n} F_i \times M_i ,$$

und unter Berücksichtigung, dass $F_i$ immer normal auf ($r_i - s$) steht, wodurch deren Skalarprodukt null ist:

$$F_i \cdot (r_i - s) = 0 \quad \Rightarrow \quad \left(F_i \cdot (r_i - s)\right) * F_i = 0 ,$$

erhält man zunächst

$$\sum_{i=1}^{n}(F_i \cdot F_i) * (r_i - s) = -\sum_{i=1}^{n} F_i \times M_i ,$$

$$\sum_{i=1}^{n}(F_i \cdot F_i) * r_i - (F_i \cdot F_i) * s = -\sum_{i=1}^{n} F_i \times M_i ,$$

$$\sum_{i=1}^{n}(\boldsymbol{F}_i \cdot \boldsymbol{F}_i) * \boldsymbol{r}_i - \boldsymbol{s} * \sum_{i=1}^{n}(\boldsymbol{F}_i \cdot \boldsymbol{F}_i) = -\sum_{i=1}^{n} \boldsymbol{F}_i \times \boldsymbol{M}_i \,,$$

und schließlich den Ortsvektor $\boldsymbol{s}$ des Schwerpunktes $S$, 250:

$$\boldsymbol{s} = \frac{\sum_{i=1}^{n}(\boldsymbol{F}_i \cdot \boldsymbol{F}_i) * \boldsymbol{r}_i + \boldsymbol{F}_i \times \boldsymbol{M}_i}{\sum_{i=1}^{n}(\boldsymbol{F}_i \cdot \boldsymbol{F}_i)} \,. \tag{33}$$

Gleichung (32) liefert zwei Bedingungen, nämlich eine für die x-Komponenten der Drehmomente, und eine weitere für deren y-Komponenten. Die Gleichungen (31) und (32) (unter Beachtung des Zusammenhangs der Gleichung (30)) liefern somit drei Bedingungen für die Beträge $F_i$ der $n$ Schubvektoren sowie der zwei Koordinaten des Schwerpunkts. Es verbleiben somit $n + 2 - 3 = n - 1$ der $n$ Schubvektoren, die vorgegeben werden können. Ein zweckmäßiger Bereich bezüglich der Ebene, in der die Antriebsvorrichtungen 1C und der Fluggeräterumpf 220 liegen, lässt sich somit auch in dem hier betrachteten allgemeineren Fall bestimmen, indem die Schubvektoren von einer oder mehrerer der $n$ Antriebsvorrichtungen 1C variiert werden, und gefordert wird, dass der Massenschwerpunkt $S$, 250 derart positioniert sein muss (vgl. Gleichung (33)), dass der Drehmomentenausgleich gemäß Gleichung (32) von den Schubkräften / Schubvektoren der Antriebsvorrichtungen kompensiert werden kann. Dazu kann es zweckmäßig sein, eine oder mehrere der Antriebsvorrichtungen mit maximal zulässiger Schubkraft anzutreiben.

Dadurch, dass die optimale Position des Massenschwerpunkts in der betrachteten Konfiguration durch den Schnittpunkt zweier Geraden bestimmt ist, ist es zweckmäßig, die erste Richtung und/oder die zweite Richtung, entlang denen die Antriebsvorrichtungen im Wesentlichen in dieselbe Richtung drehen, als die Richtungen zu betrachten, die senkrecht zu zwei vorgegebenen Vorwärtsflugrichtungen stehen. In diesem Fall ist der Massenschwerpunkt somit bevorzugt (i) bezüglich einer auf der ersten Richtung senkrecht stehenden und in der durch die Antriebsvorrichtungen und den Fluggeräterumpf definierten Ebene liegenden Richtung aus dem geometrischen Zentrum heraus verschoben, und/oder (ii) bezüglich einer auf der zweiten Richtung senkrecht stehenden und in der durch die Antriebsvorrichtungen und den Fluggeräterumpf definierten Ebene liegenden Richtung aus dem geometrischen Zentrum heraus verschoben.

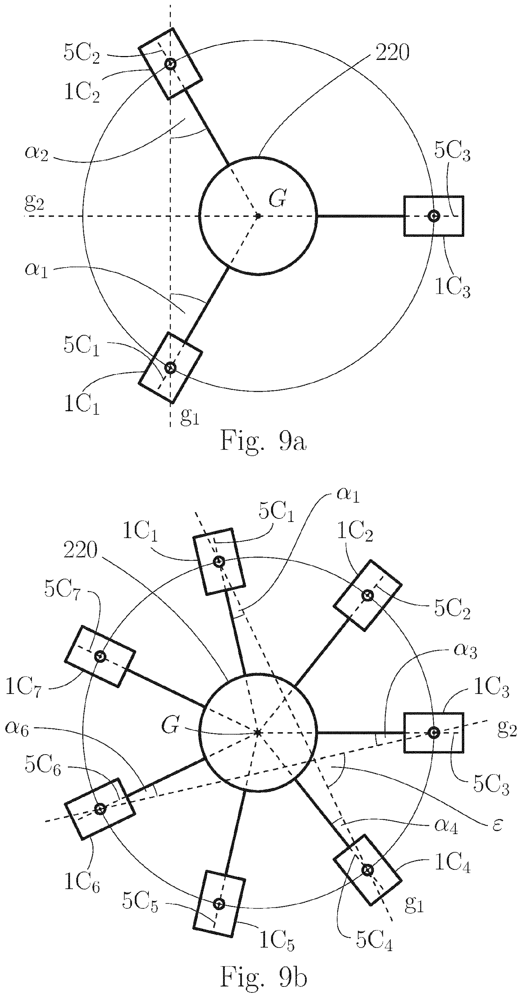

Figur 9a zeigt ein Ausführungsbeispiel gemäß dem zweiten Aspekt der Erfindung, bei dem drei Antriebsvorrichtungen $1C_1$, $1C_2$, $1C_3$ derart um den Fluggeräterumpf 220 des Fluggeräts angeordnet sind, dass sie die Ecken eines gleichseitigen Dreiecks bilden. Es ist gezeigt, dass die Antriebsvorrichtungen 1C, und $1C_2$ auf einer geraden $g_1$ angeordnet sind; $g_1$ definiert dabei die erste erfindungsgemäße Richtung. Die Antriebsvorrichtung $1C_3$ ist in dem gezeigten Ausführungsbeispiel auf einer Geraden $g_2$ angeordnet, die senkrecht auf der Geraden $g_1$ steht und durch das geometrische Zentrum $G$ des Fluggeräts, hier also durch das geometrische Zentrum $G$ des gleichseitigen Dreiecks, verläuft. Die Gerade $g_2$ definiert die erfindungsgemäße zweite Richtung. Die Drehachsen $5C_1$, $5C_2$, $5C_3$ der Antriebsvorrichtungen $1C_1$, $1C_2$ bzw. $1C_3$ zeigen hier zum geometrischen Zentrum $G$ hin (bzw. davon weg). In dem gezeigten Ausführungsbeispiel ist nur die Drehachse $5C_3$ exakt parallel zur durch $g_2$ definierten zweiten Richtung ausgerichtet. Die Drehachsen $5C_1$, $5C_2$ sind nicht exakt parallel zu der durch $g_1$ definierten ersten Richtung. Wie man mithilfe einfacher geometrischer Überlegungen feststellen kann, schließt die Drehachse 5C, mit der Geraden $g_1$ (ersten Richtung) einen Winkel $\alpha_1 = 30°$ ein; ebenso schließt die Drehachse $5C_2$ mit der Geraden $g_1$ (ersten Richtung) einen Winkel $\alpha_2 = 30°$ ein. Solche Winkel fallen unter den erfindungsgemäßen Begriff von im Wesentlichen in die erste Richtung ausgerichteten Drehachsen. Bevorzugt können die Winkel aber auch kleiner gewählt werden. Drehen die Antriebsvorrichtungen $1C_1$, $1C_2$ um diese Drehachsen im Wesentlichen in dieselbe Drehrichtung, wie oben definiert, tritt der erfindungsgemäße Erfolgt auch hier noch auf, wenn sich das Fluggerät insbesondere entlang der durch $g_2$ definierten zweiten Richtung bewegt. Drehen die Antriebsvorrichtungen $1C_1$, $1C_3$ um die zugehörigen Drehachsen 5C, bzw. $5C_3$ im Wesentlichen in dieselbe Drehrichtung, wirkt sich der erfindungsgemäße Vorteil insbesondere bei einer Bewegung entlang der Winkelhalbierenden $1C_1$-$G$-$1C_3$ positiv aus.

Figur 9b zeigt ein Fluggerät gemäß dem zweiten Aspekt der Erfindung, bei dem sieben Antriebsvorrichtungen $1C_1, ..., 1C_7$ in einer Ebene um den Fluggeräterumpf 220 herum angeordnet sind. Die Antriebsvorrichtungen $1C_1, ..., 1C_7$ sind derart angeordnet, dass sie die Ecken eines regelmäßigen Siebenecks bilden. Jede der Antriebsvorrichtungen ist um eine zugehörige Drehachse $5C_1, ..., 5C_7$ drehbar gelagert. In dem gezeigten Ausführungsbeispiel zeigen die Drehachsen $5C_1, ..., 5C_7$ zum geometrischen Zentrum $G$ des Fluggeräts bzw. des Siebenecks. Dieses Ausführungsbeispiel soll zur Beschreibung des allgemeinen Falls dienen, bei dem (eine ungerade Anzahl) $n = 2j + 1$, $j > 1$, Antriebsvorrichtungen $1C_1, ..., 1C_{2j+1}$ um den Fluggeräterumpf 220 derart angeordnet sind, dass sie die Ecken eines regelmäßigen $(2j+1)$-Ecks bilden. Die zugehörigen Drehachsen $5C_1, ..., 5C_{2j+1}$ sollen zum geometrischen Zentrum $G$ hin zeigen (oder davon weg). In diesem Fall ist es zweckmäßig, eine erste Gerade $g_1$ derart zu betrachten, die durch zwei Antriebsvorrichtungen 1C, und $1C_{(n+1)/2}$ verläuft; diese Gerade $g_1$ definiert die erfindungsgemäße erste Richtung. Weiter ist es zweckmäßig, eine zweite Gerade $g_2$ zu betrachten, die durch zwei Antriebsvorrichtungen $1C_k$ und $1C_{k+(n-1)/2}$ verläuft, $k = 1 + \lceil (n-1)/4 \rceil$ (wobei $\lceil \, \rceil$ ihr Argument auf die nächste ganze Zahl aufrundet); diese Gerade $g_2$ definiert die erfindungsgemäße zweite Richtung.

Mithilfe einfacher geometrischer Überlegungen erhält man, dass jede der Drehachsen $5C_1$ und $5C_{(n+1)/2}$ mit der Geraden $g_1$ (also der ersten Richtung) einen Winkel $\alpha_1 = \alpha_{(n+1)/2} = 90°/n$ einschließt; entsprechendes gilt für die Winkel zwischen den Drehachsen $5C_k$ und $5C_{k+(n-1)/2}$ und der Geraden $g_2$: $\alpha_R = \alpha_{k+(n-1)/2} = 90°/n$. Im Falle des gezeigten Siebenecks sind somit $\alpha_1 = a_3 = a_4 = \alpha_6 = 90°/7 \approx 12.86°$. Für ein regelmäßiges $(2j + 1)$-Ecks ist es daher vorteilhaft, wenn die Drehachsen der Antriebsvorrichtungen, die auf den die erste bzw. zweite Richtung definierenden Geraden $g_1$ und $g_2$ liegen, mit den zugehörigen Geraden $g_1$ bzw. $g_2$ einen Winkel zwischen 0° und 90°/n einschließen.

Der Winkel $\varepsilon$ zwischen $g_1$ und $g_2$ ist gegeben durch $\varepsilon = 90° \cdot \left(1 - \frac{1}{n}\right)$, wie man sich leicht durch Benutzung von geometrischen Relationen überlegt.

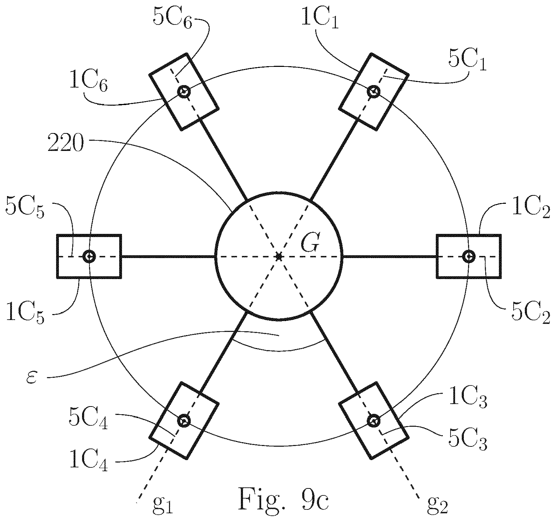

Figur 9c zeigt ein Fluggerät gemäß dem zweiten Aspekt der Erfindung, bei dem sechs Antriebsvorrichtungen $1C_1, ..., 1C_6$ in einer Ebene um den Fluggeräterumpf 220 herum angeordnet sind. Die Antriebsvorrichtungen $1C_1, ..., 1C_6$ sind derart angeordnet, dass sie die Ecken eines regelmäßigen Sechsecks bilden. Jede der Antriebsvorrichtungen ist um eine zugehörige Drehachse $5C_1, ..., 5C_6$ drehbar gelagert. In dem gezeigten Ausführungsbeispiel zeigen die Drehachsen $5C_1, ..., 5C_6$ zum geometrischen Zentrum $G$ des Fluggeräts bzw. des Sechsecks. Dieses Ausführungsbeispiel soll zur Beschreibung des allgemeinen Falls dienen, bei dem (eine gerade Anzahl) $n = 2j, j > 1$, Antriebsvorrichtungen $1C_1, ..., 1C_{2j}$ um den Fluggeräterumpf 220 derart angeordnet sind, dass sie die Ecken eines regelmäßigen $2j$-Ecks bilden. Der Fluggeräterumpf 220 befindet sich zwischen jeweils zwei gegenüberliegenden Antriebsvorrichtungen des regelmäßigen $2j$-Ecks. Die zugehörigen Drehachsen $5C_1, ..., 5C_{2j}$ sollen zum geometrischen Zentrum $G$ hin zeigen (oder davon weg). In diesem Fall ist es zweckmäßig, eine erste Gerade $g_1$ derart zu betrachten, die durch zwei Antriebsvorrichtungen 1C, und $1C_{n/2+1}$ verläuft; diese Gerade $g_1$ definiert die erfindungsgemäße erste Richtung. Weiter ist es zweckmäßig, eine zweite Gerade $g_2$ zu betrachten, die durch zwei Antriebsvorrichtungen $1C_k$ und $1C_{k+n/2}$ verläuft, $k = 1 + [n/4]$; diese Gerade $g_2$ definiert die erfindungsgemäße zweite Richtung.

In dem gezeigten Ausführungsbeispiel sind Drehachsen der auf den Geraden $g_1$ und $g_2$ angeordneten Antriebsvorrichtungen (mathematisch exakt) parallel in die erste bzw. zweite Richtung ausgerichtet.

Besonders bevorzugt stehen die erste und zweite Richtung im Wesentlichen senkrecht, speziell: senkrecht, aufeinander; dies ist immer dann möglich, wenn, die Antriebsvorrichtungen die Ecken eines $4j$-Ecks bilden.

Der Winkel $\varepsilon$ zwischen $g_1$ und $g_2$ (also erster und zweiter Richtung) ist für die oben beschriebenen $2j$-Ecke gegeben durch $\varepsilon = 90° \cdot \left(1 - \frac{1}{n} \cdot (n \bmod 4)\right)$, wie man sich leicht durch Benutzung von geometrischen Relationen überlegt.

Aus den vorstehenden Ausführungsbeispielen erkennt man, dass für die Anordnung einer beliebigen (geraden oder ungeraden) Anzahl von Antriebsvorrichtungen an den Ecken eines regelmäßigen $n$-Ecks es ausreicht, wenn die Drehachsen der Antriebsvorrichtungen, die auf den die erste bzw. zweite Richtung definierenden Geraden $g_1$ und $g_2$ liegen, mit den zugehörigen Geraden $g_1$ bzw. $g_2$ einen Winkel zwischen 0° und 30° (für $n > 2$), besonders bevorzugt zwischen 0° und 18° (für $n > 3$) einschließen; des Weiteren ist es zweckmäßig, wenn die Geraden $g_1$ und $g_2$ (und somit die erste und zweite Richtung) derart gewählt werden, dass der Winkel zwischen ihnen größer oder gleich 60° beträgt, speziell im Bereich zwischen 60° und 90° liegt.

**Anhang** (Herleitung des Zusammenhangs zwischen Schubkraft und Leistung)

Die Herleitung der Schubkraft und Leistung basiert auf der Strahltheorie, wodurch eine Antriebsvorrichtung / ein Rotor als Aktuatorscheibe ohne Information über Anzahl und Form der Rotorblätter betrachtet wird. Die Strömung wird dabei vereinfachend als eindimensional, quasistationär, inkompressibel und reibungsfrei definiert, wodurch sich die entsprechenden Erhaltungssätze für Masse, Impuls und Energie ergeben. Dabei werden nachfolgend alle Größen in der Aktuatorscheibenebene mit dem zusätzlichen Index $a$, alle Größen weit oberhalb der Aktuatorscheibenebene (Einströmebene) mit dem zusätzlichen Index 0 und alle Größen weit unterhalb der Aktuatorscheibenebene (Ausströmebene) mit dem zusätzlichen Index $\infty$ gekennzeichnet.

Massenerhaltungssatz:

Aufgrund der Annahmen bezüglich der Strömung folgt aus dem Massenerhaltungssatz der Massenstrom:

$$\dot{m} = \rho * A_n * (v_0 + v_{in}) = konstant \qquad n = 0, ..., a, ..., \infty$$

$\dot{m}$ ... *Massenstrom*
$\rho$ ... *Dichte*
$A$ ... *Fläche*

$v_0$ ... *Einströmgeschwindigkeit*
$v_i$ ... *induzierte Geschwindigkeit*

Impulserhaltungssatz:

Aufgrund der Annahmen bezüglich der Strömung folgt aus dem Impulserhaltungssatz die Schubkraft:

$$F = \dot{p} = \dot{m} * \Delta V = \dot{m} * \left( (v_0 + v_{i\infty}) - (v_0 + v_{i0}) \right)$$

*F ... Schub*
*$\dot{p}$ ... Impulsänderung*

Da der Rotor die Einströmebene nicht beeinflusst, gilt $v_{i0} = 0$, woraus

$$F = \dot{m} * v_{i\infty}$$

folgt. Durch Einsetzen des Massenstroms in der Aktuatorscheibenebene ergibt sich:

$$F = \rho * A_a * (v_0 + v_{ia}) * v_{i\infty}$$

Energieerhaltungssatz:

Aufgrund der Annahmen bezüglich der Strömung und $v_{i0} = 0$ folgt aus dem Energieerhaltungssatz die Leistung bzw. verrichtete Arbeit pro Zeiteinheit für die Aktuatorscheibenebene:

$$P = F * (v_0 + v_{ia}) = \Delta E_{kin} = \frac{\dot{m} * \left( (v_0 + v_{i\infty})^2 - v_0^2 \right)}{2} = \frac{\dot{m} * v_{i\infty} * (2 * v_0 + v_{i\infty})}{2}$$

*P ... Leistung*
Durch Einsetzen des Massenstroms in der Aktuatorscheibenebene folgt:

$$P = \frac{\rho * A_a * (v_0 + v_{ia}) * v_{i\infty} * (2 * v_0 + v_{i\infty})}{2}$$

Unter Verwendung der Schubkraft ergibt sich die Leistung zu:

$$P = \frac{F * (2 * v_0 + v_{i\infty})}{2} = F * \left( v_0 + \frac{v_{i\infty}}{2} \right)$$

Aus diesen Gleichungen ergibt sich direkt der Zusammenhang

$$v_{ia} = \frac{v_{i\infty}}{2} \ ,$$

wodurch die Leistung als

$$P = F * (v_0 + v_{ia}) = F * V_a$$

*$V_a$ ... totale Strömungsgeschwindigkeit*
ausgedrückt werden kann.

**Liste der Bezugszeichen**

# EP 4 091 939 B1

| | |
|---|---|
| 100 | Fluggerät gemäß dem ersten Aspekt der Erfindung |
| 120 | Fluggerätekörper |
| 1F | im vorderen Bereich angeordnete Antriebsvorrichtungen |
| 1R | im hinteren Bereich angeordnete Antriebsvorrichtungen |
| 101 | Längsrichtung des Fluggeräts 100 |
| 102 | Querrichtung des Fluggeräts 100 |
| 103 | Vertikalrichtung des Fluggeräts 100 |
| 121 | Bug / Nase des Fluggeräts 100 |
| 122 | Heck des Fluggeräts 100 |
| 1 | Antriebsvorrichtung |
| 2 | Rotorblätter einer Antriebsvorrichtung |
| 3 | Pitch-Mechanismus |
| 31 | Kopplungsvorrichtung |
| 32 | Ankopplungspunkt |
| 33 | Lagerungsvorrichtung |
| 4 | Offset-Vorrichtung |
| 11 | Scheibe der Antriebsvorrichtung 1 |
| 5 | Drehachse einer Antriebsvorrichtung |
| 51 | Drehrichtung einer Antriebsvorrichtung |
| 52 | Radius der Antriebsvorrichtung |
| 61 | Verbindungselement |
| 7, 71 | Kraft auf eine Antriebsvorrichtung / Schubvektor |
| 72 | Beitrag des Magnus-Effekts zum Schubvektor |
| 8 | Drehmoment auf eine Antriebsvorrichtung |
| 9 | Luftanströmung |
| 110 | Pfeil zur Angabe der Bewegungsrichtung des Fluggeräts |
| 150 | Massenschwerpunkt des Fluggeräts 100 |
| 701 | gesamter von den Antriebsvorrichtungen 1F erzeugter Schubvektor |
| 702 | gesamter von den Antriebsvorrichtungen 1R erzeugter Schubvektor |
| 81 | gesamtes von den Antriebsvorrichtungen 1F erzeugtes Drehmoment |
| 82 | gesamtes von den Antriebsvorrichtungen 1R erzeugtes Drehmoment |
| 131 | Abstand bez. der Längsrichtung zwischen Massenschwerpunkt 150 und Antriebsvorrichtungen 1F |
| 132 | Abstand bez. der Längsrichtung zwischen Massenschwerpunkt 150 und Antriebsvorrichtungen 1R |
| 160 | Gewichtskraft des Fluggeräts |
| $g_i$ | $i$-te Gerade, entlang der Antriebsvorrichtungen angeordnet sind |
| $n_i$ | Anzahl der Antriebsvorrichtungen, die entlang der Geraden $g_i$ angeordnet sind |
| $N$ | Gesamtzahl der Geraden |
| $K$ | Gesamtzahl der Antriebsvorrichtungen |
| $F_{ij}$ | der von der $j$-ten auf der Geraden $g_i$ angeordneten Antriebsvorrichtung erzeugte Schubvektor |
| $F_i$ | Schubvektor, der von sämtlichen auf einer Geraden $g_i$ angeordneten Antriebsvorrichtungen erzeugt wird |
| $M_i$ | Drehmoment, das von sämtlichen auf einer Geraden $g_i$ angeordneten Antriebsvorrichtungen erzeugt wird |
| $x_i$ | Längskoordinate der Geraden $g_i$ |
| $X_S$ | Längskoordinate des Massenschwerpunkts 150 |
| 200 | Fluggerät gemäß dem zweiten Aspekt der Erfindung |
| 220 | Fluggeräterumpf |
| 1A, 1B, 1C, 1A$_1$, 1A$_2$, 1B$_3$, 1B$_4$, 1C$_i$ | Antriebsvorrichtungen des Fluggeräts 200 |
| 221, 222 | Arme zur Kopplung der Antriebsvorrichtungen 1A, 1B an den Fluggeräterumpf 220 |
| 201 | erste Richtung |
| 202 | zweite Richtung |
| 203 | Vertikalrichtung |
| 5A | Drehachsen der Antriebsvorrichtungen 1A |
| 5B | Drehachsen der Antriebsvorrichtungen 1B |

| 5C$_i$ | Drehachse der Antriebsvorrichtung 1C$_i$ |
| $\alpha_i$ | Winkel zwischen Drehachse 5C$_i$ und erster oder zweiter Richtung |
| $\varepsilon$ | Winkel zwischen erster und zweiter Richtung |
| 250 | Massenschwerpunkt des Fluggeräts 200 |
| G | geometrisches Zentrum |
| O | Ursprung des Koordinatensystems |
| 2001, 2002 | Schubvektoren, die durch die Antriebsvorrichtungen 1A$_1$ bzw. 1A$_2$ erzeugt werden |
| 2003, 2004 | Schubvektoren, die durch die Antriebsvorrichtungen 1B$_3$ bzw. 1B$_4$ erzeugt werden |
| 2012 | gesamter Schubvektor, der von den Antriebsvorrichtungen 1A$_1$, 1A$_2$ erzeugt wird2034 gesamter Schubvektor, der von den Antriebsvorrichtungen 1B$_3$, 1B$_4$ erzeugt wird |
| 230 | Abstand der Schubvektoren / geometrischen Zentren der Antriebsvorrichtungen 1A$_1$, 1A$_2$ |
| 231 | Abstand des Schubvektors 2001 vom Massenschwerpunkt 250 des Fluggeräts |
| 232 | Abstand des Schubvektors 2002 vom Massenschwerpunkt 250 des Fluggeräts |
| 234 | Abstand zwischen dem Massenschwerpunkt 250 und dem Schubvektor $F_{34}$, 2034 / den Drehachsen der Antriebsvorrichtungen 1B$_3$, 1B$_4$ / der Geraden, die durch die Antriebsvorrichtungen 1B$_3$, 1B$_4$ verläuft |
| 235 | Abstand der Schubvektoren / geometrischen Zentren der Antriebsvorrichtungen 1B$_3$, 1B$_4$ |
| 236 | Abstand des Schubvektors 2003 vom Massenschwerpunkt 250 des Fluggeräts |
| 237 | Abstand des Schubvektors 2004 vom Massenschwerpunkt 250 des Fluggeräts |
| 239 | Abstand zwischen dem Massenschwerpunkt 250 und dem Schubvektor $F_{12}$, 2012 / den Drehachsen der Antriebsvorrichtungen 1A$_1$, 1A$_2$ / der Geraden, die durch die Antriebsvorrichtungen 1A$_1$, 1A$_2$ verläuft |
| 251 | Drehrichtung der Antriebsvorrichtungen 1B$_3$, 1B$_4$ |
| 280 | gesamtes von den Antriebsvorrichtungen 1B$_3$, 1B$_4$ erzeugtes Drehmoment |
| 285 | gesamtes von den Antriebsvorrichtungen 1A$_1$, 1A$_2$ erzeugtes Drehmoment |

**Patentansprüche**

1. Fluggerät (100) umfassend

- einen Fluggerätekörper (120), der eine Längsrichtung (101), eine Vertikalrichtung (103) und eine Querrichtung (102) definiert, wobei die Längsrichtung der Richtung vom Heck (122) zur Nase (121) des Fluggeräts (100) entspricht, die Vertikalrichtung mit der Richtung der Erdanziehungskraft übereinstimmt, wenn das Fluggerät (100) am Boden ruht, und die Querrichtung senkrecht auf der Längsrichtung und der Vertikalrichtung steht, und
- mindestens zwei Antriebsvorrichtungen (1, 1F, 1R), die um jeweils eine zugeordnete Drehachse (5) drehbar sind, um einen jeweils zugehörigen Schubvektor (701, 702) zu erzeugen; wobei

eine erste Anzahl der Antriebsvorrichtungen (1F) entlang einer ersten Geraden, die parallel zur Querrichtung (102) verläuft, angeordnet ist, und eine zweite Anzahl der Antriebsvorrichtungen (1R) entlang einer zweiten Geraden, die parallel zur Querrichtung (102) verläuft, angeordnet ist,
die erste Gerade von der zweiten Geraden beabstandet ist, und
der Massenschwerpunkt des Fluggeräts (100) bezüglich der Längsrichtung (101) zwischen der ersten Geraden und der zweiten Geraden positioniert ist;

wobei das Fluggerät (100) dazu ausgelegt ist, einen Schwebeflug durchzuführen, bei dem sämtliche auf das Fluggerät wirkenden Kräfte und sämtliche bezüglich des Massenschwerpunkts (150) des Fluggeräts am Fluggerät angreifenden Drehmomente im Wesentlichen verschwinden, dadurch, dass im Schwebeflug

- jede der zugeordneten Drehachsen (5) im Wesentlichen in Querrichtung (102) des Fluggerätekörpers ausgerichtet ist, und
- jede der mindestens zwei Antriebsvorrichtungen (1, 1F, 1R) im Wesentlichen in dieselbe Drehrichtung (51) um die jeweils zugeordnete Drehachse (5) dreht.

**2.** Fluggerät (100) nach Anspruch 1, wobei die erste Anzahl der Antriebsvorrichtungen (1F) bezüglich der Längsrichtung (101) in einem vorderen Bereich des Flüggeräts angeordnet ist, und die zweite Anzahl der Antriebsvorrichtungen (1R) bezüglich der Längsrichtung (101) in einem hinteren Bereich des Fluggeräts angeordnet ist.

**3.** Fluggerät (100) nach Anspruch 2, wobei
der Massenschwerpunkt (150) des Fluggeräts, wenn es den Schwebeflug ausführt, in Längsrichtung in einem Abstand $l_1$ von der Geraden, entlang der die Antriebsvorrichtungen (1F) im vorderen Bereich angeordnet sind, positioniert ist, wobei

$$l_{1_{min}} \leq l_1 \leq l_{1_{max}} ,$$

mit

$$l_{1_{min}} = \frac{a_1 + a_2}{2} + \frac{l}{R_{max}+1} \quad \text{und} \quad l_{1_{max}} = \frac{a_1 + a_2}{2} + \frac{l}{R_{min}+1} ,$$

worin

$R_{min}$ ein minimales Verhältnis zwischen den zulässigen Werten der den Schubvektoren (701) entsprechenden Schubkräften der im vorderen Bereich angeordneten Antriebsvorrichtungen (1F), einerseits, und den zulässigen Werten der den Schubvektoren (702) entsprechenden Schubkräften der im hinteren Bereich angeordneten Antriebsvorrichtungen (1R), andererseits,
$R_{max}$ ein maximales Verhältnis zwischen den zulässigen Werten der den Schubvektoren (701) entsprechenden Schubkräften der im vorderen Bereich angeordneten Antriebsvorrichtungen (1F), einerseits, und den zulässigen Werten der den Schubvektoren (702) entsprechenden Schubkräften der im hinteren Bereich angeordneten Antriebsvorrichtungen (1R), andererseits,
$l$ der Abstand zwischen erster Geraden und zweiter Geraden,
$a_1$ eine die Drehmomente und Schubvektoren verknüpfende Kennzahl für die im vorderen Bereich angeordneten Antriebsvorrichtungen (1F), und
$a_2$ eine die Drehmomente und Schubvektoren verknüpfende Kennzahl für die im hinteren Bereich angeordneten Antriebsvorrichtungen (1R) sind.

**4.** Fluggerät (100) nach einem der vorhergehenden Ansprüche, dazu ausgelegt, dass im Schwebeflug die zugeordneten Drehachsen parallel ausgerichtet sind.

**5.** Fluggerät (200) umfassend

- einen Fluggeräterumpf (220), und
- mindestens drei Antriebsvorrichtungen (1A, 1B), die um den Fluggeräterumpf herum im Wesentlichen in einer Ebene gelagert sind, und die um eine jeweils zugeordnete Drehachse (5A, 5B) drehbar sind, um einen jeweils zugehörigen Schubvektor (2001, 2002, 2003, 2004) zu erzeugen;
wobei das Fluggerät (200) dazu ausgelegt ist, einen Schwebeflug durchzuführen, bei dem sämtliche auf das Fluggerät wirkenden Kräfte und sämtliche bezüglich des Massenschwerpunkts (250) des Fluggeräts am Fluggerät angreifenden Drehmomente im Wesentlichen verschwinden, dadurch, dass im Schwebeflug

- die zugeordneten Drehachsen (5A) von zwei der mindestens drei Antriebsvorrichtungen (1A) im Wesentlichen in eine erste Richtung (201) ausgerichtet sind, und die zugeordnete Drehachse (5B) von einer weiteren der mindestens drei Antriebsvorrichtungen (1B) im Wesentlichen in eine zweite Richtung (202) ausgerichtet ist, wobei

- die erste Richtung (201) nicht parallel zur zweiten Richtung (202) ist,
- die erste Richtung (201) und die zweite Richtung (202) in der Ebene liegen,

und
- jede der zwei Antriebsvorrichtungen (1A) mit im Schwebeflug in die erste Richtung (201) ausgerichteten Drehachsen (5A) im Wesentlichen in dieselbe Drehrichtung um die jeweils zugeordnete Drehachse (5A) dreht.

6. Fluggerät (200) nach Anspruch 5, umfassend

   - mindestens vier Antriebsvorrichtungen (1A, 1B), die um den Fluggeräterumpf herum gelagert sind, und die um eine jeweils zugeordnete Drehachse (5A, 5B) drehbar sind, um einen jeweils zugehörigen Schubvektor (2001, 2002, 2003, 2004) zu erzeugen;
   wobei das Fluggerät (200) dazu ausgelegt ist, den Schwebeflug durchzuführen, dadurch, dass im Schwebeflug

     - die zugeordneten Drehachsen (5A) von zwei der mindestens vier Antriebsvorrichtungen (1A) im Wesentlichen in die erste Richtung (201) ausgerichtet sind, und die zugeordneten Drehachsen (5B) von zwei weiteren der mindestens vier Antriebsvorrichtungen (1B) im Wesentlichen in die zweite Richtung (202) ausgerichtet sind, wobei
     - jede der zwei Antriebsvorrichtungen (1A) mit im Schwebeflug in die erste Richtung (201) ausgerichteten Drehachsen (5A) im Wesentlichen in dieselbe Drehrichtung um die jeweils zugeordnete Drehachse (5A) dreht, und/oder jede der zwei Antriebsvorrichtungen (5B) mit im Schwebeflug in die zweite Richtung (202) ausgerichteten Drehachsen (5B) im Wesentlichen in dieselbe Drehrichtung um die jeweils zugeordnete Drehachse (5B) dreht.

7. Fluggerät (200) nach Anspruch 5, wobei drei Antriebsvorrichtungen derart um den Fluggeräterumpf herum angeordnet sind, dass sie die Ecken eines gleichseitigen Dreiecks bilden, wobei

     - sich der Fluggeräterumpf (220) im geometrischen Zentrum des Dreiecks befindet,
     - die erste Richtung durch eine Gerade definiert wird, auf der zwei der drei Antriebsvorrichtungen liegen,
     - die zweite Richtung im Wesentlichen senkrecht auf der ersten Richtung steht, und
     - die Drehachse einer jeden der zwei auf der in die erste Richtung zeigenden Geraden liegenden Antriebsvorrichtungen mit der Geraden einen Winkel einschließt, der im Bereich zwischen 0° und 30° liegt.

8. Fluggerät (200) nach Anspruch 6, wobei $n$ Antriebsvorrichtungen derart um den Fluggeräterumpf herum angeordnet sind, dass sie die Ecken eines regelmäßigen n-Ecks, n > 3, bilden, wobei

     - sich der Fluggeräterumpf (220) im geometrischen Zentrum des n-Ecks befindet,
     - die erste Richtung durch eine erste Gerade definiert wird, auf der zwei der $n$ Antriebsvorrichtungen liegen,
     - die zweite Richtung durch eine zweite Gerade definiert wird, auf der zwei weitere der $n$ Antriebsvorrichtungen liegen,
     - die Drehachse einer jeden der zwei auf der in die erste Richtung zeigenden ersten Geraden liegenden Antriebsvorrichtungen mit der ersten Geraden einen Winkel einschließt, der im Bereich zwischen 0° und 18° liegt.

9. Fluggerät (200) nach Anspruch 8, wobei der Winkel zwischen der ersten Geraden und der zweiten Geraden im Bereich zwischen 72° und 90° liegt.

10. Fluggerät (200) nach einem der Ansprüche 6 bis 9, wobei

     - die zweite Richtung (202) im Wesentlichen senkrecht zur ersten Richtung (201) steht, und
     - zwei der mindestens vier Antriebsvorrichtungen (1A) entlang der ersten Richtung (201) angeordnet sind, und die zwei weiteren der mindestens vier Antriebsvorrichtungen (1B) entlang der im Wesentlichen senkrecht zur ersten Richtung stehenden zweiten Richtung (202) angeordnet sind.

11. Fluggerät (200) nach Anspruch 10, wobei

     der Massenschwerpunkt (250) des Fluggeräts, wenn es den Schwebeflug ausführt, in der ersten Richtung (201) in einem Abstand $l_{34}$ von einer Geraden, entlang der die Antriebsvorrichtungen (1B) in der zweiten Richtung (202) angeordnet sind, positioniert ist, wobei

$$l_{34_{min}} \leq l_{34} \leq l_{34_{max}} ,$$

     mit

$$l_{34min} = \frac{(R_{max}+3)*l+(R_{max}+1)*2*a_{34}}{(R_{max}+1)*4} - \frac{l}{2}$$

und

$$l_{34max} = \frac{(R_{min}+3)*l+(R_{min}+1)*2*a_{34}}{(R_{min}+1)*4} - \frac{l}{2},$$

worin

$R_{min}$ ein minimales Verhältnis zwischen den zulässigen Werten der den Schubvektoren (2001, 2002) entsprechenden Schubkräften der entlang der ersten Richtung angeordneten Antriebsvorrichtungen (1A), $R_{max}$ ein maximales Verhältnis zwischen den zulässigen Werten der den Schubvektoren (2001, 2002) entsprechenden Schubkräften der entlang der ersten Richtung angeordneten Antriebsvorrichtungen (1A), $a_{34}$ eine die Drehmomente und Schubvektoren verknüpfende Kennzahl für die entlang der zweiten Richtung (202) angeordneten Antriebsvorrichtungen (1B), und $l$ der Abstand der geometrischen Zentren der in der ersten Richtung angeordneten Antriebsvorrichtungen (1A) sind;

und/oder
der Massenschwerpunkt (250) des Fluggeräts, wenn es den Schwebeflug ausführt, in der zweiten Richtung (202) in einem Abstand $l_{12}$ von einer Geraden, entlang der die Antriebsvorrichtungen (1A) in der ersten Richtung (201) angeordnet sind, positioniert ist, wobei

$$l_{12min} \leq l_{12} \leq l_{12max},$$

mit

$$l_{12min} = \frac{(R'_{max}+3)*l'+(R'_{max}+1)*2*a_{12}}{(R'_{max}+1)*4} - \frac{l'}{2}$$

und

$$l_{12max} = \frac{(R'_{min}+3)*l'+(R'_{min}+1)*2*a_{12}}{(R'_{min}+1)*4} - \frac{l'}{2},$$

worin

$R'_{min}$ ein minimales Verhältnis zwischen den zulässigen Werten der den Schubvektoren (2003, 2004) entsprechenden Schubkräften der entlang der zweiten Richtung (202) angeordneten Antriebsvorrichtungen (1B),

$R'_{max}$ ein maximales Verhältnis zwischen den zulässigen Werten der den Schubvektoren (2003, 2004) entsprechenden Schubkräften der entlang der zweiten Richtung (202) angeordneten Antriebsvorrichtungen (1B),

$a_{12}$ eine die Drehmomente und Schubvektoren verknüpfende Kennzahl für die entlang der ersten Richtung (201) angeordneten Antriebsvorrichtungen (1A), und $l'$ der Abstand der geometrischen Zentren der in der zweiten Richtung angeordneten Antriebsvorrichtungen (1B) sind.

12. Fluggerät (100, 200) nach einem der vorhergehenden Ansprüche, weiter dazu ausgelegt, dass im Schwebeflug der Massenschwerpunkt (150, 250) des Fluggeräts derart positioniert ist, dass dadurch bewirkt wird, dass sämtliche auf das Fluggerät wirkenden Kräfte und sämtliche bezüglich des Massenschwerpunkts des Fluggeräts am Fluggerät angreifenden Drehmomente im Wesentlichen verschwinden, wenn eine oder mehrere der Antriebsvorrichtungen einen jeweils ihnen zugeordneten bestimmten vorgegebenen Schubvektor erzeugen.

**13.** Fluggerät (100, 200) nach einem der vorhergehenden Ansprüche, wobei das Fluggerät weiter dazu ausgelegt ist, bei annähernd gleichen zugeordneten bestimmten vorgegebenen Schubvektoren den Schwebeflug auszuführen.

**14.** Fluggerät (100, 200) nach einem der vorhergehenden Ansprüche, das weiter eine Verlagerungsvorrichtung aufweist, mit der der Massenschwerpunkt (150, 250) des Fluggeräts verlagerbar ist.

**15.** Fluggerät (100, 200) nach Anspruch 14, ferner umfassend einen Treibstofftank zur Versorgung der Antriebsvorrichtungen mit Treibstoff und/oder eine Batterie zur Versorgung der Antriebsvorrichtungen mit elektrischer Energie, wobei die Verlagerungsvorrichtung dazu ausgelegt ist, Treibstoff aus dem Treibstofftank oder die Batterie innerhalb des Fluggeräts zu verlagern, um damit den Massenschwerpunkt (150, 250) so zu positionieren, dass das Fluggerät den Schwebeflug durchführt, wenn eine oder mehrere der Antriebsvorrichtungen den jeweils zugeordneten bestimmten vorgegebenen Schubvektor erzeugen.

**16.** Fluggerät (100, 200) nach einem der vorhergehenden Ansprüche, umfassend eine Schubvektorsteuerung, um die Schubvektoren der Antriebsvorrichtungen individuell zu steuern.

**17.** Verfahren zur Steuerung eines Fluggeräts (100) mit

- einem Fluggerätekörper (120), der eine Längsrichtung, eine Vertikalrichtung und eine Querrichtung definiert, wobei die Längsrichtung der Richtung vom Heck (122) zur Nase (121) des Fluggeräts entspricht, die Vertikalrichtung mit der Richtung der Erdanziehungskraft übereinstimmt, wenn das Fluggerät (100) am Boden ruht, und die Querrichtung senkrecht auf der Längsrichtung und der Vertikalrichtung steht, und
- mindestens zwei Antriebsvorrichtungen (1, 1F, 1R), die um eine jeweils zugeordnete Drehachse (5) drehbar sind, um einen jeweils zugehörigen Schubvektor zu erzeugen, wobei eine erste Anzahl der Antriebsvorrichtungen (1F) entlang einer ersten Geraden, die parallel zur Querrichtung (102) verläuft, angeordnet ist, und eine zweite Anzahl der Antriebsvorrichtungen (1R) entlang einer zweiten Geraden, die parallel zur Querrichtung (102) verläuft, angeordnet ist,

die erste Gerade von der zweiten Geraden beabstandet ist, und der Massenschwerpunkt des Fluggeräts (100) bezüglich der Längsrichtung (101) zwischen der ersten Geraden und der zweiten Geraden positioniert ist; umfassend die folgenden Schritte:

- Bestimmen der zugehörigen Schubvektoren derart, dass das Fluggerät einen Schwebeflug durchführt, wenn jede der den mindestens zwei Antriebsvorrichtungen zugeordneten Drehachsen im Wesentlichen in Querrichtung des Fluggerätekörpers ausgerichtet ist, und jede der mindestens zwei Antriebsvorrichtungen im Wesentlichen in dieselbe Drehrichtung um die jeweils zugeordnete Drehachse dreht, wobei im Schwebeflug sämtliche auf das Fluggerät wirkenden Kräfte und sämtliche bezüglich des Massenschwerpunkts (150) des Fluggeräts am Fluggerät angreifenden Drehmomente im Wesentlichen verschwinden,
- Antreiben jeder der Antriebsvorrichtungen (1F, 1R) im Wesentlichen in dieselbe Drehrichtung derart, dass die jeweilige Antriebsvorrichtungen den bestimmten zugehörigen Schubvektor erzeugt.

**18.** Verfahren zur Steuerung eines Fluggeräts (200) mit

- einem Fluggeräterumpf (220), und
- mindestens drei Antriebsvorrichtungen (1A, 1B), die um den Fluggeräterumpf herum im Wesentlichen in einer Ebene gelagert sind, und die um eine jeweils zugeordnete Drehachse (5A, 5B) drehbar sind, um einen jeweils zugehörigen Schubvektor zu erzeugen, umfassend die folgenden Schritte:

- Bestimmen der zugehörigen Schubvektoren derart, dass das Fluggerät einen Schwebeflug durchführt, wenn zwei der den mindestens drei Antriebsvorrichtungen (1A) zugeordneten Drehachsen (5A) im Wesentlichen in eine erste Richtung (201) ausgerichtet sind und im Wesentlichen in dieselbe Drehrichtung um die jeweils zugeordnete Drehachse (5A) drehen, und/oder eine weitere der den mindestens drei Antriebsvorrichtungen (1B) zugeordneten Drehachsen (5B) im Wesentlichen in eine zweite Richtung (202), die nicht parallel zur ersten Richtung ist, ausgerichtet ist, wobei die erste Richtung (201) und die zweite Richtung (202) in der Ebene liegen,

wobei im Schwebeflug sämtliche auf das Fluggerät wirkenden Kräfte und sämtliche bezüglich des Massenschwerpunkts (250) des Fluggeräts am Fluggerät angreifenden Drehmomente im Wesentlichen verschwinden,

- Ausrichten der zugeordneten Drehachsen (5A) von zwei der mindestens drei Antriebsvorrichtungen (1A) im Wesentlichen in die erste Richtung (201), und Ausrichten der zugeordneten Drehachse (5B) der einen weiteren der mindestens drei Antriebsvorrichtungen (1B) im Wesentlichen in die zweite Richtung (202),
- Antreiben jeder der Antriebsvorrichtungen (1A, 1B) derart, dass die jeweilige Antriebsvorrichtungen in eine zugeordnete Drehrichtung dreht und den bestimmten zugehörigen Schubvektor erzeugt,

wobei jede der zwei Antriebsvorrichtungen (1A) mit im Wesentlichen in die erste Richtung ausgerichteten Drehachsen im Wesentlichen in dieselbe Drehrichtung um die jeweils zugeordnete Drehachse (5A) dreht.

19. Verfahren zur Steuerung eines Fluggeräts (100, 200) gemäß Anspruch 17 oder 18, wobei sämtliche der bestimmten zugehörigen Schubvektoren annähernd identisch gewählt werden.

20. Verfahren zur Steuerung eines Fluggeräts (100, 200) gemäß einem der Ansprüche 17 bis 19, weiter den folgenden Schritt umfassend:

- Positionieren des Massenschwerpunkts (150, 250) des Fluggeräts derart, dass dadurch bewirkt wird, dass sämtliche auf das Fluggerät wirkenden Kräfte und sämtliche bezüglich des Massenschwerpunkts des Fluggeräts am Fluggerät angreifenden Drehmomente im Wesentlichen verschwinden, wenn die Antriebsvorrichtungen die jeweils ihnen zugeordneten bestimmten vorgegebenen Schubvektor erzeugen.

21. Fluggerät (100, 200) oder Verfahren nach einem der vorhergehenden Ansprüche, wobei jede der Antriebsvorrichtungen (1, 1F, 1R, 1A, 1B) konstruktiv identisch ausgestaltet ist.

22. Fluggerät (100, 200) oder Verfahren nach einem der vorhergehenden Ansprüche, wobei die Antriebsvorrichtungen (1, 1F, 1R, 1A, 1B) Cyclogyro-Rotoren umfassen.

**Claims**

1. Aircraft (100) comprising

- an aircraft body (120) defining a longitudinal direction (101), a vertical direction (103), and a transverse direction (102), the longitudinal direction corresponding to the direction from the tail (122) to the nose (121) of the aircraft (100), the vertical direction corresponding to the direction of the earth's gravitational force when the aircraft (100) is resting on the ground, and the transverse direction being perpendicular to the longitudinal direction and the vertical direction; and
- at least two propulsion devices (1, 1F, 1R), each rotatable about an associated axis of rotation (5) to generate a respective associated thrust vector (701, 702); wherein

a first number of the propulsion devices (1F) is arranged along a first straight line parallel to the transverse direction (102), and a second number of the propulsion devices (1R) is arranged along a second straight line parallel to the transverse direction (102),
the first straight line is spaced apart from the second straight line, and
the center of mass of the aircraft (100) is positioned with respect to the longitudinal direction (101) between the first straight line and the second straight line;

wherein the aircraft (100) is adapted to perform a hover flight in which all forces acting on the aircraft and all torques acting on the aircraft with respect to the center of mass (150) of the aircraft substantially disappear, **characterized in that** in the hover flight

- each of the associated axes of rotation (5) is oriented substantially in the transverse direction (102) of the aircraft body, and
- each of the at least two propulsion devices (1, 1F, 1R) rotates substantially in the same direction of rotation (51) about the respective associated axis of rotation (5).

2. The aircraft (100) according to claim 1, wherein the first number of the propulsion devices (1F) is arranged in a front region of the aircraft with respect to the longitudinal direction (101), and the second number of the propulsion devices (1R) is arranged in a rear region of the aircraft with respect to the longitudinal direction (101).

3. Aircraft (100) according to claim 2, wherein
the center of mass (150) of the aircraft, when performing hover flight, is positioned longitudinally at a distance $l_1$ from the straight line along which the propulsion devices (1F) are arranged in the front region, wherein

$$l_{1_{min}} \leq l_1 \leq l_{1_{max}} ,$$

with

$$l_{1_{min}} = \frac{a_1 + a_2}{2} + \frac{l}{R_{max} + 1} \quad \text{and} \quad l_{1_{max}} = \frac{a_1 + a_2}{2} + \frac{l}{R_{min} + 1} ,$$

wherein

$R_{min}$ is a minimum ratio between the permissible values of the thrust forces, corresponding to the thrust vectors (701), of the propulsion devices (1F) arranged in the front region, on the one hand, and the permissible values of the thrust forces, corresponding to the thrust vectors (702), of the propulsion devices (1R) arranged in the rear region, on the other hand,
$R_{max}$ is a maximum ratio between the permissible values of thrust forces, corresponding to the thrust vectors (701), of the propulsion devices (1F) arranged in the front region, on the one hand, and the permissible values of the thrust forces, corresponding to the thrust vectors (702), of the propulsion devices (1R) arranged in the rear region, on the other hand,
$l$ is the distance between the first straight line and the second straight line,
$a_1$ is a characteristic number, associating the torques and thrust vectors, for the propulsion devices (1F) arranged in the front region, and
$a_2$ is a characteristic number, associating the torques and thrust vectors, for the propulsion devices (1R) located in the rear region.

4. Aircraft (100) according to any one of the preceding claims, adapted to have the associated axes of rotation aligned in parallel during hover flight.

5. Aircraft (200) comprising

 - an aircraft fuselage (220), and
 - at least three propulsion devices (1A, 1B) mounted around the aircraft fuselage substantially in a plane and rotatable about a respective associated axis of rotation (5A, 5B) to generate a respective associated thrust vector (2001, 2002, 2003, 2004);

wherein the aircraft (200) is adapted to perform a hover flight in which all forces acting on the aircraft and all torques acting on the aircraft with respect to the center of mass (250) of the aircraft substantially disappear, **characterized in that** in the hover flight

 - the associated axes of rotation (5A) of two of the at least three propulsion devices (1A) are substantially aligned in a first direction (201), and the associated axis of rotation (5B) of another of the at least three propulsion devices (1B) is substantially aligned in a second direction (202), wherein

  - the first direction (201) is not parallel to the second direction (202),
  - the first direction (201) and the second direction (202) lie in the plane, and
  - each of the two propulsion devices (1A) with axes of rotation (5A) oriented in the first direction (201) in hover flight rotates in substantially the same direction of rotation about the respective associated axis of rotation (5A).

6. Aircraft (200) according to claim 5, comprising.

 - at least four propulsion devices (1A, 1B) mounted around the aircraft fuselage and rotatable about a respective associated axis of rotation (5A, 5B) to generate a respective associated thrust vector (2001, 2002, 2003, 2004); wherein the aircraft (200) is adapted to perform the hover flight, in that in the hover flight

- the associated axes of rotation (5A) of two of the at least four propulsion devices (1A) are substantially aligned in the first direction (201), and the associated axes of rotation (5B) of two further of the at least four propulsion devices (1B) are substantially aligned in the second direction (202), wherein
- each of the two propulsion devices (1A) with axes of rotation (5A) oriented in hover flight in the first direction (201) rotates substantially in the same direction of rotation about the respectively associated axis of rotation (5A), and/or each of the two propulsion devices (5B) with axes of rotation (5B) oriented in hover flight in the second direction (202) rotates substantially in the same direction of rotation about the respectively associated axis of rotation (5B).

7. Aircraft (200) according to claim 5, wherein three propulsion devices are arranged around the aircraft fuselage such that they form the edges of an equilateral triangle, wherein

- the aircraft fuselage (220) is located in the geometric center of the triangle,
- the first direction is defined by a straight line on which two of the three propulsion devices lie,
- the second direction is substantially perpendicular to the first direction, and
- the axis of rotation of each of the two propulsion devices lying on the straight line pointing in the first direction includes an angle with the straight line which is in the range between 0° and 30°.

8. Aircraft (200) according to claim 6, wherein *n* propulsion devices are arranged around the aircraft fuselage in such a way that they form the vertices of a regular polygon with n edges, n > 3, wherein

- the aircraft fuselage (220) is located in the geometric center of the polygon with n edges,
- the first direction is defined by a first straight line on which two of the n propulsion devices lie,
- the second direction is defined by a second straight line on which two more of the *n* propulsion devices lie,
- the axis of rotation of each of the two propulsion devices lying on the first straight line pointing in the first direction includes an angle with the first straight line which is in the range between 0° and 18°.

9. Aircraft (200) according to claim 8, wherein the angle between the first straight line and the second straight line is in the range between 72° and 90°.

10. Aircraft (200) according to any one of claims 6 to 9, wherein

- the second direction (202) is substantially perpendicular to the first direction (201), and
- two of the at least four propulsion devices (1A) are arranged along the first direction (201), and the two other of the at least four propulsion devices (1B) are arranged along the second direction (202) substantially perpendicular to the first direction.

11. Aircraft (200) according to claim 10, wherein

the center of mass (250) of the aircraft, when performing hover flight, is positioned in the first direction (201) at a distance $l_{34}$ from a straight line along which the propulsion devices (1B) are arranged in the second direction (202), wherein

$$l_{34_{min}} \leq l_{34} \leq l_{34_{max}} \, ,$$

with

$$l_{34_{min}} = \frac{(R_{max}+3)*l+(R_{max}+1)*2*a_{34}}{(R_{max}+1)*4} - \frac{l}{2}$$

and

$$l_{34_{max}} = \frac{(R_{min}+3)*l+(R_{min}+1)*2*a_{34}}{(R_{min}+1)*4} - \frac{l}{2},$$

wherein

$R_{min}$ is a minimum ratio between the permissible values of the thrust forces, corresponding to the thrust vectors (2001, 2002), of the propulsion devices (1A) arranged along the first direction,

$R_{max}$ is a maximum ratio between the permissible values of the thrust forces, corresponding to the thrust vectors (2001, 2002), of the propulsion devices (1A) arranged along the first direction,

$a_{34}$ is a characteristic number, associating the torques and thrust vectors, for the propulsion devices (1B) arranged along the second direction (202), and

$l$ is the distance between the geometric centers of the propulsion devices (1A) arranged in the first direction; and/or

the center of mass (250) of the aircraft, when performing hover flight, is positioned in the second direction (202) at a distance $l_{12}$ from a straight line along which the propulsion devices (1A) are arranged in the first direction (201), wherein

$$l_{12_{min}} \leq l_{12} \leq l_{12_{max}},$$

with

$$l_{12_{min}} = \frac{(R'_{max}+3)*l'+(R'_{max}+1)*2*a_{12}}{(R'_{max}+1)*4} - \frac{l'}{2}$$

and

$$l_{12_{max}} = \frac{(R'_{min}+3)*l'+(R'_{min}+1)*2*a_{12}}{(R'_{min}+1)*4} - \frac{l'}{2},$$

wherein

$R'_{min}$ is a minimum ratio between the permissible values of the thrust forces, corresponding to the thrust vectors (2003, 2004), of the propulsion devices (1B) arranged along the second direction (202),

$R'_{max}$ is a maximum ratio between the permissible values of the thrust forces, corresponding to the thrust vectors (2003, 2004), of the propulsion devices (1B) arranged along the second direction (202),

$a_{12}$ is a characteristic number, associating the torques and thrust vectors, for the propulsion devices (1A) arranged along the first direction (201), and

$l'$ is the distance of the geometrical centers of the propulsion devices (1B) arranged in the second direction.

12. Aircraft (100, 200) according to any one of the preceding claims, further adapted such that, in hover flight, the center of mass (150, 250) of the aircraft is positioned such that thereby all forces acting on the aircraft and all torques acting on the aircraft with respect to the center of mass of the aircraft are caused to substantially disappear when one or more of the propulsion devices generate a respective particular predetermined thrust vector associated therewith.

13. Aircraft (100, 200) of any one of the preceding claims, wherein the aircraft is further adapted to execute hover flight at approximately equal associated particular predetermined thrust vectors.

14. Aircraft (100, 200) according to any one of the preceding claims, further comprising a displacement device for displacing the center of mass (150, 250) of the aircraft.

15. Aircraft (100, 200) according to claim 14, further comprising a fuel tank for supplying fuel to the propulsion devices and/or a battery for supplying electrical power to the propulsion devices, wherein the displacement device is adapted to relocate fuel from the fuel tank or the battery within the aircraft to thereby position the center of mass (150, 250) such that the aircraft performs hover flight when one or more of the propulsion devices generates the respective particular predetermined thrust vector.

16. Aircraft (100, 200) according to any one of the preceding claims, comprising a thrust vector control to individually control the thrust vectors of the propulsion devices.

17. Method for controlling an aircraft (100) with

- an aircraft body (120) defining a longitudinal direction, a vertical direction, and a transverse direction, the longitudinal direction corresponding to the direction from the tail (122) to the nose (121) of the aircraft, the vertical direction corresponding to the direction of the earth's gravitational force when the aircraft (100) is resting on the ground, and the transverse direction being perpendicular to the longitudinal direction and the vertical direction; and
- at least two propulsion devices (1, 1F, 1R) rotatable about a respective associated axis of rotation (5) to generate a respective associated thrust vector, wherein

a first number of the propulsion devices (1F) is arranged along a first straight line parallel to the transverse direction (102), and a second number of the propulsion devices (1R) is arranged along a second straight line parallel to the transverse direction (102),
the first straight line is spaced apart from the second straight line, and
the center of mass of the aircraft (100) is positioned with respect to the longitudinal direction (101) between the first straight line and the second straight line; comprising the following steps:

- determining the associated thrust vectors such that the aircraft performs a hover flight when each of the axes of rotation associated with the at least two propulsion devices is oriented substantially in the transverse direction of the aircraft body, and each of the at least two propulsion devices rotates substantially in the same direction of rotation about the respective associated axis of rotation,
wherein in hover flight all forces acting on the aircraft and all torques acting on the aircraft with respect to the center of mass (150) of the aircraft substantially disappear,
- driving each of the propulsion devices (1F, 1R) in substantially the same direction of rotation such that the respective propulsion device generates the particular associated thrust vector.

18. Method for controlling an aircraft (200) with

- an aircraft fuselage (220), and
- at least three propulsion devices (1A, 1B) mounted around the aircraft fuselage substantially in a plane and rotatable about a respective associated axis of rotation (5A, 5B) to generate a respective associated thrust vector,

comprising the following steps:

- determining the associated thrust vectors such that the aircraft performs a hover flight when two of the rotational axes (5A) associated with the at least three propulsion devices (1A) are substantially aligned in a first direction (201) and rotate substantially in the same rotational direction about the respective associated rotational axis (5A), and/or another of the rotational axes (5B) associated with the at least three propulsion devices (1B) is substantially aligned in a second direction (202) that is not parallel to the first direction, wherein the first direction (201) and the second direction (202) lie in the plane,
wherein in hover flight all forces acting on the aircraft and all torques acting on the aircraft with respect to the center of mass (250) of the aircraft substantially disappear,
- aligning the associated axes of rotation (5A) of two of the at least three propulsion devices (1A) substantially in the first direction (201), and aligning the associated axis of rotation (5B) of the one other of the at least three propulsion devices (1B) substantially in the second direction (202),
- driving each of the propulsion devices (1A, 1B) such that the respective propulsion device rotates in an associated rotational direction and generates the particular associated thrust vector,
wherein each of the two propulsion devices (1A) having axes of rotation oriented substantially in the first direction rotates substantially in the same direction of rotation about the respective associated axis of rotation (5A).

19. A method of controlling an aircraft (100, 200) according to claim 17 or 18, wherein all of the determined associated thrust vectors are selected to be approximately identical.

**20.** A method of controlling an aircraft (100, 200) according to any one of claims 17 to 19, further comprising the step of:

- positioning the center of mass (150, 250) of the aircraft so as to cause all forces acting on the aircraft and all torques acting on the aircraft with respect to the center of mass of the aircraft to substantially disappear when the propulsion devices generate the particular predetermined thrust vector associated therewith.

**21.** The aircraft (100, 200) or method according to any one of the preceding claims, wherein each of the propulsion devices (1, 1F, 1R, 1A, 1B) is structurally identical.

**22.** The aircraft (100, 200) or method according to any one of the preceding claims, wherein the propulsion devices (1, 1F, 1R, 1A, 1B) comprise cyclogyro rotors.

**Revendications**

**1.** Engin volant (100) comprenant :

- un corps d'engin volant (120) définissant une direction longitudinale (101), une direction verticale (103) et une direction transversale (102), la direction longitudinale correspondant à la direction allant de la queue (122) vers le nez (121) de l'engin volant (100), la direction verticale coïncidant avec la direction de la force de gravité terrestre lorsque l'engin volant (100) est au repos sur le sol, et la direction transversale étant perpendiculaire à la direction longitudinale et à la direction verticale, et
- au moins deux dispositifs de propulsion (1, 1F, 1R) pouvant tourner autour d'un axe de rotation (5) respectivement associé afin de produire un vecteur de poussée (701, 702) respectivement associé ;

dans lequel

un premier nombre de dispositifs de propulsion (1F) est disposé le long d'une première ligne droite qui s'étend parallèlement à la direction transversale (102) et un deuxième nombre de dispositifs de propulsion (1R) est disposé le long d'une deuxième ligne droite qui s'étend parallèlement à la direction transversale (102),
la première ligne droite est espacée de la deuxième ligne droite, et
le centre de masse de l'engin volant (100) est positionné entre la première ligne droite et la deuxième ligne droite par rapport à la direction longitudinale (101) ;

dans lequel l'engin volant (100) est conçu pour effectuer un vol stationnaire lors duquel toutes les forces agissant sur l'engin volant et tous les moments de rotation agissant sur l'engin volant par rapport au centre de masse (150) de l'engin volant disparaissent sensiblement, par le fait que, en vol stationnaire,

- chacun des axes de rotation associés (5) est orienté sensiblement dans la direction transversale (102) du corps de l'engin volant, et
- chacun desdits au moins deux dispositifs de propulsion (1, 1F, 1R) tourne sensiblement dans le même sens de rotation (51) autour de l'axe de rotation (5) respectivement associé.

**2.** Engin volant (100) selon la revendication 1, dans lequel le premier nombre de dispositifs de propulsion (1F) est disposé dans une zone avant de l'engin volant par rapport à la direction longitudinale (101), et le deuxième nombre de dispositifs de propulsion (1R) est disposé dans une zone arrière de l'engin volant par rapport à la direction longitudinale (101).

**3.** Engin volant (100) selon la revendication 2, dans lequel
le centre de masse (150) de l'engin volant, lorsqu'il effectue le vol stationnaire, est positionné longitudinalement à une distance $l_1$ de la ligne droite le long de laquelle les dispositifs de propulsion (1F) sont disposés dans la zone avant, dans lequel

$$l_{1min} \leq l_1 \leq l_{1max} \, ,$$

avec

$$l_{1_{min}} = \frac{a_1+a_2}{2} + \frac{l}{R_{max}+1} \quad \text{et} \quad l_{1_{max}} = \frac{a_1+a_2}{2} + \frac{l}{R_{min}+1} \, ,$$

où

$R_{min}$ est un rapport minimal entre les valeurs admissibles des forces de poussée correspondant aux vecteurs de poussée (701) des dispositifs de propulsion (1F) disposés dans la zone avant, d'une part, et les valeurs admissibles des forces de poussée correspondant aux vecteurs de poussée (702) des dispositifs de propulsion (1R) disposés dans la zone arrière, d'autre part,

$R_{max}$ est un rapport maximal entre les valeurs admissibles des forces de poussée correspondant aux vecteurs de poussée (701) des dispositifs de propulsion (1F) disposés dans la zone avant, d'une part, et les valeurs admissibles des forces de poussée correspondant aux vecteurs de poussée (702) des dispositifs de propulsion (1R) disposés dans la zone arrière, d'autre part,

$l$ est la distance entre la première ligne droite et la deuxième ligne droite,

$a_1$ un nombre caractéristique combinant les moments de rotation et les vecteurs de poussée pour les dispositifs de propulsion (1F) disposés dans la zone avant, et

$a_2$ est un nombre caractéristique combinant les moments de rotation et les vecteurs de poussée pour les dispositifs de propulsion (1R) disposés dans la zone arrière.

4. Engin volant (100) selon l'une quelconque des revendications précédentes, conçu pour qu'en vol stationnaire les axes de rotation associés soient orientés parallèlement.

5. Engin volant (200) comprenant :

- un fuselage d'engin volant (220), et
- au moins trois dispositifs de propulsion (1A, 1B) qui sont montés autour du fuselage d'engin volant sensiblement dans un même plan et qui peuvent tourner autour d'un axe de rotation (5A, 5B) respectivement associé pour produire un vecteur de poussée (2001, 2002, 2003, 2004) respectivement associé ;

dans lequel l'engin volant (200) est conçu pour effectuer un vol stationnaire lors duquel toutes les forces agissant sur l'engin volant et tous les moments de rotation agissant sur l'engin volant par rapport au centre de masse (250) de l'engin volant disparaissent sensiblement, par le fait que, en vol stationnaire

- les axes de rotation associés (5A) de deux desdits au moins trois dispositifs de propulsion (1A) sont orientés sensiblement dans une première direction (201), et l'axe de rotation associé (5B) d'un autre desdits au moins trois dispositifs de propulsion (1B) est orienté sensiblement dans une deuxième direction (202), dans lequel

- la première direction (201) n'est pas parallèle à la deuxième direction (202),
- la première direction (201) et la deuxième direction (202) sont dans le même plan,

et
- chacun des deux dispositifs de propulsion (1A), dont les axes de rotation (5A) sont orientés dans la première direction (201) en vol stationnaire, tourne sensiblement dans le même sens de rotation autour de l'axe de rotation (5A) respectivement associé.

6. Engin volant (200) selon la revendication 5, comprenant :

- au moins quatre dispositifs de propulsion (1A, 1B) qui sont montés autour du fuselage d'engin volant et qui peuvent tourner autour d'un axe de rotation (5A, 5B) respectivement associé pour produire un vecteur de poussée (2001, 2002, 2003, 2004) respectivement associé ;
dans lequel l'engin volant (200) est conçu pour effectuer le vol stationnaire, par le fait que, en vol stationnaire

- les axes de rotation associés (5A) de deux desdits au moins quatre dispositifs de propulsion (1A) sont orientés sensiblement dans la première direction (201), et les axes de rotation associés (5B) de deux autres desdits au moins quatre dispositifs de propulsion (1B) sont orientés sensiblement dans la deuxième direction (202), dans lequel

- chacun des deux dispositifs de propulsion (1A) dont les axes de rotation (5A) sont orientés dans la première direction (201) en vol stationnaire tourne sensiblement dans le même sens de rotation autour de l'axe de rotation (5A) respectivement associé, et/ou chacun des deux dispositifs de propulsion (5B) dont les axes de rotation (5B) sont orientés dans la deuxième direction (202) en vol stationnaire tourne sensiblement dans le même sens de rotation autour de l'axe de rotation (5B) respectivement associé.

7. Engin volant (200) selon la revendication 5, dans lequel trois dispositifs de propulsion sont disposés autour du fuselage d'engin volant de telle sorte qu'ils forment les sommets d'un triangle équilatéral, dans lequel

- le fuselage d'engin volant (220) se trouve au centre géométrique du triangle,
- la première direction est définie par une ligne droite sur laquelle sont situés deux des trois dispositifs de propulsion,
- la deuxième direction est sensiblement perpendiculaire à la première direction, et
- l'axe de rotation de chacun des deux dispositifs de propulsion situés sur la ligne droite orientée dans la première direction forme avec la ligne droite un angle qui se situe entre 0° et 30°.

8. Engin volant (200) selon la revendication 6, dans lequel n dispositifs de propulsion sont disposés autour du fuselage d'engin volant de telle sorte qu'ils forment les sommets d'un *n*-gone régulier, n > 3, dans lequel

- le fuselage d'engin volant (220) se trouve au centre géométrique du *n*-gone,
- la première direction est définie par une première ligne droite sur laquelle sont situés deux des n dispositifs de propulsion,
- la deuxième direction est définie par une deuxième ligne droite sur laquelle sont situés deux autres des n dispositifs de propulsion,
- l'axe de rotation de chacun des deux dispositifs de propulsion situés sur la première ligne droite orientée dans la première direction forme avec la première ligne droite un angle qui se situe entre 0° et 18°.

9. Engin volant (200) selon la revendication 8, dans lequel l'angle entre la première ligne droite et la deuxième ligne droite se situe dans la plage comprise entre 72° et 90°.

10. Engin volant (200) selon l'une quelconque des revendications 6 à 9, dans lequel

- la deuxième direction (202) est sensiblement perpendiculaire à la première direction (201), et
- deux desdits au moins quatre dispositifs de propulsion (1A) sont disposés le long de la première direction (201), et les deux autres desdits au moins quatre dispositifs de propulsion (1B) sont disposés le long de la deuxième direction (202) sensiblement perpendiculaire à la première direction.

11. Engin volant (200) selon la revendication 10, dans lequel

le centre de masse (250) de l'engin volant, lorsqu'il effectue le vol stationnaire, est positionné dans la première direction (201) à une distance $l_{34}$ d'une ligne droite le long de laquelle les dispositifs de propulsion (1B) sont disposés dans la deuxième direction (202), dans lequel

$$l_{34_{min}} \leq l_{34} \leq l_{34_{max}} \,,$$

avec

$$l_{34_{min}} = \frac{(R_{max}+3)*l+(R_{max}+1)*2*a_{34}}{(R_{max}+1)*4} - \frac{l}{2}$$

et

$$l_{34_{max}} = \frac{(R_{min}+3)*l+(R_{min}+1)*2*a_{34}}{(R_{min}+1)*4} - \frac{l}{2} \,,$$

où

$R_{min}$ est un rapport minimal entre les valeurs admissibles des forces de poussée correspondant aux vecteurs de poussée (2001, 2002) des dispositifs de propulsion (1A) disposés le long de la première direction,

$R_{max}$ est un rapport maximal entre les valeurs admissibles des forces de poussée correspondant aux vecteurs de poussée (2001, 2002) des dispositifs de propulsion (1A) disposés le long de la première direction,

$a_{34}$ est un nombre caractéristique combinant les moments de rotation et les vecteurs de poussée pour les dispositifs de propulsion (1B) disposés le long de la deuxième direction (202), et

$l$ est la distance entre les centres géométriques des dispositifs de propulsion (1A) disposés dans la première direction ;

et/ou

le centre de masse (250) de l'engin volant, lorsqu'il exécute le vol stationnaire, est positionné dans la deuxième direction (202) à une distance $l_{12}$ d'une ligne droite le long de laquelle les dispositifs de propulsion (1A) sont disposés dans la première direction (201), dans lequel

$$l_{12\,min} \leq l_{12} \leq l_{12\,max'}$$

avec

$$l_{12min} = \frac{(R'_{max}+3)*l'+(R'_{max}+1)*2*a_{12}}{(R'_{max}+1)*4} - \frac{l'}{2}$$

et

$$l_{12max} = \frac{(R'_{min}+3)*l'+(R'_{min}+1)*2*a_{12}}{(R'_{min}+1)*4} - \frac{l'}{2} ,$$

où

$R'_{min}$ est un rapport minimal entre les valeurs admissibles des forces de poussée correspondant aux vecteurs de poussée (2003, 2004) des dispositifs de propulsion (1B) disposés le long de la deuxième direction (202),

$R'_{max}$ est un rapport maximal entre les valeurs admissibles des forces de poussée correspondant aux vecteurs de poussée (2003, 2004) des dispositifs de propulsion (1B) disposés le long de la deuxième direction (202),

$a_{12}$ est un nombre caractéristique combinant les moments de rotation et les vecteurs de poussée pour les dispositifs de propulsion (1A) disposés le long de la première direction (201), et

$l'$ est la distance entre les centres géométriques des dispositifs de propulsion (1B) disposés dans la deuxième direction.

12. Engin volant (100, 200) selon l'une quelconque des revendications précédentes, conçu en outre pour que, en vol stationnaire, le centre de masse (150, 250) de l'engin volant soit positionné de telle sorte que toutes les forces agissant sur l'engin volant et tous les moments de rotation agissant sur l'engin volant par rapport au centre de masse de l'engin volant disparaissent sensiblement lorsqu'un ou plusieurs des dispositifs de propulsion produisent un vecteur de poussée prédéfini déterminé qui leur est respectivement associé.

13. Engin volant (100, 200) selon l'une quelconque des revendications précédentes, dans lequel l'engin volant est en outre conçu pour effectuer le vol stationnaire avec des vecteurs de poussée prédéfinis déterminés associés approximativement identiques.

14. Engin volant (100, 200) selon l'une quelconque des revendications précédentes, présentant en outre un dispositif de déplacement permettant de déplacer le centre de masse (150, 250) de l'engin volant.

15. Engin volant (100, 200) selon la revendication 14, comprenant en outre un réservoir de carburant pour alimenter les dispositifs de propulsion en carburant et/ou une batterie pour alimenter les dispositifs de propulsion en énergie électrique,

dans lequel le dispositif de déplacement est conçu pour déplacer le carburant du réservoir de carburant ou la batterie à l'intérieur de l'engin volant pour positionner le centre de masse (150, 250) de telle sorte que l'engin volant effectue le vol stationnaire lorsqu'un ou plusieurs des dispositifs de propulsion produisent le vecteur de poussée prédéfini déterminé qui leur est respectivement associé.

**16.** Engin volant (100, 200) selon l'une quelconque des revendications précédentes, comprenant une commande de vecteur de poussée pour commander individuellement les vecteurs de poussée des dispositifs de propulsion.

**17.** Procédé de commande d'un engin volant (100) comprenant :

- un corps d'engin volant (120) définissant une direction longitudinale, une direction verticale et une direction transversale, la direction longitudinale correspondant à la direction allant de la queue (122) vers le nez (121) de l'engin volant, la direction verticale coïncidant avec la direction de la force de gravité terrestre lorsque l'engin volant (100) est au repos sur le sol, et la direction transversale est perpendiculaire à la direction longitudinale et à la direction verticale, et
- au moins deux dispositifs de propulsion (1, 1F, 1R) pouvant tourner autour d'un axe de rotation (5) respectivement associé afin de produire un vecteur de poussée (701, 702) respectivement associé, dans lequel

un premier nombre de dispositifs de propulsion (1F) est disposé le long d'une première ligne droite qui s'étend parallèlement à la direction transversale (102) et un deuxième nombre de dispositifs de propulsion (1R) est disposé le long d'une deuxième ligne droite qui s'étend parallèlement à la direction transversale (102),
la première ligne droite est espacée de la deuxième ligne droite, et
le centre de masse de l'engin volant (100) est positionné entre la première ligne droite et la deuxième ligne droite par rapport à la direction longitudinale (101) ;

comprenant les étapes consistant à :

- déterminer les vecteurs de poussée associés de telle sorte que l'engin volant effectue un vol stationnaire lorsque chacun des axes de rotation associés auxdits au moins deux dispositifs de propulsion est orienté sensiblement dans la direction transversale du corps d'engin volant, et que chacun desdits au moins deux dispositifs de propulsion tourne sensiblement dans le même sens de rotation autour de l'axe de rotation respectivement associé,
dans lequel, en vol stationnaire, toutes les forces agissant sur l'engin volant et tous les moments de rotation agissant sur l'engin volant par rapport au centre de masse (150) de l'engin volant disparaissent sensiblement,
- entraîner chacun des dispositifs de propulsion (1F, 1R) sensiblement dans le même sens de rotation, de telle sorte que le dispositif de propulsion respectif produise le vecteur de poussée associé déterminé.

**18.** Procédé de commande d'un engin volant (200) comprenant :

- un fuselage d'engin volant (220), et
- au moins trois dispositifs de propulsion (1A, 1B) qui sont montés autour du fuselage d'engin volant sensiblement dans un même plan et qui peuvent tourner autour d'un axe de rotation (5A, 5B) respectivement associé afin de générer un vecteur de poussée respectif associé,

comprenant les étapes consistant à :

- déterminer les vecteurs de poussée associés de telle sorte que l'engin volant effectue un vol stationnaire lorsque deux des axes de rotation (5A) associés auxdits au moins trois dispositifs de propulsion (1A) sont orientés sensiblement dans une première direction (201) et tournent sensiblement dans le même sens de rotation autour de l'axe de rotation (5A) respectivement associé, et/ou un autre des axes de rotation (5B) associés auxdits au moins trois dispositifs de propulsion (1B) est orienté sensiblement dans une deuxième direction (202) qui n'est pas parallèle à la première direction, la première direction (201) et la deuxième direction (202) étant situées dans le même plan,
dans lequel, en vol stationnaire, toutes les forces agissant sur l'engin volant et tous les moments de rotation agissant sur l'engin volant par rapport au centre de masse (250) de l'engin volant disparaissent sensiblement,
- orienter les axes de rotation associés (5A) de deux desdits au moins trois dispositifs de propulsion (1A) sensiblement dans la première direction (201), et orienter l'axe de rotation associé (5B) d'un autre desdits au moins trois dispositifs de propulsion (1B) sensiblement dans la deuxième direction (202),
- entraîner chacun des dispositifs de propulsion (1A, 1B) de telle sorte que le dispositif de propulsion respectif tourne dans un sens de rotation associé et produise le vecteur de poussée associé déterminé,
dans lequel chacun des deux dispositifs de propulsion (1A) dont les axes de rotation sont orientés sensiblement dans la première direction tourne sensiblement dans le même sens de rotation autour de l'axe de rotation (5A) respectivement associé.

**19.** Procédé de commande d'un engin volant (100, 200) selon la revendication 17 ou 18, dans lequel tous les vecteurs de poussée associés déterminés sont choisis
approximativement identiques.

**20.** Procédé de commande d'un engin volant (100, 200) selon l'une quelconque des revendications 17 à 19, comprenant en outre l'étape consistant à :

- positionner le centre de masse (150, 250) de l'engin volant de manière à faire en sorte que toutes les forces agissant sur l'engin volant et tous les moments de rotation agissant sur l'engin volant par rapport au centre de masse de l'engin volant disparaissent sensiblement lorsque les dispositifs de propulsion produisent les vecteurs de poussée prédéfinis déterminés qui leur sont respectivement associés.

**21.** Engin volant (100, 200) ou procédé selon l'une quelconque des revendications précédentes, dans lequel tous les dispositifs de propulsion (1, 1F, 1R, 1A, 1B) sont conçus de manière identique.

**22.** Engin volant (100, 200) ou procédé selon l'une quelconque des revendications précédentes, dans lequel les dispositifs de propulsion (1, 1F, IR, 1A, 1B) comprennent des rotors de cyclocoptère.

Fig. 1

$F, 7$

1

$M, 8$

Drehrichtung, 51

$r, 52$

Drehachse, 5

Fig. 2a

$F_{magnus}, 72$

$F_{rotor}, 71$

1

$M, 8$

Anströmung, 9

Drehrichtung, 51

Drehachse, 5

Bewegungsrichtung des Fluggerätes, 110

Fig. 2b

Fig. 3a

Fig. 3b

1F

1R

150

| Fluggerät |
| zulässiger Bereich für den Schwerpunkt |
| optimale Schwerpunktlage |

$F_s = 1000\ N,\ a = 0.2\ m,\ F_{max} = 550\ N$

0          0.5          1          1.5          2

[m]

Fig. 3c

Fig. 4

Fig. 5

Fig. 6

Fig. 7a

Fig. 7b

Fig. 7c

Fig. 7d

Fig. 8a

Fig. 8b

Fig. 9a

Fig. 9b

Fig. 9c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3548378 A1
- EP 3715249 A1
- US 10384776 B2
- US 2019071174 A1
- US 2020086984 A1
- EP 3354566 A1

**In der Beschreibung aufgeführte Nicht-Patentliteratur**

- **I.S. HWANG et al.** Development of a Four-Rotor Cyclocopter. *Journal of Aircraft*, December 2008, vol. 45 (6), 2151
- **M. BENEDICT et al.** Experimental Optimization of MAV-Scale Cycloidal Rotor Performance. *Journal of the American Helicopter Society*, 2011, vol. 56, 022005